(19) Europäisches Patentamt
European Patent Office
Office européen des brevets

(11) EP 4 475 068 A1

(12) **EUROPEAN PATENT APPLICATION**
published in accordance with Art. 153(4) EPC

(43) Date of publication:
**11.12.2024 Bulletin 2024/50**

(21) Application number: **23762933.2**

(22) Date of filing: **01.03.2023**

(51) International Patent Classification (IPC):
***G06T 5/00*** *(2024.01)*

(52) Cooperative Patent Classification (CPC):
**G06T 7/0002; H04N 23/631; H04N 23/6812; H04N 23/80;** G06T 2207/30168

(86) International application number:
**PCT/CN2023/079116**

(87) International publication number:
**WO 2023/165535 (07.09.2023 Gazette 2023/36)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **02.03.2022 CN 202210204484**

(71) Applicant: **Huawei Technologies Co., Ltd.**
**Shenzhen, Guangdong 518129 (CN)**

(72) Inventors:
- **YANG, Chen**
  **Shenzhen, Guangdong 518129 (CN)**
- **WANG, Xiaoe**
  **Shenzhen, Guangdong 518129 (CN)**
- **TIAN, Jingduo**
  **Shenzhen, Guangdong 518129 (CN)**
- **BAI, Bo**
  **Shenzhen, Guangdong 518129 (CN)**

(74) Representative: **Maiwald GmbH**
**Engineering**
**Elisenhof**
**Elisenstrasse 3**
**80335 München (DE)**

# (54) IMAGE PROCESSING METHOD AND APPARATUS, AND DEVICE

(57) This application discloses an image processing method and apparatus, and a device, and relates to the field of image processing. After a to-be-processed image is obtained, a to-be-corrected line segment is obtained, through filtering, based on at least one of IMU information and a field of view that are included in metadata, from line segments included in the to-be-processed image. The to-be-processed image includes at least one of a vertical line segment and a horizontal line segment in a first scenario photographed by a photographing device. The to-be-corrected line segment and a feature region of the to-be-processed image are corrected, to obtain a processed image, where the feature region includes a background region, a portrait region, and an edge region. Because the IMU information and the field of view describe property information of the photographing device that photographs the to-be-processed image, a line segment that needs to be corrected is accurately located based on the IMU information and the field of view, and the to-be-corrected line segment and the feature region of the to-be-processed image are corrected, so that line segments in the processed image better conform to distribution features of the horizontal line segment and the vertical line segment in the first scenario photographed by the photographing device. This effectively improves accuracy of correcting a tilt-shift distortion phenomenon of an image.

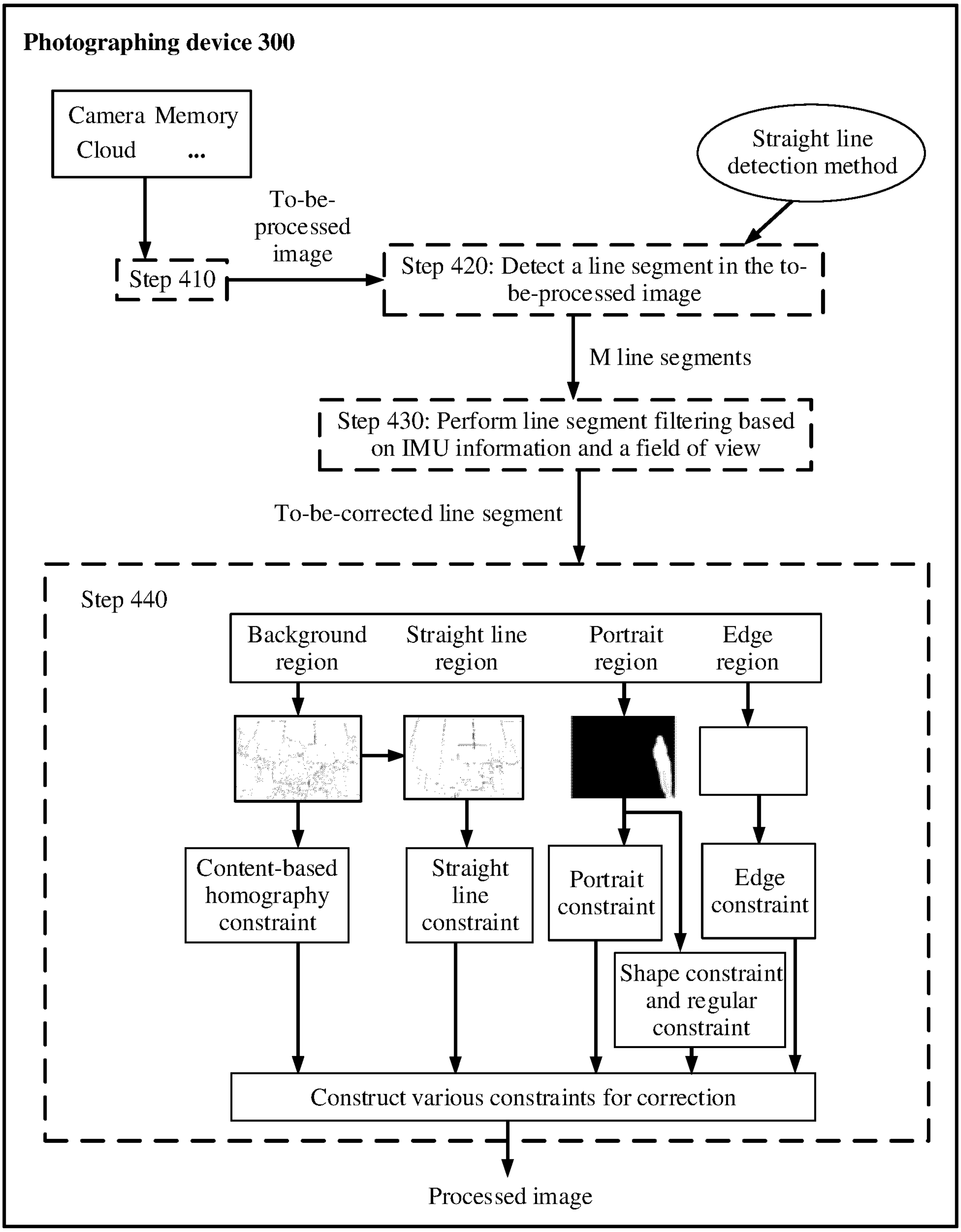
Photographing device 300
Camera Memory
Cloud ...
Straight line detection method
To-be-processed image
Step 410
Step 420: Detect a line segment in the to-be-processed image
M line segments
Step 430: Perform line segment filtering based on IMU information and a field of view
To-be-corrected line segment
Step 440
Background region
Straight line region
Portrait region
Edge region
Content-based homography constraint
Straight line constraint
Portrait constraint
Edge constraint
Shape constraint and regular constraint
Construct various constraints for correction
Processed image

FIG. 4

## Description

This application claims priority to Chinese Patent Application No. 202210204484.6, filed with the China National Intellectual Property Administration on March 2, 2022 and entitled "IMAGE PROCESSING METHOD AND APPARATUS, AND DEVICE", which is incorporated herein by reference in its entirety.

## TECHNICAL FIELD

This application relates to the image processing field, and in particular, to an image processing method and apparatus, and a device.

## BACKGROUND

Generally, when a user uses a camera to photograph, due to a non-fixed reason such as a camera tilt, tilt-shift distortion (for example, a tilt or convergence) occurs, in an image, on a straight line in a photographed scenario. As a result, a composition of the image is not aesthetic. For example, in an image that is of a building and that is photographed from a low-angle, borderlines of an external wall converge closely at the top of the building.

Currently, global correction is performed, based on image content, on the image in which tilt-shift distortion occurs. However, using the foregoing correction method on non-square content with a special feature may cause a correction error. Therefore, accuracy of the correction method is low.

## SUMMARY

This application provides an image processing method and apparatus, and a device, to resolve a problem of a correction error generated when global correction is performed, based on image content, on an image in which tilt-shift distortion occurs, and improve accuracy of performing tilt-shift distortion correction on the image.

According to a first aspect, an image processing method is provided, and the method is executed by a computing device. After obtaining a to-be-processed image, the computing device obtains, through filtering, based on at least one of inertial measurement unit (Inertial Measurement Unit, IMU) information and a field of view that are included in metadata of the to-be-processed image, a to-be-corrected line segment from line segments included in the to-be-processed image. The to-be-processed image includes at least one of a vertical line segment and a horizontal line segment in a first scenario that is of the to-be-processed image and that is obtained by a photographing device. It may be understood that the line segments included in the to-be-processed image may be a line segment that is in the first scenario and that is not tilted in the image, or may be a line segment that is in the first scenario and that is tilted in the image. Further, the computing device may correct the to-be-corrected line segment and a feature region of the to-be-processed image, to obtain a processed image, where the feature region includes a background region, a portrait region, and an edge region.

In this way, because the IMU information and the field of view describe property information of the photographing device that photographs the to-be-processed image, a line segment that needs to be corrected is accurately located based on the IMU information and the field of view, the to-be-corrected line segment is selected from the line segments included in the to-be-processed image, and the to-be-corrected line segment and the feature region of the to-be-processed image are corrected, so that line segments in the processed image better conform to distribution features of the horizontal line segment and the vertical line segment in the first scenario photographed by the photographing device. Compared with performing overall correction on the to-be-processed image, performing precise correction on a line segment in the to-be-processed image effectively improves accuracy of performing tilt-shift distortion correction on the image.

For example, the IMU information includes a horizontal tilt angle and a pitch tilt angle of the photographing device that photographs the to-be-processed image. The field of view represents a maximum range that a camera can observe. The field of view is usually represented by an angle. A larger field of view indicates a larger observation range.

If the photographing device photographs the first scenario from a low angle or a high angle, and the vertical line segment in the first scenario is tilted in the image, the to-be-processed image includes a line segment that is tilted in the to-be-processed image and that is the vertical line segment in the first scenario.

If the photographing device photographs the first scenario horizontally, and the vertical line segment and the horizontal line segment in the first scenario are tilted in the image, the to-be-processed image includes line segments that are tilted in the to-be-processed image and that are the vertical line segment and the horizontal line segment in the first scenario.

It should be noted that the computing device that performs image processing in this embodiment of this application may be a photographing device (for example, a smartphone) that carries a photographing function, or may be another device that has an image processing function (for example, a server, a cloud device, an edge device, and the like).

The to-be-corrected line segment includes at least one of the vertical line segment and the horizontal line segment in the first scenario. It may be understood that the to-be-corrected line segment includes a part or all of line segments that are tilted in the to-be-processed image and that are at least one of the vertical line segment and the horizontal line segment in the first scenario. For example, the to-be-processed image includes a building image and a portrait in which tilt-shift distortion occurs, the to-be-corrected line segment includes a line segment that is at least one of a vertical line segment and a horizontal line segment in a building and that is tilted in the image, and the to-be-corrected line segment does not include a line segment that is tilted in the portrait. Only tilted line segments in the building image are corrected, to preserve effect of long legs in the portrait and build a more aesthetic image composition.

In a possible implementation, the photographing device displays a tilt-shift distortion control, and the method further includes: After the photographing device receives an operation performed by a user on the tilt-shift distortion control, the photographing device obtains, through filtering, based on the metadata of the to-be-processed image, the to-be-corrected line segment from the line segments included in the to-be-processed image, and corrects the to-be-corrected line segment and the feature region of the to-be-processed image, to obtain a processed image. Tilt-shift distortion correction is performed on an image in a human-computer interaction manner. This reduces complexity of an operation step of performing tilt-shift distortion correction on the image by the user, and improves flexibility of performing tilt-shift distortion correction on the image. Therefore, user experience of processing the image by the user is improved.

In another possible implementation, the method further includes: after correcting the to-be-corrected line segment and the feature region of the to-be-processed image to obtain the processed image, displaying the processed image. Therefore, the user can more intuitively view an image on which tilt-shift distortion correction is performed. This improves user experience of processing the image by the user.

In another possible implementation, the to-be-corrected line segment is filtered based on a line segment filtering policy formulated based on content included in the metadata. The line segment filtering policy indicates a method for performing line segment filtering on the line segments included in the to-be-processed image. For example, the obtaining, through filtering, based on the metadata of the to-be-processed image, the to-be-corrected line segment from the line segments included in the to-be-processed image includes: obtaining, through filtering, based on the line segment filtering policy determined based on the metadata, the to-be-corrected line segment from the line segments included in the to-be-processed image. Therefore, different line segment filtering policies are adapted based on the content included in the metadata, to improve flexibility and accuracy of performing line segment filtering on the line segments included in the to-be-processed image.

Example 1: The metadata includes the IMU information and the field of view. The line segment filtering policy indicates to perform line segment filtering based on the IMU information and the field of view. The obtaining, through filtering, based on a line segment filtering policy determined based on the metadata, the to-be-corrected line segment from the line segments included in the to-be-processed image includes: performing, based on the IMU information and a field of view, overall adjustment on M line segments included in the to-be-processed image to obtain M adjusted line segments, where the M adjusted line segments meet a line segment angle distribution feature of the first scenario; and obtaining, through filtering, based on a line segment tilt threshold, N to-be-corrected line segments from the M adjusted line segments. The line segment tilt threshold range includes a horizontal line segment tilt threshold and a vertical line segment tilt threshold, where both M and N are positive integers, and N is less than or equal to M. In this way, because the IMU information indicates a tilt angle of the photographing device, the photographing device performs, based on the IMU information and the field of view, filtering on tilted line segments in the to-be-processed image. This helps improve accuracy of line segment filtering, and further improves accuracy of performing tilt-shift distortion correction on an image.

Example 2: The metadata does not include the field of view. The obtaining, through filtering, based on a line segment filtering policy determined based on the metadata, the to-be-corrected line segment from the line segments included in the to-be-processed image includes: obtaining, through filtering, based on image content of the to-be-processed image, the to-be-corrected line segment from the line segments included in the to-be-processed image, where the image content includes a line segment angle distribution feature. In this way, the photographing device performs precise line segment filtering based on tilt angles of the line segments in the image content, to further improve accuracy of performing tilt-shift distortion correction on an image.

Example 3: The metadata includes the field of view and does not include the IMU information. The obtaining, through filtering, based on a line segment filtering policy determined based on the metadata, the to-be-corrected line segment from the line segments included in the to-be-processed image includes: obtaining, through filtering, based on the field of view and image content of the to-be-processed image, the to-be-corrected line segment from the line segments included in the to-be-processed image, where the image content includes a line segment angle distribution feature. Because a tilt angle of a line segment varies in different field of view ranges, a larger field of view range indicates a larger tilt angle of an edge line segment in an image. The photographing device performs precise line segment filtering based on a tilt angle of the line segment and the field of view in the image content, to further improve accuracy of performing tilt-shift distortion correction on an image.

In another possible implementation, the method further includes: prompting the user to select the to-be-corrected line segment from recommended line segments obtained through filtering based on the image content of the to-be-processed image. Sometimes the user may capture an image from a low angle or a high angle for composition effect. In this case, the user may not want to correct tilted line segments in the image. In this way, the photographing device provides a user interaction straight line recommendation policy, to prompt the user whether to perform line segment correction, and performs tilt-shift distortion correction on the image based on a desire of the user, to improve accuracy of performing tilt-shift distortion correction on an image.

In another possible implementation, the metadata further includes a trusted identifier, where the trusted identifier indicates whether the metadata is trusted; and the obtaining, through filtering, based on a line segment filtering policy determined based on the metadata, the to-be-corrected line segment from the line segments included in the to-be-processed image includes: if the trusted identifier indicates that the metadata is untrusted, obtaining, through filtering, based on the image content of the to-be-processed image, the to-be-corrected line segment from the line segments included in the to-be-processed, where the image content includes the line segment angle distribution feature; and if the trusted identifier indicates that the metadata is trusted, obtaining, through filtering, based on at least one of the image content of the to-be-processed image, the IMU information, and the field of view, the to-be-corrected line segment from the line segments included in the to-be-processed image. In this way, before line segment filtering is performed based on the IMU information and the field of view, whether the IMU information and the field of view are trusted is first predetermined, and a line segment filtering policy for line segment filtering is determined based on credibility of the IMU information and the field of view. Therefore, a line segment filtering rate is improved. In addition, accuracy of a line segment filtering result is improved, and accuracy of tilt-shift distortion correction on an image is improved.

In another possible implementation, the obtaining, through filtering, based on metadata of the to-be-processed image, a to-be-corrected line segment from line segments included in the to-be-processed image includes: determining the to-be-corrected line segment based on a line segment filtered based on the metadata and a line segment filtered based on image content. In this way, the to-be-corrected line segment is determined with reference to results of two different line segment filtering policies. This further improves accuracy of performing line segment filtering based on the IMU information and the field of view, and further improves accuracy of performing tilt-shift distortion correction on an image.

In another possible implementation, the correcting a to-be-corrected line segment and a feature region of the to-be-processed image to obtain a processed image includes: determining whether a quantity of to-be-corrected line segments is greater than a quantity threshold and whether a length of the to-be-corrected line segment is greater than a length threshold; if the quantity of the to-be-corrected line segments is greater than the quantity threshold, and the length of the to-be-corrected line segment is greater than the length threshold, correcting the to-be-corrected line segment to obtain the processed image; and if the quantity of the to-be-corrected line segments is less than or equal to the quantity threshold, or the length of the to-be-corrected line segment is less than or equal to the length threshold, determining, based on a scenario feature of the first scenario, whether to correct the to-be-corrected line segment, where the scenario feature includes an architecture feature and a character feature. In this way, when a line segment in an image is corrected, the scenario feature and the intention of the user are fully referenced, so that a corrected image better conforms to a distribution feature of line segments in an actual scenario. Therefore, accuracy of performing tilt-shift distortion correction on the image is effectively improved.

In another possible implementation, the correcting the to-be-corrected line segment and a feature region of the to-be-processed image to obtain a processed image includes: constructing a straight line constraint to correct the to-be-corrected line segment; constructing a content-based homography constraint, a shape constraint, and a regular constraint to correct the background region; constructing a portrait constraint to correct the portrait region; and constructing an edge constraint to correct the edge region, to obtain the processed image. In this way, constraints such as the straight line constraint, the content-based homography constraint, the shape constraint, the regular constraint, the portrait constraint, and the edge constraint are jointly optimized, so that a correction result is more reasonable and aesthetic, the field of view is larger, and a composition is more beautiful.

If a line segment that needs to be corrected is not obtained through filtering based on the metadata of the to-be-processed image from the line segments included in the to-be-processed image, the to-be-processed image is corrected based on the feature region of the to-be-processed image. This may effectively compensate for a line segment filtering error, and further improve accuracy of performing tilt-shift distortion correction on the image.

In another possible implementation, the obtaining, through filtering, based on metadata of the to-be-processed image, a to-be-corrected line segment from line segments included in the to-be-processed image includes: detecting the to-be-processed image according to a straight line detection method, to obtain a line segment set. The line segment set includes M tilted line segments, where M is a positive integer.

In another possible implementation, after the correcting the to-be-corrected line segment obtain a processed image, the method includes: updating the metadata (including the IMU information) of the to-be-processed image, for example, deleting or modifying the IMU information. Therefore, accuracy of performing line segment filtering by using the IMU information is improved.

According to a second aspect, an image processing apparatus is provided. The apparatus includes modules configured to perform the image processing method in any one of the first aspect or the possible designs of the first aspect.

According to a third aspect, a photographing device is provided. The photographing device includes at least one processor and a memory. The memory is configured to store a group of computer instructions. When the processor serves as the photographing device in any one of the first aspect or the possible implementations of the first aspect to execute the group of computer instructions, the processor performs operation steps of the image processing method in any one of the first aspect or the possible implementations of the first aspect.

According to a fourth aspect, a computing device is provided. The computing device includes at least one processor and a memory. The memory is configured to store a group of computer instructions. When the processor serves as the photographing device in any one of the first aspect or the possible implementations of the first aspect to execute the group of computer instructions, the processor performs operation steps of the image processing method in any one of the first aspect or the possible implementations of the first aspect.

According to a fifth aspect, a computer-readable storage medium is provided, including computer software instructions. When the computer software instructions are run in a computing device, the computing device is enabled to perform operation steps of the method in any one of the first aspect or the possible implementations of the first aspect.

According to a sixth aspect, a computer program product is provided. When the computer program product runs on a computer, a computing device is enabled to perform operation steps of the method in any one of the first aspect or the possible implementations of the first aspect.

In this application, based on the implementations provided in the foregoing aspects, the implementations may be further combined to provide more implementations.

## BRIEF DESCRIPTION OF DRAWINGS

FIG. 1 is a schematic diagram of a tilt-shift distorted image and a corrected image according to an embodiment of this application;

FIG. 2 is a schematic diagram of a tilt-shift distortion correction scenario according to an embodiment of this application;

FIG. 3 is a schematic diagram of a structure of a photographing device according to an embodiment of this application;

FIG. 4 is a schematic diagram of an image processing method according to an embodiment of this application;

FIG. 5 is a schematic diagram of a structure of metadata according to an embodiment of this application;

FIG. 6 is a schematic diagram of performing line segment filtering based on IMU information and a field of view according to an embodiment of this application;

FIG. 7 is a schematic diagram of line segment filtering visualizing according to an embodiment of this application;

FIG. 8A and FIG. 8B are a schematic diagram of another image processing method according to an embodiment of this application;

FIG. 9 is a schematic diagram of performing line segment filtering based on image content according to an embodiment of this application;

FIG. 10 is a schematic diagram of performing line segment filtering based on a field of view and image content according to an embodiment of this application;

FIG. 11 is a schematic diagram of another image processing method according to an embodiment of this application;

FIG. 12A and FIG. 12B are a schematic diagram of still another image processing method according to an embodiment of this application;

FIG. 13(a) and FIG. 13(b) are a schematic diagram of a line segment selection interface according to an embodiment of this application;

FIG. 14A and FIG. 14B are a schematic diagram of still another image processing method according to an embodiment of this application;

FIG. 15(a), FIG. 15(b), FIG. 15(c), FIG. 15(d), FIG. 15(e), and FIG. 15(f) are a schematic diagram of an image processing interface according to an embodiment of this application;

FIG. 16(a), FIG. 16(b), FIG. 16(c), FIG. 16(d), FIG. 16(e), FIG. 16(f), and FIG. 16(g) are a schematic diagram of another image processing interface according to an embodiment of this application;

FIG. 17 is a schematic diagram of a structure of an image processing apparatus according to an embodiment of this application; and

FIG. 18 is a schematic diagram of a structure of a photographing device according to an embodiment of this application.

## DESCRIPTION OF EMBODIMENTS

Embodiments of this application provide an image processing method, and in particular, a method for performing tilt-shift distortion correction on an image is provided. To be specific, a to-be-corrected line segment is obtained, through filtering based on metadata of a to-be-processed image, from line segments included in the to-be-processed image. The to-be-corrected line segment may be a line segment that is tilted in the to-be-processed image and that is at least one of a vertical line segment and a horizontal line segment in an actual scenario. The to-be-corrected line segment and a feature region of the to-be-processed image are corrected, so that line segments in a processed image better conform to distribution features of the horizontal line segment and the vertical line segment in the actual scenario photographed by a photographing device. Compared with performing overall correction on the to - be-processed image, performing precise correction on a tilted line segment in the to-be-processed image effectively improves accuracy of performing tilt-shift distortion correction on the image.

Tilt-shift distortion refers to a phenomenon in which original parallel lines in a target plane of a photographed scenario are tilted or skewed in an imaging plane of a photographing device because the imaging plane rotates on at least one of an x-axis, a y-axis, and a z-axis relative to the target plane.

For example, FIG. 1(a) is an image photographed by rotating a camera along the z-axis, that is, an image photographed by horizontally tilting the camera, and the image includes a horizontal tilted line segment and a vertical tilted line segment relative to a horizontal line segment and a vertical tilted line segment in a photographed scenario. FIG. 1(b) is an image obtained through tilt-shift distortion correction. In this image, a horizontal tilted line segment and a vertical tilted line segment are corrected, so that the image obtained through tilt-shift distortion correction better conforms to distribution features of a horizontal line segment and a vertical line segment in an actual scenario photographed by a photographing device. FIG. 1(c) is an image photographed by rotating the camera along the x-axis, that is, an image photographed by the camera from a low angle, and the image includes a vertical tilted line segment relative to a vertical line segment in a photographed scenario. FIG. 1(d) is an image obtained through tilt-shift distortion correction. In this image, a vertical tilted line segment is corrected, so that the image obtained through tilt-shift distortion correction better conforms to distribution features of a horizontal line segment and a vertical line segment in the actual scenario photographed by the photographing device.

In embodiments of this application, a device for performing tilt-shift distortion correction on an image has a strong image processing computing capability. The device may be a photographing device, a server, a cloud device, an edge device (for example, a box carrying a chip with a processing capability), or the like.

For example, as shown in FIG. 2(a), the photographing device obtains a to-be-processed image locally or from a cloud, and performs tilt-shift correction on the to-be-processed image by using a processor (for example, a graphics processing unit (graphics processing unit, GPU)) of the photographing device.

For another example, as shown in FIG. 2(b), the photographing device uploads the to-be-processed image, and the server, the cloud device, or the edge device performs tilt-shift distortion correction on the to-be-processed image.

The photographing device may be an integrated module. The photographing device includes a camera, an inertial measurement unit (Inertial Measurement Unit, IMU), a communication module, and a processor. For example, the photographing device may be a terminal device, for example, a mobile phone terminal, a tablet computer, a notebook computer, a wearable device, a virtual reality (virtual reality, VR) device, an augmented reality (augmented reality, AR) device, a mixed reality (mixed reality, MR) device, an extended reality (extended reality, ER) device, a camera, and the like.

The following uses an example in which the photographing device is an intelligent terminal for description. For example, FIG. 3 is a schematic diagram of a structure of a photographing device according to an embodiment of this application. A photographing device 300 includes a processor 310, an external memory interface 320, an internal memory 321, a universal serial bus (universal serial bus, USB) interface 330, a power management module 340, an antenna, a wireless communication module 360, an audio module 370, a loudspeaker 370A, a sound box interface 370B, a microphone 370C, a sensor module 380, a button 390, an indicator 391, a display screen 392, a camera 393, and the like. The sensor module 380 may include sensors such as a pressure sensor, a gyroscope sensor, a barometric pressure sensor, a magnetic sensor, an acceleration sensor, an image sensor, a distance sensor, an optical proximity sensor, a fingerprint sensor, a temperature sensor, a touch sensor, and an ambient light sensor. The image sensor is used to convert a light image on a photosensitive surface into an electrical signal proportional to the light image by using a photoelectric conversion function of a photoelectric device.

It may be understood that the structure shown in this embodiment does not constitute a specific limitation on the photographing device. In some other embodiments, the photographing device may include more or fewer components than those shown in the figure, combine some components, split some components, or have different component arrangements. The components shown in the figure may be implemented by hardware, software, or a combination of software and hardware.

The processor 310 may include one or more processing units. For example, the processor 310 may include an application processor (application processor, AP), a modem processor, a GPU, an image signal processor (image signal processor, ISP), a controller, a memory, a video codec, a digital signal processor (digital signal processor, a DSP), a baseband processor, and/or a neural network processing unit (neural-network processing unit, NPU). Different processing units may be independent components, or may be integrated into one or more processors. The NPU is a neural-network (neural-network, NN) computing processor. The NPU quickly processes input information based on a structure of a biological neural network, for example, based on a transfer mode between human brain neurons, and the NPU may further continuously perform self-learning. The NPU can implement applications such as intelligent cognition of the photographing device, for example, image recognition, facial recognition, voice recognition, and text understanding.

In this embodiment, the processor 310 is configured to obtain, through filtering, based on a line segment filtering policy determined based on metadata of a to-be-processed image, a to-be-corrected line segment from line segments included in the to-be-processed image. The line segment filtering policy indicates a method for performing line segment filtering on the line segments included in the to-be-processed image. The to-be-corrected line segment includes at least one of the line segments that have a tilt feature and that are in the to-be-processed image. The metadata (metadata) is also referred to as mediation data or relay data. The metadata is data about data (data about data) and is mainly information that describes data property (property). The metadata is used to support functions such as storage location indication, historical data, resource searching, and file recording. In this embodiment of this application, the metadata is some labels embedded in a to-be-processed image file, and is used to describe image data property information, for example, a lens parameter, an exposure parameter, or sensor information. Generally, a camera automatically adds the metadata to an image file when taking a photo. For example, the metadata includes inertial measurement unit (Inertial Measurement Unit, IMU) information and a field of view. The IMU information includes, but is not limited to, a three-axis attitude angle and an acceleration. The field of view represents a maximum range that a camera can observe and usually is represented by an angle. A larger field of view indicates a larger observation range.

In this embodiment of this application, an inertial measurement unit includes a gyroscope sensor and an acceleration sensor.

The gyroscope sensor may be configured to determine a motion posture of the photographing device 300. In some embodiments, an angular velocity of the photographing device 300 around three axes (for example, x, y, and z axes) may be determined by using the gyroscope sensor. The gyroscope sensor may be used for image stabilization during photographing. For example, when a shutter is pressed, the gyroscope sensor detects an angle at which the photographing device 300 jitters, calculates, based on the angle, a distance for which a lens module needs to compensate, and allows a lens to cancel the jitter of the photographing device 300 through reverse motion, to implement image stabilization. The gyroscope sensor may also be used in navigation and motion sensing game scenarios.

The acceleration sensor may detect magnitudes of accelerations of the photographing device 300 in various directions (usually on three axes). When the photographing device 300 is stationary, the acceleration sensor may detect a magnitude and a direction of gravity. The acceleration sensor may be further configured to identify a posture of a photographing device, and is used in an application such as screen switching between a landscape mode and a portrait mode or a pedometer.

The controller may be a nerve center and a command center of the photographing device. The controller may generate an operation control signal based on instruction operation code and a time sequence signal, to complete control of instruction reading and instruction execution.

A memory may be further disposed in the processor 310, and is configured to store instructions and data. In some embodiments, the memory in the processor 310 is a cache. The memory may store instructions or data just used or cyclically used by the processor 310. If the processor 310 needs to use the instructions or the data again, the processor may directly invoke the instructions or the data from the memory. This avoids repeated access and reduces waiting time of the processor 310. Therefore, system efficiency is improved.

In some embodiments, the processor 310 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/-transmitter (universal asynchronous receiver/transmitter, UART) interface, a mobile industry processor interface (mobile industry processor interface, MIPI), a general-purpose input/output (general-purpose input/output, GPIO) interface, a USB interface, and/or the like.

The power management module 340 is configured to connect to a power supply. The power management module 340 may be further connected to the processor 310, the internal memory 321, the display screen 392, the camera 393, the wireless communication module 360, and the like. The power management module 340 receives input of the power supply, and supplies power to the processor 310, the internal memory 323, the display screen 392, the camera 393, the wireless communication module 360, and the like. In some embodiments, the power management module 340 may also be disposed in the processor 310.

A wireless communication function of the photographing device may be implemented by using the antenna, the wireless communication module 360, and the like. The wireless communication module 360 may provide a wireless communication solution that is applied to the photographing device and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, and an infrared (infrared, IR) technology.

The wireless communication module 360 may be one or more components integrating at least one communication processing module. The wireless communication module 360 receives an electromagnetic wave through the antenna, performs frequency modulation and filtering processing on the electromagnetic wave signal, and sends a processed signal to the processor 310. The wireless communication module 360 may further receive a to-be-sent signal from the processor 310, perform frequency modulation and amplification on the to-be-sent signal, and convert a processed signal into an electromagnetic wave for radiation through the antenna. In some embodiments, the antenna of the photographing device is coupled to the wireless communication module 360, so that the photographing device may communicate with a network and another device by using a wireless communication technology.

The photographing device implements a display function by using the GPU, the display screen 392, the application processor, and the like. The GPU is a microprocessor for image processing, and is connected to the display screen 392 and the application processor. The GPU is configured to: perform mathematical and geometric computation, and render an image. The processor 310 may include one or more GPUs, and execute a program instruction to generate or change display information.

The display screen 392 is configured to display an image, a video, and the like. In this embodiment of this application, the display screen 392 is configured to display a to-be-processed image and a processed image. The display screen 392 includes a display panel. The display panel may be a liquid crystal display (liquid crystal display, LCD) screen, an organic light-emitting diode (organic light-emitting diode, OLED), an active-matrix organic light-emitting diode (active-matrix organic light emitting diode, AMOLED), a flexible light-emitting diode (flex light-emitting diode, FLED), a mini-LED, a micro-LED, a micro-OLED, a quantum dot light-emitting diode (quantum dot light emitting diodes, QLED), or the like.

The photographing device may implement a photographing function by using the ISP, the camera 393, the video codec, the GPU, the display screen 392, the application processor, and the like. The ISP is configured to process data fed back by the camera 393. In some embodiments, the ISP may be disposed in the camera 393.

The camera 393 is configured to capture a static image or a video. An optical image of an object is generated through a lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the photographing device may include one or N cameras 393, where N is a positive integer greater than 1. A location of the camera 393 on the photographing device is not limited in this embodiment of this application.

Alternatively, the photographing device may not include a camera, that is, the camera 393 is not disposed in the photographing device (for example, a television). The photographing device may be externally connected to the camera 393 by using an interface (for example, the USB interface 330). The external camera 393 may be fastened to the photographing device by using an external fastener (for example, a camera bracket with a clip). For example, the external camera 393 may be fastened to an edge, for example, an upper edge, of the display screen 392 of the photographing device by using an external fastener.

The digital signal processor is configured to process a digital signal, and may process another digital signal in addition to the digital image signal. For example, when the photographing device selects a frequency, the digital signal processor is configured to perform Fourier transform or the like on frequency energy. The video codec is configured to compress or decompress a digital video. The photographing device may support one or more video codecs. In this way, the photographing device may play or record videos in a plurality of encoding formats, for example, moving picture experts group (moving picture experts group, MPEG)-1, MPEG-2, MPEG-3, and MPEG-4.

The external memory interface 320 may be configured to connect to an external memory card, for example, a micro SD card, to expand a storage capability of the photographing device. The external storage card communicates with the processor 310 through the external memory interface 320, to implement a data storage function. For example, the external storage card saves files such as music, videos, and images on the external memory card.

The internal memory 321 may be configured to store computer-executable program code, and the executable program code includes instructions. The processor 310 executes various functional applications of the photographing device and data processing by running the instructions stored in the internal memory 321. The internal memory 321 may include a program storage area and a data storage area. The program storage area may store an operating system, an application required by at least one function (for example, a voice playing function or an image playing function), and the like. The data storage area may store data (such as audio data) created during use of the photographing device. In addition, the internal memory 321 may include a high-speed random access memory, and may further include a non-volatile memory, for example, at least one magnetic disk storage device, a flash memory device, or a universal flash storage (universal flash storage, UFS).

The photographing device may implement an audio function by using the audio module 370, the loudspeaker 370A, the microphone 370C, the sound box interface 370B, the application processor, and the like. For example, the audio function includes music playing, recording, and the like. In this application, the microphone 370C may be configured to receive a voice instruction sent by a user to the photographing device. The loudspeaker 370A may be configured to feed back a decision instruction of the photographing device to the user.

The audio module 370 is configured to convert digital audio information into an analog audio signal for output, and is further configured to convert analog audio input into a digital audio signal. The audio module 370 may be further configured to encode and decode an audio signal. In some embodiments, the audio module 370 may be disposed in the processor 310, or some functional modules in the audio module 370 are disposed in the processor 310. The loudspeaker 370A, also referred to as a "horn", is configured to convert an audio electrical signal into a sound signal. The microphone 370C, also referred to as a "mike" or a "mic", is configured to convert a sound signal into an electrical signal.

The sound box interface 370B is configured to connect to a wired speaker box. The sound box interface 370B may be a USB interface 330, or may be a 3.5 mm open mobile terminal platform (open mobile terminal platform, OMTP) standard interface, or a cellular telecommunication industry association of the USA (cellular telecommunications industry association of the USA, CTIA) standard interface.

The button 390 includes a power button, a volume button, and the like. The button 390 may be a mechanical button, or may be a touch button. The photographing device may receive button input, and generate button signal input related to user settings and function control of the photographing device.

The indicator 391 may be an indicator lamp, and may be used to indicate that the photographing device is in a powered-on state, a standby state, a powered-off state, or the like. For example, when the indicator lamp is off, it indicates that the photographing device is in the powered-off state. When the indicator lamp is green or blue, it indicates that the photographing device is in the powered-on state. When the indicator lamp is red, it indicates that the photographing device is in the standby state.

It may be understood that the structure shown in this embodiment of this application does not constitute a specific limitation on the photographing device. The photographing device may have more or fewer components than those shown in FIG. 3, may combine two or more components, or may have different component configurations. For example, the photographing device may further include components such as a sound box. The components shown in FIG. 3 may be implemented in hardware, software, or a combination of hardware and software including one or more signal processing or application specific integrated circuits.

Methods in the following embodiments may all be implemented in a photographing device having the foregoing hardware structure. In the following embodiments, an example in which the photographing device is a smartphone is used to describe the methods in embodiments of this application.

The following describes in detail the image processing method provided in embodiments of this application with reference to FIG. 4 to FIG. 16(a), FIG. 16(b), FIG. 16(c), FIG. 16(d), FIG. 16(e), FIG. 16(f), and FIG. 16(g). FIG. 4 is a schematic flowchart of an image processing method according to an embodiment of this application. An example in which the photographing device 300 performs tilt-shift distortion correction on an image is used for description herein. As shown in FIG. 4, the method includes the following steps.

Step 410: The photographing device 300 obtains a to-be-processed image.

The photographing device 300 may perform real-time photographing by using a camera, and use an image obtained through photographing as the to-be-processed image. The photographing device 300 may further obtain the to-be-processed image from a gallery stored in a memory. The photographing device 300 further obtains the to-be-processed image from a cloud or another device. A source of the to-be-processed image is not limited in this embodiment of this application.

The to-be-processed image obtained by the photographing device 300 may be an unedited real-time photographed image or an edited image. For example, the to-be-processed image has been edited by a third-party image application or has been edited by an image editing algorithm carried by the photographing device 300. Image editing includes geometric transformation operations such as cropping, rotation, and correction.

Optionally, the to-be-processed image may alternatively be a preprocessed image. Preprocessing includes black level correction, noise reduction, automatic exposure, automatic white balance, and image distortion.

The to-be-processed image in this embodiment of this application may be obtained by tilting the photographing device 300 when the photographing device photographs a first scenario (for example, the first scenario is photographed from a low angle or a high angle, or the first scenario is photographed when the photographing device 300 is horizontally tilted). The to-be-processed image includes at least one of a vertical line segment and a horizontal line segment in the first scenario. For example, the to-be-processed image includes a line segment that is tilted in the to-be-processed image and that is at least one of the vertical line segment and the horizontal line segment in the first scenario. A vertical line segment that is in the first scenario and that is tilted in the to-be-processed image may be referred to as a vertical tilted line segment.

A horizontal line segment that is in the first scenario and that is tilted in the to-be-processed image may be referred to as a horizontal tilted line segment. It may be understood that the vertical tilted line segment may refer to a tilted line segment that is within a vertical line segment tilt threshold relative to a line segment perpendicular to the horizon. The horizontal tilted line segment may refer to a tilted line segment that is within a horizontal line segment tilt threshold relative to a line segment parallel to the horizon. Both the vertical line segment tilt threshold and the horizontal line segment tilt threshold may be 5°.

For example, FIG. 1(a) is an image photographed by horizontally tilting a camera, and the image includes a horizontal tilted line segment and a vertical tilted line segment. FIG. 1(c) is an image photographed by the camera from a low angle. In this image, the top of a building gradually shrinks, and the image includes a vertical tilted line segment. On the contrary, in an image photographed by the camera from a high angle, the bottom of the building gradually shrinks, and the image includes a vertical tilted line segment.

Step 420: The photographing device 300 detects a line segment in the to-be-processed image according to a straight line detection method.

The straight line detection method may be Hough straight line detection or LSD straight line detection. The photographing device 300 detects the to-be-processed image according to the straight line detection method, to obtain M line segments included in the to-be-processed image, where M is a positive integer. The M line segments include at least one of a horizontal line segment, a vertical line segment, a horizontal tilted line segment, and a vertical tilted line segment.

Step 430: The photographing device 300 obtains, through filtering, based on IMU information and a field of view that are included in metadata of the to-be-processed image, a to-be-corrected line segment from line segments included in the to-be-processed image.

Because the IMU information and the field of view describe property information of the photographing device 300 that photographs the to-be-processed image, the photographing device 300 may accurately locate, based on the IMU information and the field of view, a line segment that needs to be corrected, select the to-be-corrected line segment from the line segments included in the to-be-processed image, and correct the to-be-corrected line segment and a feature region of the to-be-processed image, so that line segments in a processed image better conform to distribution features of the horizontal line segment and the vertical line segment in the first scenario photographed by the photographing device. For example, as shown in FIG. 5, the metadata includes original data and newly added data. The original data includes a lens parameter and an exposure parameter. The newly added data includes at least one of the IMU information and the field of view. The IMU information may be a tilt angle of a device that photographs the to-be-processed image. For example, the IMU information includes a horizontal tilt angle and a pitch tilt angle. For example, the to-be-processed image is photographed by the photographing device 300, and the IMU information may be IMU information of the photographing device 300.

A method procedure described in FIG. 6 describes a specific operation process included in step 430 in FIG. 4, as shown in FIG. 6.

Step 431: The photographing device 300 performs, based on the IMU information and the field of view, overall adjustment on the M line segments included in the to-be-processed image, to obtain M adjusted line segments.

The M line segments obtained by the photographing device 300 by detecting the to-be-processed image according to the straight line detection method are not all vertical line segments or horizontal line segments in the first scenario. If the M line segments are filtered based on a line segment tilt threshold, incorrect filtering is prone to occur. For example, a line segment such as a portrait or clothing is not a vertical line segment or a horizontal line segment in an actual scenario. Therefore, the photographing device 300 performs overall adjustment, based on the IMU information and the field of view, on the M line segments included in the to-be-processed image, to obtain the M adjusted line segments, so that the M adjusted line segments conform to a line segment angle distribution feature of the first scenario. That is, the M adjusted line segments better conform to a vertical line segment feature and a horizontal line segment feature in the first scenario.

In some embodiments, the photographing device 300 performs perspective transformation on the M line segments to obtain the M adjusted line segments, that is, M perspective-transformed line segments.

The photographing device 300 obtains, through detection, a line segment set $\{l_i\}_{i=1}^{M}$ in the to-be-processed image according to the straight line detection method, where M represents a quantity of line segments. A line segment $l_i$ includes start point coordinates $(x_i^s,\ y_i^s)$ and end point coordinates $(x_i^e,\ y_i^e)$. The photographing device 300 estimates a perspective transformation matrix H based on the pitch tilt angle, the horizontal tilt angle, and the field of view that are included in the metadata, and performs a perspective transformation operation on both start point coordinates and end point coordinates of the M line segments based on the perspective transformation matrix H, to obtain a perspective-transformed line segment set $\{l_i'\}_{i=1}^{M}$, where start point coordinates of a line segment $l_i'$ are $(x_i^{s'},\ y_i^{s'})$, and end point coordinates of the line segment $l_i'$ are $(x_i^{e'},\ y_i^{e'})$. For example, perspective transformation of coordinates (x, y) is performed according to the following formula (1).

$$\begin{bmatrix} U \\ V \\ W \end{bmatrix} = H \begin{bmatrix} x \\ y \\ 1 \end{bmatrix} = \begin{bmatrix} h_1 & h_2 & h_3 \\ h_4 & h_5 & h_6 \\ h_7 & h_8 & 1 \end{bmatrix} \begin{bmatrix} x \\ y \\ 1 \end{bmatrix} \text{ Formula (1)}$$

H represents the perspective transformation matrix. Perspective transformation coordinates of the coordinates (x, y) are x' = U/W, y' = V/W.

Step 432: The photographing device 300 obtains, through filtering, N to-be-corrected line segments from the M adjusted line segments based on a line segment tilt threshold.

The M adjusted line segments include a line segment with a large tilt angle relative to a 90° vertical line segment, a line segment with a small tilt angle relative to the 90° vertical line segment, a line segment with a large tilt angle relative to a 0° horizontal line segment, and a line segment with a small tilt angle relative to the 0° horizontal line segment. A line segment with a large tilt angle is not a vertical line segment or a horizontal line segment in the first scenario, and may not need to be corrected. Therefore, the photographing device 300 may select the N to-be-corrected line segments from the M adjusted line segments based on the line segment tilt threshold, where the N to-be-corrected line segments better conform to the line segment angle distribution feature of the first scenario, and the photographing device 300 may correct the N to-be-corrected line segments. This improves accuracy of performing tilt-shift distortion correction on the to-be-processed image. N is a positive integer, and N is less than or equal to M. It may be understood that, when N is equal to M, it indicates that all the M adjusted line segments are to-be-corrected line segments; and when N is less than M, it indicates that some line segments in the M adjusted line segments are to-be-corrected line segments. The line segment tilt threshold includes a horizontal line segment tilt threshold and a vertical line segment tilt threshold.

In some embodiments, the photographing device 300 calculates an angle of a line segment based on start point coordinates and end point coordinates of each of the M adjusted line segments, to obtain an angle set $\{\boldsymbol{\theta}'_i\}_{i=1}^{M}$ of the M adjusted line segments. For any line segment $l'_i$, the photographing device 300 determines whether an angle $\theta'_i$ belongs to a horizontal line segment tilt threshold range ( $\theta'_i \in [\theta_l^h,\ \theta_h^h]$ ) or a vertical line segment tilt threshold range ( $\theta'_i \in [\theta_l^v,\ \theta_h^v]$ ), that is, the photographing device 300 identifies whether the angle $\theta'_i$ is close to 90° or 0°, and the photographing device 300 obtains, through filtering, a horizontal tilted line segment set and a vertical tilted line segment set. $\theta_l^v = 90° - \Delta v,\ \theta_h^v = 90° + \Delta v,\ \theta_l^h = -\Delta h,\ \theta_h^h = \Delta h$, and values of $\Delta h$, and $\Delta v$ may be less than 5°.

For example, FIG. 7 is a schematic diagram of line segment filtering visualizing according to an embodiment of this application. FIG. 7(a) is all line segments obtained by detecting the to-be-processed image according to the straight line detection method, and includes line segments such as a portrait, clothing, and a chair. FIG. 7(b) is line segments that conform to real angle distribution in an actual scenario after perspective transformation. FIG. 7(c) is a to-be-corrected line segment obtained by filtering a line segment whose angle is close to 90° or 0° after perspective transformation.

It should be understood that the to-be-corrected line segment includes a part or all of line segments that are tilted in the to-be-processed image and that are at least one of a vertical line segment and a horizontal line segment in the first scenario. For example, the to-be-processed image includes a building image and a portrait in which tilt-shift distortion occurs, the to-be-corrected line segment includes a line segment that is at least one of a vertical line segment and a horizontal line segment in a building and that is tilted in the image, and the to-be-corrected line segment does not include a line segment that is tilted in the portrait. Only tilted line segments in the building image are corrected, to preserve effect of long legs in the portrait and build a more aesthetic image composition.

Step 440: The photographing device 300 corrects the to-be-corrected line segment and a feature region of the to-be-processed image, to obtain a processed image.

The photographing device 300 corrects image data of the to-be-processed image, where the image data includes a pixel of the to-be-processed image.

For example, the photographing device 300 may construct constraint terms by regions of the to-be-processed image, jointly optimize constraint terms to obtain a global grid correction displacement, and perform image affine transformation on the to-be-processed image to obtain the processed image. The regions may include a straight line region, an edge region, a background region, and a portrait region.

A straight line constraint is used to construct a horizontal and vertical constraint on a vertical line segment and a horizontal line segment that are in the first scenario and that are included in the to-be-corrected line segment obtained through filtering.

A content-based homography constraint is used to construct a homography constraint for a region with rich edge textures in an image. Because the photographing device 300 may miss detection on straight lines, when the horizontal and vertical constraint is not constructed for the straight lines that are not detected, some straight lines may not be corrected. In this case, a grid vertex set with a rich texture region is constrained, and overall transformation is performed based on a homography mapping. The content-based homography constraint may be a constraint of the background region. The homography constraint is shown in the following formula (2).

$$E_H = \lambda_H\left(\sum_{i,j\in linearea}\left(u_{i,j} - \frac{h_1x_{i,j} + h_2y_{i,j} + h_3}{h_7x_{i,j} + h_8y_{i,j} + 1}\right)^2 + \sum_{i,j\in linearea}\left(v_{i,j} - \frac{h_4x_{i,j} + h_5y_{i,j} + h_6}{h_7x_{i,j} + h_8y_{i,j} + 1}\right)^2\right)$$

Formula (2).

$\lambda_H$ represents a weight, and $0 < \lambda_H < 1.0$. A coordinate vector obtained through perspective transformation is (u, v) = (U, V)/W, where $x_{i,j}$ and $y_{i,j}$ indicate original coordinates, and i and j indicate grid points corresponding to an $i^{th}$ row and a $j^{th}$ column.

A portrait constraint is used to construct a geometric transformation constraint of the portrait region based on a location of a portrait. For example, grid point coordinates of the portrait region are constrained, to meet a spherical transformation relationship, so that perspective distortion such as edge stretching of the portrait is optimized on the basis of correcting tilt-shift distortion of a background and the portrait. For example, when the portrait is photographed from a high angle, a head-to-body proportion of the portrait is imbalanced, that is, a head image is large, and a leg image is short. For another example, when the portrait is photographed from a low angle, a head-to-body proportion of the portrait is imbalanced, that is, a head image is small, and a leg image is long. For another example, when the portrait is photographed at an ultra-wide angle, a head image or a body image of the portrait at an edge of the image is stretched and distorted. The portrait constraint is constructed according to a portrait distortion phenomenon, and distortion in a portrait image is corrected based on the portrait constraint.

An edge constraint is used to constrain a displacement of pixels corresponding to an edge region of the field of view to the outside and inside. To reduce a field of view loss, pixels on an upper edge and a lower edge of an image are constrained from moving outward. The edge constraint is shown in the following formula (3).

$$E_{Bin} = \lambda_{B_in}\left(\sum_{i,j\in leftedge}u_{i,j}^2 + \sum_{i,j\in leftedge}\left(u_{i,j} - W\right)^2 + \sum_{i,j\in topedge}v_{i,j}^2 + \sum_{i,j\in bottomedge}\left(v_{i,j} - H\right)^2\right)$$

Formula (3).

H represents a length of an image, and W represents a width of the image. $u_{i,j}$ ($u_{i,j} < 0$ or $u_{i,j} > W$) and $v_{i,j}$ ($v_{i,j} < 0$ or $v_{i,j} > H$) represent x and y coordinates of a pixel after displacement, $\lambda_{B_in}$ represents a weight, and $0 < \lambda_{B_in} < 1.0$.

In addition, to avoid stretching of an image edge texture, pixels of upper, lower, left, and right edges of the image are constrained from moving inward. The edge constraint is shown in the following formula (4).

$$E_{B_out} = \lambda_{B_out}\left(\sum_{i,j\in leftedge}u_{i,j}^2 + \sum_{i,j\in leftedge}\left(u_{i,j} - W\right)^2 + \sum_{i,j\in topedge}v_{i,j}^2 + \sum_{i,j\in bottomedge}\left(v_{i,j} - H\right)^2\right)$$

Formula (4).

$u_{i,j}$ ($0 < u_{i,j} < W$) and $v_{i,j}$ ($0 < v_{i,j} < H$) represent x and y coordinates of a pixel after displacement, $\lambda_{B_out}$ represents a weight, and $0 < \lambda_{B_out} < 1.0$.

A shape constraint is used to construct a shape-preserving constraint to avoid image texture distortion. Transformation of grid points meets a constraint of local similarity transformation or conformal transformation. The shape constraint is shown in the following formula (5).

$$E_S = \lambda_S\left(\sum_{i,j}\left(\left(v_{i+1,j} - v_{i,j}\right) + \left(u_{i,j+1} - u_{i,j}\right)\right)^2 + \sum_{i,j}\left(\left(u_{i+1,j} - u_{i,j}\right) + \left(v_{i,j+1} - v_{i,j}\right)\right)^2\right)$$

Formula (5).

$\lambda_S$ represents a weight, and $0 < \lambda_S < 1.0$.

A second derivative approximation value is calculated by using finite difference, and a smoothness constraint is given by using the Frobenius norm. The smoothness constraint may refer to the shape constraint. The smoothness constraint is shown in the following formula (6).

$$E_R = \lambda_R\Big( \sum_{i,j}\left(u_{i,j+1} - 2u_{i,j} + u_{i,j-1}\right)^2 + \sum_{i,j}\left(v_{i,j+1} - 2v_{i,j} + v_{i,j-1}\right)^2 + \sum_{i,j}\left(u_{i+1,j} - 2u_{i,j} + u_{i-1,j}\right)^2 + \sum_{i,j}\left(v_{i+1,j} - 2v_{i,j} + v_{i-1,j}\right)^2 + \sum_{i,j}\left(u_{i+1,j+1} - u_{i+1,j} - u_{i,j+1} + u_{i,j}\right)^2 + \sum_{i,j}\left(v_{i+1,j+1} - v_{i+1,j} - v_{i,j+1} + v_{i,j}\right)^2 \Big)$$ Formula (6).

$\lambda_R$ represents a weight, and $0 < \lambda_R < 1.0$.

Constraints such as the straight line constraint, a content shape-preserving (the content-based homography constraint), a field of view edge constraint (the edge constraint), the portrait constraint, the shape constraint, and the smoothness constraint are optimized together, so that a corrected image is more reasonable and beautiful, and the field of view is larger.

Therefore, compared with performing overall correction on the to-be-processed image, performing precise correction on a line segment in the to-be-processed image effectively improves accuracy of performing tilt-shift distortion correction on the image.

In some other embodiments, the photographing device 300 may further formulate a line segment filtering policy based on content included in the metadata to filter the to-be-corrected line segment. The line segment filtering policy indicates a method for performing line segment filtering on the line segments included in the to-be-processed image. Therefore, different line segment filtering policies are adapted based on the content included in the metadata, to improve flexibility and accuracy of line segment filtering.

FIG. 8A and FIG. B are a schematic flowchart of an image processing method according to an embodiment of this application. An example in which the photographing device 300 performs tilt-shift distortion correction on an image is used for description herein. As shown in FIG. 8A and FIG. 8B, the method includes the following steps.

Step 810: The photographing device 300 obtains a to-be-processed image.

Step 820: The photographing device 300 detects a line segment in the to-be-processed image according to a straight line detection method.

For detailed descriptions of step 810 and step 820, refer to the foregoing descriptions of step 410 and step 420. Details are not described again.

Step 830: The photographing device 300 obtains, through filtering, based on a line segment filtering policy determined based on metadata, a to-be-corrected line segment from line segments included in the to-be-processed image.

It should be understood that the to-be-corrected line segment includes a part or all of line segments that are tilted in the to-be-processed image and that are at least one of a vertical line segment and a horizontal line segment in the first scenario. The first scenario is a scenario in which the to-be-processed image is photographed. For example, the to-be-corrected line segment includes the vertical line segment in the first scenario. For another example, the to-be-corrected line segment includes the horizontal line segment in the first scenario. For another example, the to-be-corrected line segment includes the vertical line segment and the horizontal line segment in the first scenario. For example, the to-be-processed image includes a building image and a portrait in which tilt-shift distortion occurs, the to-be-corrected line segment includes a line segment that is at least one of a vertical line segment and a horizontal line segment in a building and that is tilted in the image, and the to-be-corrected line segment does not include a line segment that is tilted in the portrait. Only tilted line segments in the building image are corrected, to preserve effect of long legs in the portrait and build a more aesthetic image composition.

The photographing device 300 may determine different line segment filtering policies based on different content included in the metadata. For example, step 830 includes step 831 to step 834.

Step 831: The photographing device 300 determines whether the metadata includes IMU information and a field of view.

If the metadata includes the IMU information and the field of view, the line segment filtering policy indicates to perform line segment filtering based on the IMU information and the field of view, and the photographing device 300 performs step 832. To be specific, the photographing device 300 obtains, through filtering based on the IMU information and the field of view, the to-be-corrected line segment from the line segments included in the to-be-processed image. For a solution in which the photographing device 300 performs line segment filtering based on the IMU information and the field of view, refer to the detailed description in FIG. 6.

If the metadata does not include the field of view, the line segment filtering policy indicates to perform line segment filtering based on image content of the to-be-processed image, and the photographing device 300 performs step 833. To be specific, the photographing device 300 obtains, through filtering, based on the image content of the to-be-processed image, the to-be-corrected line segment from the line segments included in the to-be-processed image. The image content includes a line segment angle distribution feature. For a solution in which the photographing device 300 performs line segment filtering based on the image content of the to-be-processed image, refer to detailed description in FIG. 9 below.

If the metadata includes the field of view and does not include the IMU information, the line segment filtering policy indicates to perform line segment filtering based on the field of view and image content of the to-be-processed image, and the photographing device 300 performs step 834. To be specific, the photographing device 300 obtains, through filtering based on the field of view and the image content of the to-be-processed image, the to-be-corrected line segment from the line segments included in the to-be-processed image. For a solution in which the photographing device 300 performs line segment filtering based on the field of view and the image content of the to-be-processed image, refer to detailed descriptions in FIG. 10 below.

FIG. 9 is a schematic diagram of a line segment filtering method based on image content according to an embodiment of this application.

The photographing device 300 may filter a horizontal tilted line segment and a vertical tilted line segment in M line segments based on a line segment filtering model. For example, the photographing device 300 inputs the to-be-processed image and M line segment identifiers into the line segment filtering model, to obtain a horizontal tilted line segment set and a vertical tilted line segment set.

In some other embodiments, the photographing device 300 may detect the vertical tilted line segment and the horizontal tilted line segment in the M line segments according to a vanishing point detection method. The method includes the following steps 910 to 920.

Step 910: The photographing device 300 performs preliminary filtering based on angles of the M line segments to obtain a preliminary filtered vertical tilted line segment set.

The photographing device 300 determines whether an angle of each of the M line segments is within a vertical line segment tilt threshold range $[\boldsymbol{\theta}_l^e, \boldsymbol{\theta}_h^e]$ (for example, [-75°, 75°]). If the angle of the line segment is within the vertical line segment tilt threshold range, it indicates that the angle of the line segment is close to 90°. If the angle of the line segment is not within the vertical line segment tilt threshold range, it indicates that the angle of the line segment is far away from 90°, and the photographing device 300 obtains a possible preliminary filtered vertical tilted line segment set $\{l_i\}_{i=1}^{K}$. K line segments are shown in the following formula (7).

$$
\begin{aligned}
&F_0(x) = a_0 * x + b_0 * y + c_0 = 0,\\
&F_1(x) = a_1 * x + b_1 * y + c_1 = 0, \text{ Formula (7)}\\
&\ldots\\
&F_K(x) = a_K * x + b_K * y + c_K = 0.
\end{aligned}
$$

Step 920: The photographing device 300 obtains, through filtering according to the vanishing point detection method, a vertical tilted line segment set from the preliminary filtered vertical tilted line segment set.

Line segments in the vertical tilted line segment set intersect at a specific point, K equations in the foregoing formula (2) are combined, and the equations are solved by using a singular value decomposition (singular value decomposition, SVD) method, to obtain a vanishing point ($x_{vanish}$, $y_{vanish}$) of the vertical line segments. The vanishing point is an intersection of parallel lines. When two vertical parallel lines are viewed or photographed from a low angle, the two vertical parallel lines intersect at a point far away, that is, the vanishing point, also referred to as a vanishing point. Then, the photographing device 300 calculates a distance $\{d_i\}_{i=1}^{K}$ from the vanishing point of the vertical line segments to K preliminary filtered line segments, and determines whether the distance is less than a distance threshold $d_{thresh}$. If the distance is less than the distance threshold, it indicates that an angle of the line segment is close to 90°. In this case, the photographing device 300 determines that the line segment is a vertical tilted line segment. If the distance is greater than or equal to the distance threshold, it indicates that the angle of the line segment is far away from 90°. In this case, the photographing device determines that the line segment is not a vertical tilted line segment, and filters out a final vertical tilted line segment. It may be understood that, if the vertical line segment in the first scenario is tilted in an image, the vertical line segment passes through the vanishing point. Therefore, the distance threshold $d_{thresh}$ is set to a small value. For example, when image resolution is 4000 * 3000, the distance threshold may be set to 5. As the image resolution increases, the distance threshold also increases proportionally.

Compared with a line segment filtering solution based on the image content, in a line segment filtering solution based on the field of view and the image content, vertical tilt threshold ranges corresponding to different sizes of fields of view may be adapted based on the fields of view. Because, under a same vertical tilt angle and a same horizontal tilt angle, tilt angle ranges of vertical line segments in an image vary in different fields of view. A larger field of view indicates a larger tilt of vertical line segments at an edge of the image. For example, as shown in FIG. 10, a first field of view represented by a dashed-line box is smaller than a second field of view represented by a solid line box, and a line segment L1, a line segment L2, a line segment L3, and a line segment L4 are parallel to each other and are perpendicular to the ground in an actual scenario. However, the four vertical line segments are tilted because the four vertical line segments are photographed from a low angle, and when the four vertical line segments are photographed from a same low angle, tilt angles of L3 and L4 are greater than tilt angles of L1 and L2. Therefore, vertical line segment tilt threshold ranges corresponding to different sizes of fields of view are adapted based on the fields of view, to improve precision of preliminary line segment filtering. The photographing device 300 may linearly adapt to a vertical line segment tilt threshold range corresponding to the field of view. A larger field of view indicates a larger vertical line segment tilt threshold range.

Step 840: The photographing device 300 corrects the to-be-corrected line segment and a feature region of the to-be-processed image, to obtain a processed image.

For a detailed description of step 840, refer to the description of step 440. Details are not described again.

Therefore, the photographing device 300 adapts to different line segment filtering policies based on the content included in the metadata, to improve flexibility and accuracy of performing line segment filtering on the line segments included in the to-be-processed image.

The to-be-processed image in this embodiment of this application may be an image edited by a third-party image application. Therefore, the IMU information and the field of view that are collected when the image is photographed cannot accurately describe the image. In some embodiments, the metadata may further include at least one of a trusted identifier and an editing identifier. The trusted identifier indicates whether the metadata is trusted. For example, when a value of the trusted identifier is 1, it indicates that the metadata is untrusted; and when a value of the trusted identifier is 0, it indicates that the metadata is trusted. The trusted identifier may be provided by a front-end IMU module. Optionally, if a geometric transformation editing operation such as cropping/rotation/correction is performed on the to-be-processed image by the third-party image application, it is considered that the IMU information and the field of view are untrusted. The editing identifier indicates whether the to-be-processed image is processed by an image application.

As shown in FIG. 11, before performing step 831, the photographing device 300 may further perform step 850, that is, determine whether the metadata is trusted. Determining whether the metadata is trusted may also be replaced with determining whether the to-be-processed image is processed by the image application.

If the trusted identifier indicates that the metadata is untrusted, or the to-be-processed image is processed by the image application, step 833 is performed, that is, the photographing device 300 obtains, through filtering, based on image content of the to-be-processed image, the to-be-corrected line segment from the line segments included in the to-be-processed image.

If the trusted identifier indicates that the metadata is trusted, or the to-be-processed image is not processed by the image application, step 832 is performed, that is, the photographing device 300 obtains, through filtering based on the IMU information and the field of view, the to-be-corrected line segment from the line segments included in the to-be-processed image. Alternatively, step 834 is performed, that is, the photographing device 300 obtains, through filtering, based on the field of view and image content of the to-be-processed image, the to-be-corrected line segment from the line segments included in the to-be-processed image.

In this way, before line segment filtering is performed based on the IMU information and the field of view, whether the IMU information and the field of view are trusted is first predetermined, and a line segment filtering policy for line segment filtering is determined based on credibility of the IMU information and the field of view. Therefore, a line segment filtering rate is improved, and accuracy of correcting distorted line segments in an image is improved.

To further improve a line segment filtering result based on the image content, this embodiment of this application provides a user interaction straight line recommendation policy. For example, as shown in FIG. 12A and FIG. 12B, after performing step 833 or step 834, the photographing device 300 may further perform step 860, that is, prompt a user to select the to-be-corrected line segment from recommended line segments obtained through filtering based on the image content of the to-be-processed image. For example, step 860 may include the following detailed steps.

Step 861: The photographing device 300 determines whether a horizontal direction is stably recognized.

If the horizontal direction is not stably recognized, step 862 is performed, that is, an interface displays a recommended horizontal line segment. If the user does not select the recommended horizontal line segment, step 863 is performed, that is, prompt the user to manually draw a horizontal tilted line segment that needs to be corrected.

If the horizontal direction is stably recognized, step 864 is performed, that is, determine whether a vertical direction is stably recognized, and the horizontal tilted line segment is output.

If the vertical direction is not stably recognized, step 865 is performed, that is, an interface displays a recommended vertical line segment. If the user does not select the recommended vertical line segment, step 866 is performed, that is, prompt the user to manually draw a vertical tilted line segment that needs to be corrected.

If the vertical direction is stably recognized, the vertical tilted line segment is output.

If the photographing device 300 determines that both the horizontal direction and the vertical direction are stably recognized, step 840 is performed, that is, the photographing device 300 corrects the to-be-corrected line segment obtained by performing line segment filtering based on the image content and corrects a feature region of the to-be-processed image, to obtain a processed image. If determining that neither the horizontal direction nor the vertical direction is stably recognized, the photographing device 300 highlights and displays a recommended horizontal tilted line segment or a recommended vertical tilted line segment in an interface, identifies a line segment selected by the user, and corrects the line segment selected by the user.

Optionally, the photographing device 300 may determine, based on a quantity and distribution of vertical line segments and horizontal line segments that are obtained by performing line segment filtering based on the image content, whether the horizontal direction and the vertical direction are stably recognized. For example, when the quantity of line segments obtained by filtering is excessively small or the distribution of line segments is disordered, it may be considered that the horizontal direction and the vertical direction are not stably recognized.

For example, FIG. 13(a) and FIG. 13(b) are a schematic diagram of a line segment selection interface according to an embodiment of this application. As shown in FIG. 13(a), when the photographing device 300 determines that the horizontal direction or the vertical direction is not stably recognized, an interface displays a recommended line segment. As shown in FIG. 13(b), when the photographing device 300 determines that the horizontal direction or the vertical direction is not stably recognized, and the user does not select a recommended line segment, the interface prompts the user to manually draw a tilted line segment that needs to be corrected.

In another possible implementation, when filtering the to-be-processed image based on two different line segment filtering policies, the photographing device 300 does not need to perform a process of determining the line segment filtering policy based on the metadata in FIG. 8A. In other words, the photographing device 300 does not need to perform a process of step 830. Instead, the photographing device 300 filters the to-be-processed image based on the two different line segment filtering policies, obtains an intersection or a union set of line segment sets filtered based on the two different line segment filtering policies, and determines a final to-be-corrected line segment. For example, the photographing device 300 determines the to-be-corrected line segment based on a line segment filtered based on the IMU information and the field of view and a line segment filtered based on the image content. A difference between this embodiment and the foregoing embodiment lies in that, on a basis of filtering line segments based on the IMU information and the field of view, the photographing device 300 further identifies, based on the image content, a line segment that needs to be corrected, to improve accuracy of performing tilt-shift distortion correction. For example, line segment filtering is performed based on the IMU information and the field of view to obtain a line segment set LC1, line segment filtering is performed based on the image content to obtain a line segment set LC2, and a final to-be-corrected line segment set LC is obtained by solving an intersection or a union set of LC1 and LC2. In this way, accuracy of performing line segment filtering based on the IMU information and the field of view is further improved, and accuracy of performing tilt-shift distortion correction on an image is improved.

It should be noted that necessity of correcting a tilted line segment in an image is related to a photographed object and an intention of the user. Necessity of tilt correction is usually high when a photographing subject is a strong regular straight line scenario, for example, a building structure, a horizontal line, a horizon, a poster, a window frame, a door frame, a cabinet. Necessity of tilt correction is usually low when the photographing subject is a non-strong regular straight line scenario, for example, a plant, an animal, food, a face, a sky. In addition, it is usually the intention of the user to include a large quantity of tilted line segments in an image. For example, when a photographing subject is a portrait photographed from a low angle, or when a photographing tilt angle is excessively large, it is usually a composition intention of the user to include the large quantity of tilted line segments in the image.

In another possible implementation, before the photographing device 300 performs step 840, that is, corrects the to-be-corrected line segment, the photographing device 300 may further analyze a user behavior, and adaptively select whether to correct a vertical tilted line segment and a horizontal tilted line segment that are obtained through filtering. For example, as shown in FIG. 14A and FIG. 14B.

Step 870: The photographing device 300 determines whether a quantity of to-be-corrected line segments is greater than a quantity threshold, and whether a length of the to-be-corrected line segment is greater than a length threshold.

If the quantity of the to-be-corrected line segments is greater than the quantity threshold, and the length of the to-be-corrected line segment is greater than the length threshold, it indicates that the first scenario is a strong regular straight line scenario, and step 840 is performed, that is, correct the to-be-corrected line segment to obtain a processed image.

If the quantity of to-be-corrected line segments is less than or equal to the quantity threshold, or the length of the to-be-corrected line segment is less than or equal to the length threshold, it indicates that the first scenario is a non-strong regular straight line scenario, automatic correction is not performed, and step 880 is performed.

Step 880: The photographing device 300 determines, based on a scenario feature of the first scenario, whether to correct the to-be-corrected line segment.

The scenario feature includes an architecture feature and a character feature. The photographing device 300 may determine different horizontal line segment tilt thresholds and vertical line segment tilt thresholds based on different scenario features. The photographing device 300 determines whether a tilt angle of a horizontal tilted line segment falls within a horizontal line segment tilt threshold range, and corrects the horizontal tilted line segment if the tilt angle of the horizontal tilted line segment falls within the horizontal line segment tilt threshold range. The photographing device 300 may further determine whether a tilt angle of a vertical tilted line segment falls within a vertical line segment tilt threshold range, and correct the vertical tilted line segment if the tilt angle of the vertical tilted line segment falls within the vertical line segment tilt threshold range.

For example, the to-be-processed image includes a portrait image photographed from a low angle and a building image photographed from a low angle. Correcting a vertical tilted line segment in a portrait may ruin "long legs" effect. In this case, a horizontal tilted line segment may be corrected, a vertical tilted line segment and a horizontal tilted line segment in a building may be corrected, and the vertical tilted line segment in the portrait image is not corrected. It is usually an intention of the user to include an excessively large horizontal tilt angle and an excessively large pitch tilt angle in an image. In this case, a vertical tilted line segment and a horizontal tilted line segment in the image are not corrected. For example, the photographing device 300 corrects a line segment that is offset by 25° relative to 90° and 0°.

In this way, when a tilted line segment in an image is corrected, the scenario feature and the intention of the user are fully referenced, so that a corrected image better conforms to a distribution feature of line segments in an actual scenario. Therefore, accuracy of performing tilt-shift distortion correction on the image is effectively improved.

In this embodiment of this application, tilted line segment filtering is performed with reference to the metadata of the image, an image content analysis result, and the user interaction straight line recommendation policy, constraints are jointly optimized to obtain a global displacement generated by a vertical tilt caused by correcting a pitch tilt angle and a global displacement generated by correcting a horizontal tilt caused by a horizontal tilt angle, tilt-shift distortion correction of different degrees is carried out adaptively with reference to a straight line detection result and user behavior analysis. Therefore, accuracy of performing tilt-shift distortion correction on the image is effectively improved.

The following describes an interface operation for performing tilt-shift distortion correction on an image by using an example.

FIG. 15(a), FIG. 15(b), FIG. 15(c), FIG. 15(d), FIG. 15(e), and FIG. 15(f) are a schematic diagram of an image processing interface according to an embodiment of this application. FIG. 15(a) is a schematic front diagram of a smartphone according to an embodiment of this application. An album application (application, APP) icon 1501 is displayed on a display screen of the smartphone, and a user may tap the album application icon 1501. A touch sensor included in the smartphone receives a touch operation, and reports the touch operation to a processor, to enable the processor to start an album application in response to the touch operation. In addition, in this embodiment of this application, the smartphone may alternatively be enabled to start the album application in another manner, and display a user interface of the album application on the display screen. For example, when the display screen of the smartphone is turned off, a lock screen interface is displayed, or a user interface is displayed after the smartphone is unlocked, the smartphone may start the album application in response to a voice instruction of the user, a shortcut operation, or the like, and display the user interface of the album application on the display screen. As shown in FIG. 15(b), the smartphone responds to a tap operation, and the display screen of the smartphone displays the user interface of the album application. The user interface includes photos photographed at different time periods and a photo search box. The user may select a tilt-shift distorted photo 1502 that is photographed obliquely, and perform tilt-shift distortion correction on the tilt-shift distorted photo 1502. As shown in FIG. 15(c), the smartphone responds to a tap operation, and the display screen of the smartphone displays the tilt-shift distorted photo 1502 and photo editing function buttons, for example, a "send" function button, an "edit" function button, a "favorites" function button, a "delete" function button, and a "more" function button. The user may tap an "edit" function button 1503, and the display screen of the smartphone displays function options of an "edit" function. As shown in FIG. 15(d), the smartphone responds to a tap operation, and the display screen of the smartphone displays the function options of the "edit" function. The function options of the "edit" function include intelligence, crop, filters, and adjustment. The user may tap an "intelligence" option button 1504, and the display screen of the smartphone displays a plurality of function options of an "intelligence" option. For example, the "intelligence" option includes automatic optimization, reflection eliminationR, brightening, defogging, and architectural correction. As shown in FIG. 15(e), the smartphone responds to a tap operation, and the display screen of the smartphone may further display a "tilt-shift distortion" function option, a "horizontal correction" function option, a "vertical correction" function option, and the like that are included in the "intelligence" option. The user may tap a "tilt-shift distortion" function option 1505. The smartphone performs tilt-shift distortion correction on the tilt-shift distorted photo 1502. As shown in FIG. 15(f), the smartphone responds to a tap operation, and the display screen displays a photo 1506 obtained after performing tilt-shift distortion correction on the tilt-shift distorted photo 1502. For a specific method for performing tilt-shift distortion correction by the smartphone on the tilt-shift distorted photo 1502, refer to the description in the foregoing embodiment. Details are not described again.

In some other embodiments, the photographing device may alternatively perform tilt-shift distortion correction on an image based on a tilt-shift distortion operation of the user after photographing a photo. For example, FIG. 16(a), FIG. 16(b), FIG. 16(c), FIG. 16(d), FIG. 16(e), FIG. 16(f), and FIG. 16(g) are a schematic diagram of another image processing interface according to an embodiment of this application. FIG. 16(a) is a schematic front diagram of a smartphone according to an embodiment of this application. A camera application (application, APP) icon 1601 is displayed on a display screen of the smartphone, and the user may tap the camera application icon 1601. A touch sensor included in the smartphone receives a touch operation, and reports the touch operation to a processor, to enable the processor to start the camera application in response to the touch operation. In addition, in this embodiment of this application, the smartphone may alternatively be enabled to start the camera application in another manner, and display a user interface of the camera application on the display screen. For example, when the display screen of the smartphone is turned off, a lock screen interface is displayed, or a user interface is displayed after the smartphone is unlocked, the smartphone may start the camera application in response to a voice instruction of the user, a shortcut operation, or the like, and display the user interface of the camera application on the display screen. As shown in FIG. 16(b), the smartphone responds to a tap operation, and the display screen of the smartphone displays the user interface of the camera application. The user interface includes mode options, for example, a "short video" mode option, a "record" mode option, a "photo" mode option, a "portrait" mode option, and a "pano" mode option. The user interface further includes function buttons, for example, a "preview image" function button, a "photo" function button, and a "front and rear camera conversion" function button. The user may first select a "photographing" mode 1602, and then tap a "photo" function button 1603. The smartphone automatically starts a camera in response to the tap operation, and the camera obtains an image that is photographed from a low angle and that is of a scenario. Further, as shown in FIG. 16(c), the user may tap a "preview image" function button 1604 to view a photographed image that includes a target subject, that is, a tilt-shift distorted photo 1605. As shown in FIG. 16(d), the smartphone responds to a tap operation, and the display screen of the smartphone displays the tilt-shift distorted photo 1605 and photo editing function buttons, for example, a "send" function button, an "edit" function button, a "favorites" function button, a "delete" function button, and a "more" function button. The user may tap an "edit" function button 1606, and the display screen of the smartphone displays function options of an "edit" function. As shown in FIG. 16(e), the smartphone responds to a tap operation, and the display screen of the smartphone displays the function options of the "edit" function. The function options of the "edit" function include intelligence, crop, filters, and adjustment. The user may tap an "intelligence" option button 1607, and the display screen of the smartphone displays a plurality of function options of an "intelligence" option. For example, the "intelligence" option includes automatic optimizationo, reflection elimination, brightening, defogging, and architectural correction. As shown in FIG. 16(f), the smartphone responds to a tap operation, and the display screen of the smartphone may further display a "tilt-shift distortion" function option, a "horizontal correction" function option, a "vertical correction" function option, and the like that are included in the "intelligence" option. The user may tap a "tilt-shift distortion" function option 1608. The smartphone performs tilt-shift distortion correction on the tilt-shift distorted photo 1605. As shown in FIG. 16(g), the smartphone responds to a tap operation, and the display screen displays a photo 1609 obtained after performing tilt-shift distortion correction on the tilt-shift distorted photo 1605. For a specific method for performing tilt-shift distortion correction by the smartphone on the tilt-shift distorted photo 1605, refer to the description in the foregoing embodiment. Details are not described again.

In some other embodiments, the photographing device may also automatically perform tilt-shift distortion correction on an image after the photographing device photographs a photo. For example, as shown in FIG. 16(b), the smartphone responds to a tap operation, the display screen of the smartphone displays the user interface of the camera application, the smartphone automatically starts the camera in response to an operation of tapping the "photo" function button 1603, the camera obtains an image that is of a scenario and that is photographed from a low angle, and the smartphone performs tilt-shift distortion correction on the tilt-shift distorted photo 1605 that is photographed from a low angle, to obtain the tilt-shift distortion-corrected photo 1609. As shown in FIG. 16(g), the display screen of the smartphone displays the photo 1609 obtained after tilt-shift distortion correction is performed on the tilt-shift distorted photo 1605. Steps (c) to (f) in FIG. 16 are omitted. This improves user experience of using the smartphone by the user.

It should be noted that a display manner of the "tilt-shift distortion" function option, the "horizontal correction" function option, and the "vertical correction" function option is not limited in this embodiment of this application. The function options displayed on the display screen of the photographing device may also be referred to as controls or function controls.

It may be understood that, to implement the functions in the foregoing embodiments, the photographing device includes a corresponding hardware structure and/or a corresponding software module for performing each function. A person skilled in the art should be easily aware that, in combination with the units and the method steps in the examples described in embodiments disclosed in this application, this application can be implemented by using hardware or a combination of hardware and computer software. Whether a function is performed by using hardware or hardware driven by computer software depends on particular application scenarios and design constraints of the technical solutions.

The foregoing describes in detail the image processing method according to this embodiment with reference to FIG. 1 to FIG. 16(a), FIG. 16(b), FIG. 16(c), FIG. 16(d), FIG. 16(e), FIG. 16(f), and FIG. 16(g), and the following describes an image processing apparatus according to this embodiment with reference to FIG. 17.

FIG. 17 is a schematic diagram of a structure of a possible image processing apparatus according to an embodiment. The image processing apparatus may be configured to implement functions of the photographing device in the foregoing method embodiments. Therefore, the image processing apparatus can also implement beneficial effects of the foregoing method embodiments. In this embodiment, the image processing apparatus may be a photographing device 300 shown in FIG. 3, or may be a module (such as a chip) applied to a server.

As shown in FIG. 17, the image processing apparatus 1700 includes a communication module 1710, a line segment filtering module 1720, a correction module 1730, and a storage module 1740. The image processing apparatus 1700 is configured to implement functions of the photographing device 300 in the method embodiments shown in FIG. 4, FIG. 6, FIG. 8A and FIG. 8B, FIG. 11, FIG. 12A and FIG. 12B, and FIG. 14A and FIG. 14B.

The communication module 1710 is configured to obtain a to-be-processed image, where the to-be-processed image includes at least one of a vertical line segment and a horizontal line segment in a first scenario, and the first scenario is a scenario in which a photographing device obtains the to-be-processed image. For example, the communication module 1710 is configured to perform step 410. For another example, the communication module 1710 is configured to perform step 810.

The line segment filtering module 1720 is configured to obtain, through filtering, based on metadata of the to-be-processed image, a to-be-corrected line segment from line segments included in the to-be-processed image, where the metadata includes at least one of inertial measurement unit IMU information and a field of view of the photographing device. For example, the line segment filtering module 1720 is configured to perform step 420 and step 430. For another example, the line segment filtering module 1720 is configured to perform step 820, step 830, step 850, step 860, step 870, and step 880.

The correction module 1730 is configured to correct the to-be-corrected line segment and a feature region of the to-be-processed image to obtain a processed image, where the feature region includes a background region, a portrait region, and an edge region. For example, the correction module 1730 is configured to perform step 440. For another example, the correction module 1730 is configured to perform step 840.

Optionally, the image processing apparatus 1700 may upload a processed image to a server, an edge device, or a cloud device, or store the processed image in a local memory.

The storage module 1740 is configured to store the metadata, where the metadata indicates property information of the to-be-processed image, for example, the IMU information and the field of view, to facilitate determining of a line segment filtering policy based on the metadata of the to-be-processed image.

Optionally, the image processing apparatus 1700 may further include a display module 1750, where the display module 1750 is configured to display the to-be-processed image and the processed image.

It should be understood that the image processing apparatus 1700 in this embodiment of this application may be implemented by using an application-specific integrated circuit (application-specific integrated circuit, ASIC) or a programmable logic device (programmable logic device, PLD). The foregoing PLD may be a complex program logic device (complex programmable logical device, CPLD), a field-programmable gate array (field-programmable gate array, FPGA), a generic array logic (generic array logic, GAL), or any combination thereof. Alternatively, when the image processing apparatus may implement the image processing methods shown in FIG. 4, FIG. 6, FIG. 8A and FIG. 8B, FIG. 11, FIG. 12A and FIG. 12B, and FIG. 14A and FIG. 14B by using software, the image processing apparatus 1700 and modules of the image processing apparatus 1700 may alternatively be software modules, and the image processing apparatus 1700 and the modules of the image processing apparatus 1700 may alternatively be software modules.

The image processing apparatus 1700 according to this embodiment of this application may correspondingly perform the methods described in embodiments of this application. In addition, the foregoing and other operations and/or functions of the units in the image processing apparatus 1700 are respectively used to implement corresponding procedures of the methods in FIG. 4, FIG. 6, FIG. 8A and FIG. 8B, FIG. 11, FIG. 12A and FIG. 12B, and FIG. 14A and FIG. 14B. For brevity, details are not described herein again.

FIG. 18 is a schematic diagram of a structure of a photographing device 1800 according to an embodiment. As shown in the figure, the photographing device 1800 includes a processor 1810, a bus 1820, a memory 1830, a communication interface 1840, a memory unit 1850 (which may also be referred to as a main memory (main memory) unit), and a camera 1860. Optionally, the photographing device 1800 may further include a display 1870, and the display 1870 is configured to display a to-be-processed image and a processed image. The processor 1810, the memory 1830, the memory unit 1850, the communication interface 1840, the camera 1860, and the display 1870 are connected through the bus 1820.

It should be understood that in this embodiment, the processor 1810 may be a CPU. Alternatively, the processor 1810 may be another general-purpose processor or a digital signal processing (digital signal processing, DSP), an ASIC, an FPGA or another programmable logic device, a discrete gate or a transistor logic device, a discrete hardware component, or the like. The general-purpose processor may be a microprocessor or any conventional processor.

Alternatively, the processor may be a graphics processing unit (graphics processing unit, GPU), a neural network processing unit (neural network processing unit, NPU), a microprocessor, an ASIC, or one or more integrated circuits configured to control program execution of the solutions in this application.

The communication interface 1840 is configured to implement communication between the photographing device 1800 and a peripheral device or component. In this embodiment, when the photographing device 1800 is configured to implement functions of the photographing device 300 shown in FIG. 4, FIG. 6, FIG. 8A and FIG. 8B, FIG. 11, FIG. 12A and FIG. 12B, and FIG. 14A and FIG. 14B, the communication interface 1840 is configured to receive the to-be-processed image.

The bus 1820 may include a path used to transmit information between the foregoing components (for example, the processor 1810, the memory unit 1850, and the memory 1830). In addition to a data bus, the bus 1820 may further include a power bus, a control bus, a status signal bus, and the like. However, for clear description, various buses are marked as the bus 1820 in the figure. The bus 1820 may be a peripheral component interconnect express (Peripheral Component Interconnect Express, PCIe) bus, an extended industry standard architecture (extended industry standard architecture, EISA) bus, a unified bus (unified bus, Ubus or UB), a computer express link (compute express link, CXL), a cache coherent interconnection for accelerators (cache coherent interconnect for accelerators, CCIX), and the like. The bus 1820 may be classified into an address bus, a data bus, a control bus, and the like.

In an example, the photographing device 1800 may include a plurality of processors. The processor may be a multi-core (multi-CPU) processor. The processor herein may be one or more devices, circuits, and/or computing units configured to process data (for example, computer program instructions). In this embodiment, when the photographing device 1800 is configured to implement functions of the photographing device 300 shown in FIG. 4, FIG. 6, FIG. 8A and FIG. 8B, FIG. 11, FIG. 12A and FIG. 12B, and FIG. 14A and FIG. 14B, the processor 1810 may invoke metadata stored in the memory 1830, obtain, through filtering, based on at least one of IMU information and a field of view that are included in the metadata of the to-be-processed image, a to-be-corrected line segment included in the to-be-processed image, and correct the to-be-corrected line segment and a feature region of the to-be-processed image, to obtain a processed image, where the feature region includes a background region, a portrait region, and an edge region.

It should be noted that in FIG. 18, that the photographing device 1800 includes only one processor 1810 and one memory 1830 is used as an example. Herein, the processor 1810 and the memory 1830 are respectively configured to indicate a type of component or device. In a specific embodiment, a quantity of components or devices of each type may be determined based on service requirements.

The memory unit 1850 may correspond to a storage medium configured to store information such as the metadata in the foregoing method embodiments. The memory unit 1850 may be a volatile memory or a non-volatile memory, or may include both the volatile memory and the non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and may be used as an external cache. By way of example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data date SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The memory 1830 may correspond to a storage medium configured to store information such as computer instructions in the foregoing method embodiments, for example, a magnetic disk such as a mechanical hard disk or a solid state disk.

The photographing device 1800 may be a general-purpose device or a dedicated device. For example, the photographing device 1800 may be an edge device (for example, a box carrying a chip with a processing capability) or the like. Optionally, the photographing device 1800 may alternatively be a server or another device with a computing capability.

It should be understood that the photographing device 1800 according to this embodiment may correspond to the image processing apparatus 1700 in embodiments, and may correspond to a corresponding body for performing any method according to FIG. 4, FIG. 6, FIG. 8A and FIG. 8B, FIG. 11, FIG. 12A and FIG. 12B, and FIG. 14A and FIG. 14B. In addition, the foregoing and other operations and/or functions of the modules in the image processing apparatus 1700 are respectively used to implement corresponding procedures of the methods in FIG. 4, FIG. 6, FIG. 8A and FIG. 8B, FIG. 11, FIG. 12A and FIG. 12B, and FIG. 14A and FIG. 14B. For brevity, details are not described herein again.

The method steps in this embodiment may be implemented by hardware, or may be implemented by a processor by executing software instructions. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in the photographing device. Certainly, the processor and the storage medium may also exist in the photographing device as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs and instructions. When the computer programs or the instructions are loaded and executed on a computer, all or some of the procedures or functions in embodiments of this application are executed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired manner or in a wireless manner. The computer-readable storage medium may be any usable medium that can be accessed by a computer, or a data storage device, such as a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid state drive (solid state drive, SSD). The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

## Claims

**1.** An image processing method, comprising:

obtaining a to-be-processed image, wherein the to-be-processed image comprises at least one of a vertical line segment and a horizontal line segment in a first scenario, and the first scenario is a scenario in which a photographing device obtains the to-be-processed image;
obtaining, through filtering, based on metadata of the to-be-processed image, a to-be-corrected line segment from line segments comprised in the to-be-processed image, wherein the metadata comprises at least one of inertial measurement unit IMU information and a field of view of the photographing device; and
correcting the to-be-corrected line segment and a feature region of the to-be-processed image to obtain a processed image, wherein the feature region comprises a background region, a portrait region, and an edge region.

**2.** The method according to claim 1, wherein the to-be-processed image comprises a line segment that is tilted in the to-be-processed image and that is at least one of the vertical line segment and the horizontal line segment in the first scenario.

**3.** The method according to claim 2, wherein the to-be-corrected line segment comprises a part or all of line segments that are tilted in the to-be-processed image and that are at least one of the vertical line segment and the horizontal line segment in the first scenario.

**4.** The method according to any one of claims 1 to 3, wherein the photographing device displays a tilt-shift distortion control, and before the obtaining, through filtering, based on metadata of the to-be-processed image, a to-be-corrected line segment from line segments comprised in the to-be-processed image, the method further comprises: receiving an operation performed by a user on the tilt-shift distortion control.

**5.** The method according to any one of claims 1 to 4, wherein the obtaining, through filtering, based on metadata of the to-be-processed image, a to-be-corrected line segment from line segments comprised in the to-be-processed image comprises:
obtaining, through filtering, based on a line segment filtering policy determined based on the metadata, the to-be-corrected line segment from the line segments comprised in the to-be-processed image, wherein the line segment filtering policy indicates a method for performing line segment filtering on the line segments comprised in the to-be-processed image.

6. The method according to claim 5, wherein the metadata comprises the IMU information and the field of view, and the line segment filtering policy indicates to perform line segment filtering based on the IMU information and the field of view; and

   the obtaining, through filtering, based on a line segment filtering policy determined based on the metadata, the to-be-corrected line segment from the line segments comprised in the to-be-processed image comprises:
   performing, based on the IMU information and the field of view, overall adjustment on M line segments comprised in the to-be-processed image to obtain M adjusted line segments, wherein the M adjusted line segments meet a line segment angle distribution feature of the first scenario; and
   obtaining, through filtering, based on a line segment tilt threshold, N to-be-corrected line segments from the M adjusted line segments, wherein the line segment tilt threshold comprises a horizontal line segment tilt threshold and a vertical line segment tilt threshold, both M and N are positive integers, and N is less than or equal to M.

7. The method according to claim 5, wherein the metadata does not comprise the field of view, and the obtaining, through filtering, based on a line segment filtering policy determined based on the metadata, the to-be-corrected line segment from the line segments comprised in the to-be-processed image comprises:
   obtaining, through filtering, based on image content of the to-be-processed image, the to-be-corrected line segment from the line segments comprised in the to-be-processed image, wherein the image content comprises a line segment angle distribution feature.

8. The method according to claim 5, wherein the metadata comprises the field of view and does not comprise the IMU information, and the obtaining, through filtering, based on a line segment filtering policy determined based on the metadata, the to-be-corrected line segment from the line segments comprised in the to-be-processed image comprises:
   obtaining, through filtering, based on the field of view and image content of the to-be-processed image, the to-be-corrected line segment from the line segments comprised in the to-be-processed image, wherein the image content comprises a line segment angle distribution feature.

9. The method according to claim 7 or 8, wherein the method further comprises:
   prompting the user to select the to-be-corrected line segment from recommended line segments obtained through filtering based on the image content of the to-be-processed image.

10. The method according to any one of claims 5 to 8, wherein the metadata further comprises a trusted identifier, and the trusted identifier indicates whether the metadata is trusted; and the obtaining, through filtering, based on a line segment filtering policy determined based on the metadata, the to-be-corrected line segment from the line segments comprised in the to-be-processed image comprises:

    if the trusted identifier indicates that the metadata is untrusted, obtaining, through filtering, based on the image content of the to-be-processed image, the to-be-corrected line segment from the line segments comprised in the to-be-processed image, wherein the image content comprises the line segment angle distribution feature; and
    if the trusted identifier indicates that the metadata is trusted, obtaining, through filtering, based on at least one of the image content of the to-be-processed image, the IMU information, and the field of view, the to-be-corrected line segment from the line segments comprised in the to-be-processed image.

11. The method according to any one of claims 1 to 4, wherein the obtaining, through filtering, based on metadata of the to-be-processed image, a to-be-corrected line segment from line segments comprised in the to-be-processed image comprises:
    determining the to-be-corrected line segment based on a line segment filtered based on the metadata and a line segment filtered based on image content.

12. The method according to any one of claims 1 to 11, wherein the correcting the to-be-corrected line segment and a feature region of the to-be-processed image to obtain a processed image comprises:

    determining whether a quantity of to-be-corrected line segments is greater than a quantity threshold and whether a length of the to-be-corrected line segment is greater than a length threshold;
    if the quantity of the to-be-corrected line segments is greater than the quantity threshold, and the length of the to-be-corrected line segment is greater than the length threshold, correcting the to-be-corrected line segment to obtain the processed image; and

if the quantity of the to-be-corrected line segments is less than or equal to the quantity threshold, or the length of the to-be-corrected line segment is less than or equal to the length threshold, determining, based on a scenario feature of the first scenario, whether to correct the to-be-corrected line segment, wherein the scenario feature comprises an architecture feature and a character feature.

**13.** The method according to any one of claims 1 to 12, wherein the correcting the to-be-corrected line segment and a feature region of the to-be-processed image to obtain a processed image comprises:

constructing a straight line constraint to correct the to-be-corrected line segment; constructing a content-based homography constraint, a shape constraint, and a regular constraint to correct the background region; constructing a portrait constraint to correct the portrait region; and constructing an edge constraint to correct the edge region, to obtain the processed image.

**14.** An image processing apparatus, comprising:

a communication module, configured to obtain a to-be-processed image, wherein the to-be-processed image comprises at least one of a vertical line segment and a horizontal line segment in a first scenario, and the first scenario is a scenario in which a photographing device obtains the to-be-processed image;
a line segment filtering module, configured to obtain, through filtering, based on metadata of the to-be-processed image, a to-be-corrected line segment from line segments comprised in the to-be-processed image, wherein the metadata comprises at least one of inertial measurement unit IMU information and a field of view of the photographing device; and
a correction module, configured to correct the to-be-corrected line segment and a feature region of the to-be-processed image to obtain a processed image, wherein the feature region comprises a background region, a portrait region, and an edge region.

**15.** The apparatus according to claim 14, wherein the to-be-processed image comprises a line segment that is tilted in the to-be-processed image and that is at least one of the vertical line segment and the horizontal line segment in the first scenario.

**16.** The apparatus according to claim 15, wherein the to-be-corrected line segment comprises a part or all of line segments that are tilted in the to-be-processed image and that are at least one of the vertical line segment and the horizontal line segment in the first scenario.

**17.** The apparatus according to any one of claims 14 to 16, wherein the apparatus further comprises a display module; and the display module is configured to: display a tilt-shift distortion control, and receive an operation performed by a user on the tilt-shift distortion control.

**18.** The apparatus according to any one of claims 14 to 17, wherein when obtaining, through filtering, based on the metadata of the to-be-processed image, the to-be-corrected line segment from the line segments comprised in the to-be-processed image, the line segment filtering module is specifically configured to:
obtain, through filtering, based on a line segment filtering policy determined based on the metadata, the to-be-corrected line segment from the line segments comprised in the to-be-processed image, wherein the line segment filtering policy indicates a method for performing line segment filtering on the line segments comprised in the to-be-processed image.

**19.** The apparatus according to claim 18, wherein the metadata comprises the IMU information and the field of view, and the line segment filtering policy indicates to perform line segment filtering based on the IMU information and the field of view; and

when obtaining, through filtering, based on the line segment filtering policy determined based on the metadata, the to-be-corrected line segment from the line segments comprised in the to-be-processed image, the line segment filtering module is specifically configured to:
perform, based on the IMU information and the field of view, overall adjustment on M line segments comprised in the to-be-processed image to obtain M adjusted line segments, wherein the M adjusted line segments meet a line segment angle distribution feature of the first scenario; and
obtain, through filtering, based on a line segment tilt threshold, N to-be-corrected line segments from the M adjusted line segments, wherein the line segment tilt threshold comprises a horizontal line segment tilt threshold and a vertical line segment tilt threshold, both M and N are positive integers, and N is less than or equal to M.

**20.** The apparatus according to claim 18, wherein the metadata does not comprise the field of view, and when obtaining, through filtering, based on the line segment filtering policy determined based on the metadata, the to-be-corrected line segment from the line segments comprised in the to-be-processed image, the line segment filtering module is specifically configured to:
obtain, through filtering, based on image content of the to-be-processed image, the to-be-corrected line segment from the line segments comprised in the to-be-processed image, wherein the image content comprises a line segment angle distribution feature.

**21.** The apparatus according to claim 18, wherein the metadata comprises the field of view and does not comprise the IMU information, and when obtaining, through filtering, based on the line segment filtering policy determined based on the metadata, the to-be-corrected line segment from the line segments comprised in the to-be-processed image, the line segment filtering module is specifically configured to:
obtain, through filtering, based on the field of view and image content of the to-be-processed image, the to-be-corrected line segment from the line segments comprised in the to-be-processed image, wherein the image content comprises a line segment angle distribution feature.

**22.** The apparatus according to claim 20 or 21, wherein the apparatus further comprises a display module; and the display module is configured to prompt the user to select the to-be-corrected line segment from recommended line segments obtained through filtering based on the image content of the to-be-processed image.

**23.** The apparatus according to any one of claims 18 to 21, wherein the metadata further comprises a trusted identifier, and the trusted identifier indicates whether the metadata is trusted; and when obtaining, through filtering, based on the line segment filtering policy determined based on the metadata, the to-be-corrected line segment from the line segments comprised in the to-be-processed image, the line segment filtering module is specifically configured to:

if the trusted identifier indicates that the metadata is untrusted, obtain, through filtering, based on the image content of the to-be-processed image, the to-be-corrected line segment from the line segments comprised in the to-be-processed image, wherein the image content comprises the line segment angle distribution feature; and
if the trusted identifier indicates that the metadata is trusted, obtain, through filtering, based on at least one of the image content of the to-be-processed image, the IMU information, and the field of view, the to-be-corrected line segment from the line segments comprised in the to-be-processed image.

**24.** The apparatus according to any one of claims 14 to 17, wherein when obtaining, through filtering, based on the metadata of the to-be-processed image, the to-be-corrected line segment from the line segments comprised in the to-be-processed image, the line segment filtering module is specifically configured to:
determine the to-be-corrected line segment based on a line segment filtered based on the metadata and a line segment filtered based on image content.

**25.** The apparatus according to any one of claims 14 to 24, wherein when correcting the to-be-corrected line segment and the feature region of the to-be-processed image, to obtain the processed image, the correction module is specifically configured to:

determine whether a quantity of to-be-corrected line segments is greater than a quantity threshold and whether a length of the to-be-corrected line segment is greater than a length threshold;
if the quantity of the to-be-corrected line segments is greater than the quantity threshold, and the length of the to-be-corrected line segment is greater than the length threshold, correct the to-be-corrected line segment to obtain the processed image; and
if the quantity of the to-be-corrected line segments is less than or equal to the quantity threshold, or the length of the to-be-corrected line segment is less than or equal to the length threshold, determine, based on a scenario feature of the first scenario, whether to correct the to-be-corrected line segment, wherein the scenario feature comprises an architecture feature and a character feature.

**26.** The apparatus according to any one of claims 14 to 25, wherein when correcting the to-be-corrected line segment and the feature region of the to-be-processed image, to obtain the processed image, the correction module is specifically configured to:
construct a straight line constraint to correct the to-be-corrected line segment; construct a content-based homography constraint, a shape constraint, and a regular constraint to correct the background region; construct a portrait constraint to correct the portrait region; and construct an edge constraint to correct the edge region, to obtain the processed image.

**27.** A photographing device, wherein the photographing device comprises at least one processor, a memory, a camera, and an inertial measurement unit IMU; and the camera is configured to photograph an image, the IMU is configured to obtain IMU information of the photographing device, the memory is configured to store a computer program and instructions, and the processor is configured to invoke the computer program and the instructions, to assist the camera and the IMU in performing the method according to any one of claims 1 to 13.

**28.** An image processing system, wherein the image processing system comprises at least one processor and a memory, the memory is configured to store a computer program and instructions, and the processor is configured to invoke the computer program and the instructions, to implement the method according to any one of claims 1 to 13.

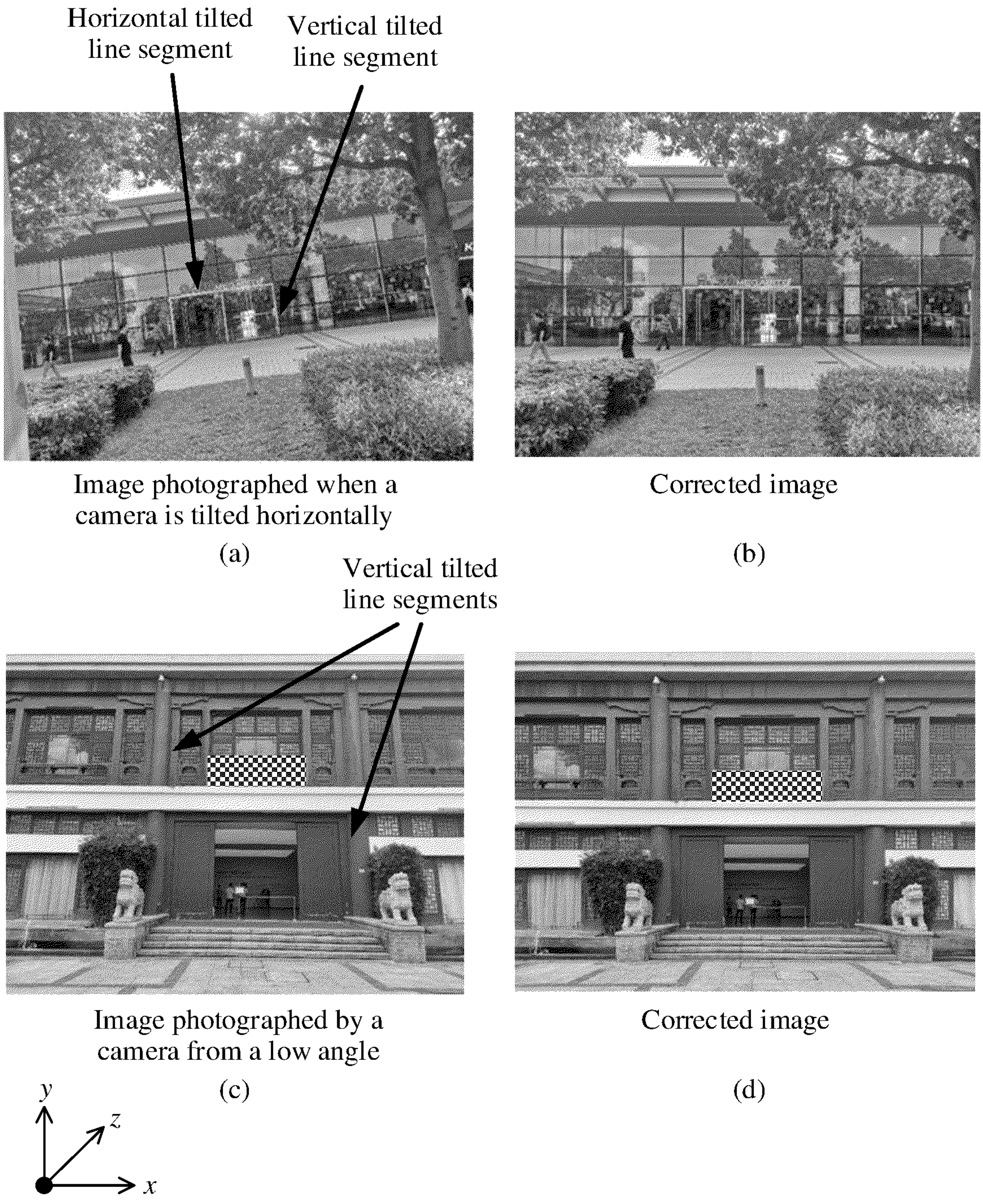
Horizontal tilted line segment
Vertical tilted line segment
Image photographed when a camera is tilted horizontally
(a)
Corrected image
(b)
Vertical tilted line segments
Image photographed by a camera from a low angle
(c)
Corrected image
(d)
y
z
x

FIG. 1

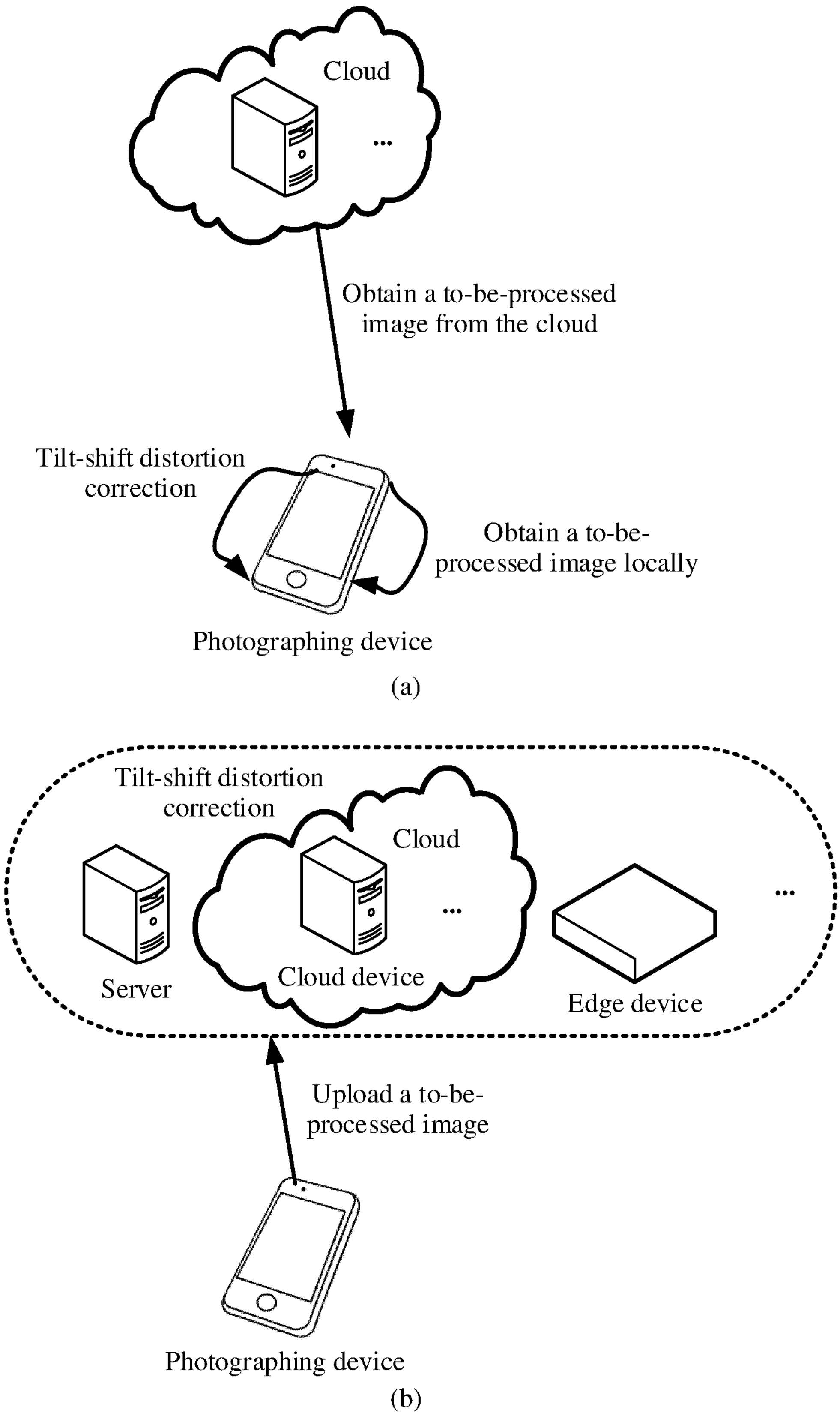
Cloud
...
Obtain a to-be-processed image from the cloud
Tilt-shift distortion correction
Obtain a to-be-processed image locally
Photographing device
(a)
Tilt-shift distortion correction
Cloud
Server
...
Cloud device
Edge device
...
Upload a to-be-processed image
Photographing device
(b)

FIG. 2

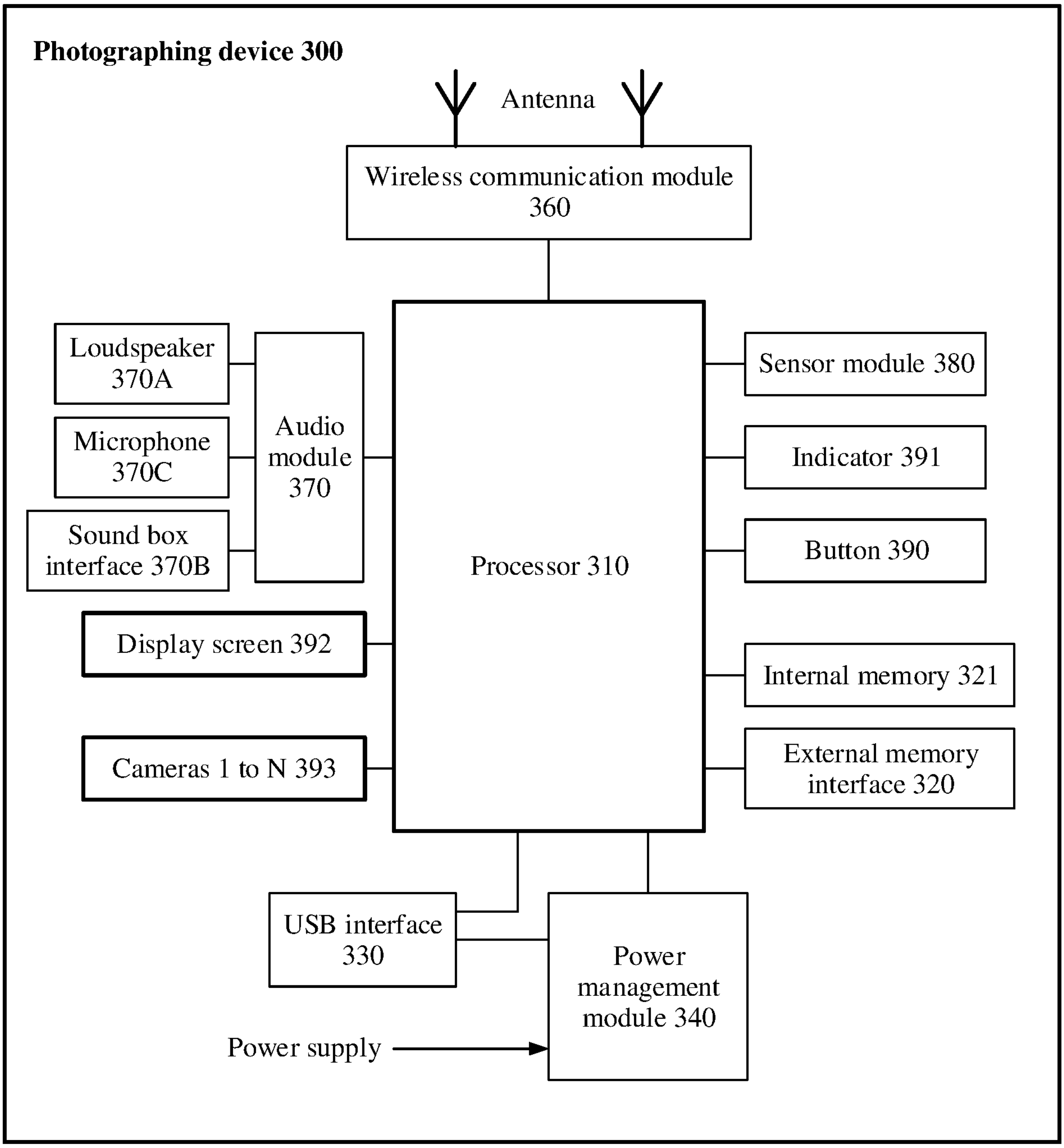
Photographing device 300
Antenna
Wireless communication module 360
Loudspeaker 370A
Microphone 370C
Sound box interface 370B
Audio module 370
Processor 310
Sensor module 380
Indicator 391
Button 390
Display screen 392
Cameras 1 to N 393
Internal memory 321
External memory interface 320
USB interface 330
Power management module 340
Power supply

FIG. 3

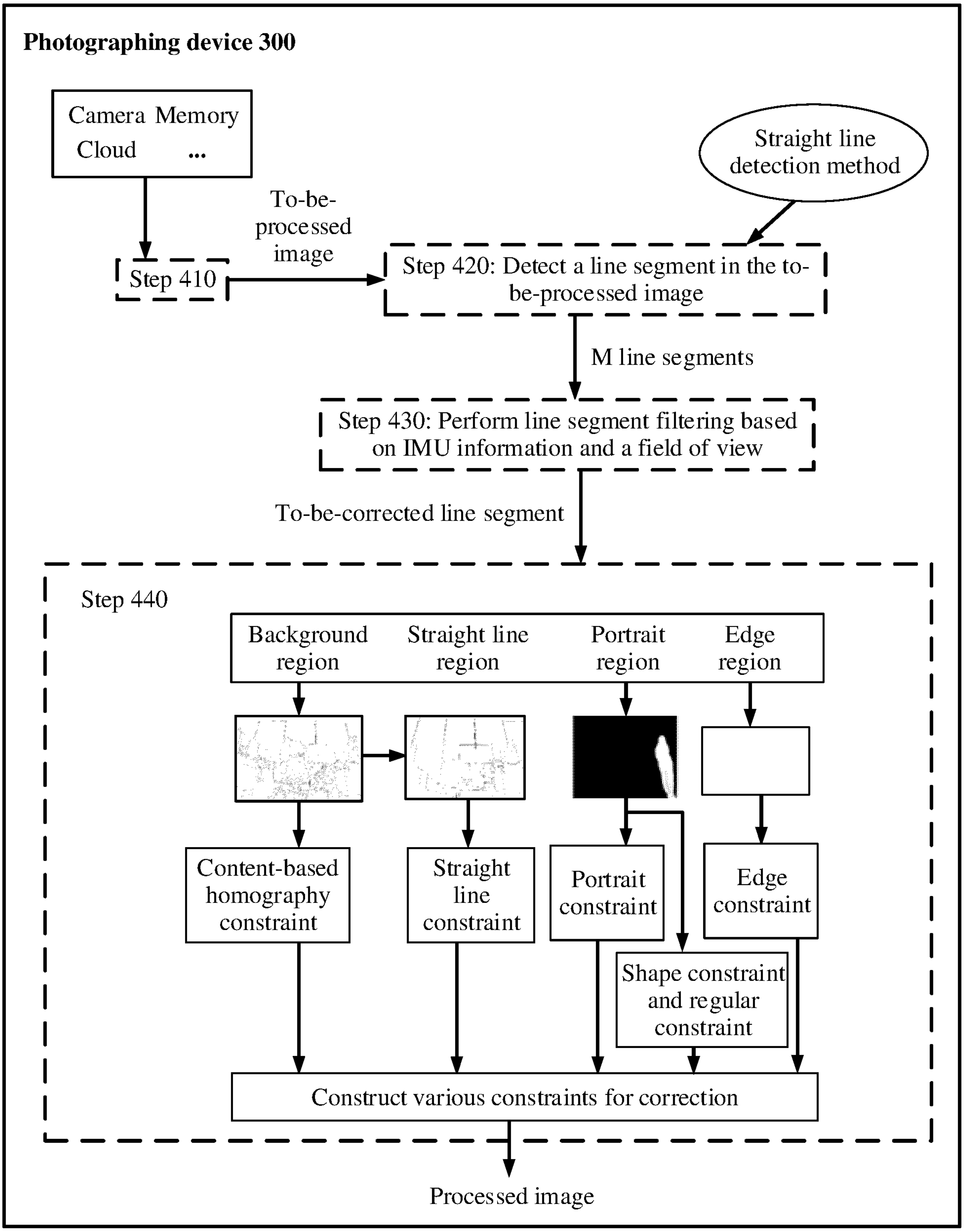
Photographing device 300
Camera Memory
Cloud ...
Straight line detection method
To-be-processed image
Step 410
Step 420: Detect a line segment in the to-be-processed image
M line segments
Step 430: Perform line segment filtering based on IMU information and a field of view
To-be-corrected line segment
Step 440
Background region
Straight line region
Portrait region
Edge region
Content-based homography constraint
Straight line constraint
Portrait constraint
Edge constraint
Shape constraint and regular constraint
Construct various constraints for correction
Processed image

FIG. 4

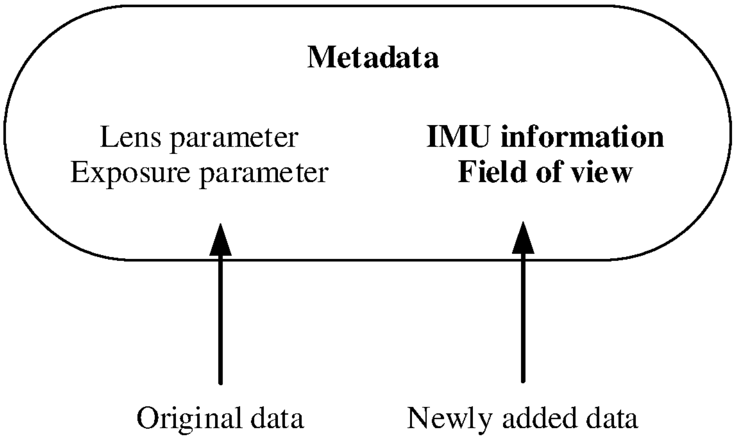
Metadata
Lens parameter
Exposure parameter
IMU information
Field of view
Original data
Newly added data

FIG. 5

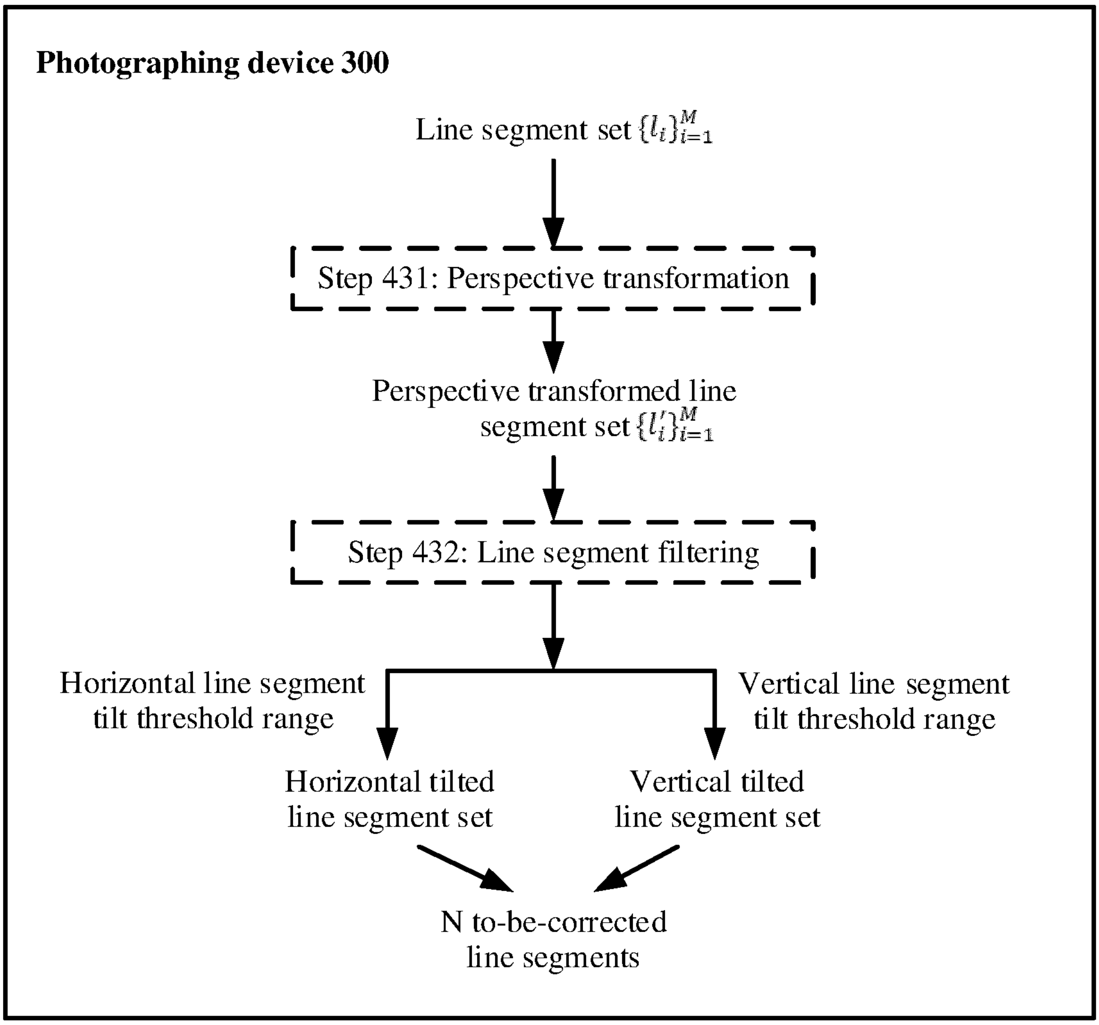
Photographing device 300
Line segment set $\{l_i\}_{i=1}^{M}$
Step 431: Perspective transformation
Perspective transformed line segment set $\{l_i'\}_{i=1}^{M}$
Step 432: Line segment filtering
Horizontal line segment tilt threshold range
Vertical line segment tilt threshold range
Horizontal tilted line segment set
Vertical tilted line segment set
N to-be-corrected line segments

FIG. 6

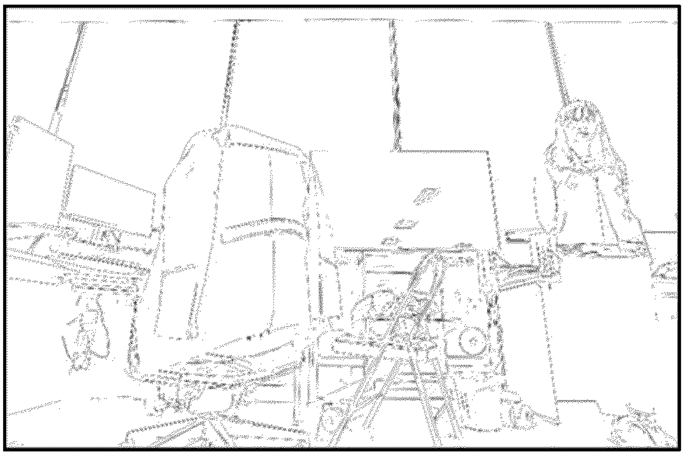

Straight line detection
(a)

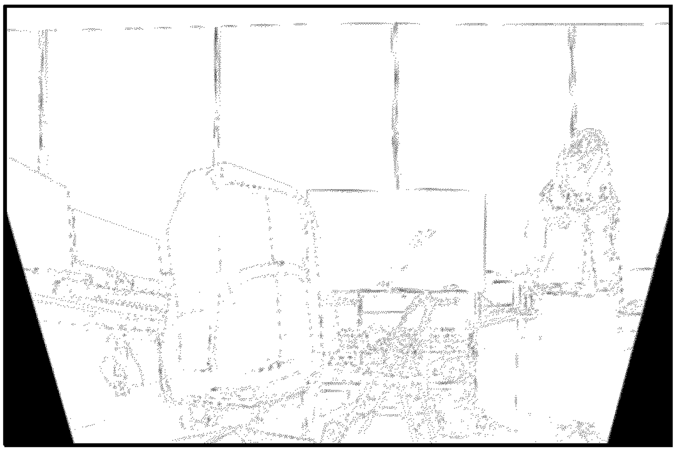

Perspective transformation
(b)

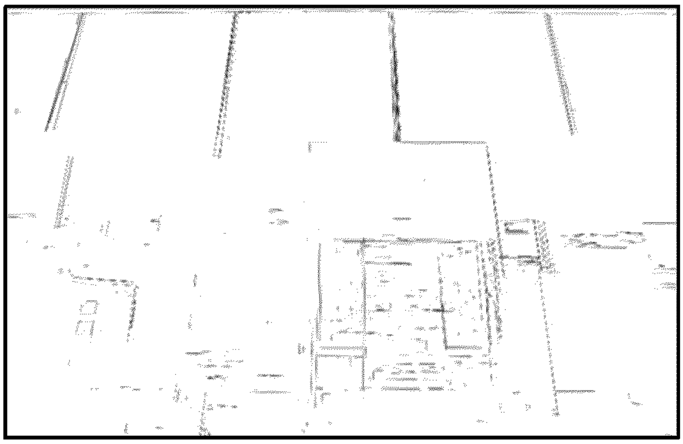

Line segment filtering
(c)

FIG. 7

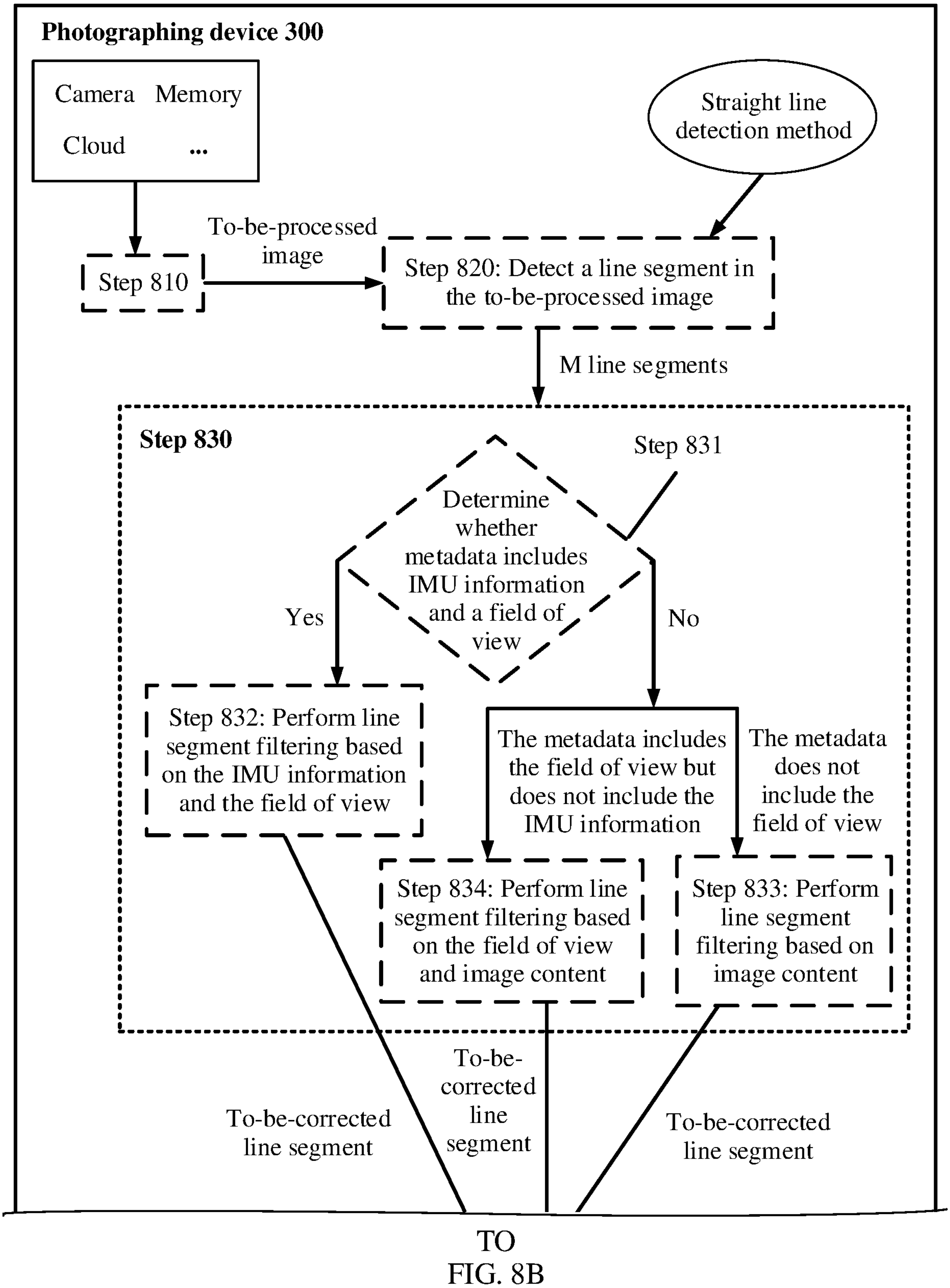
Photographing device 300
Camera
Memory
Cloud
...
Straight line detection method
To-be-processed image
Step 810
Step 820: Detect a line segment in the to-be-processed image
M line segments
Step 830
Step 831
Determine whether metadata includes IMU information and a field of view
Yes
No
Step 832: Perform line segment filtering based on the IMU information and the field of view
The metadata includes the field of view but does not include the IMU information
The metadata does not include the field of view
Step 834: Perform line segment filtering based on the field of view and image content
Step 833: Perform line segment filtering based on image content
To-be-corrected line segment
To-be-corrected line segment
To-be-corrected line segment
TO FIG. 8B

FIG. 8A

CONT.
FROM
FIG. 8A

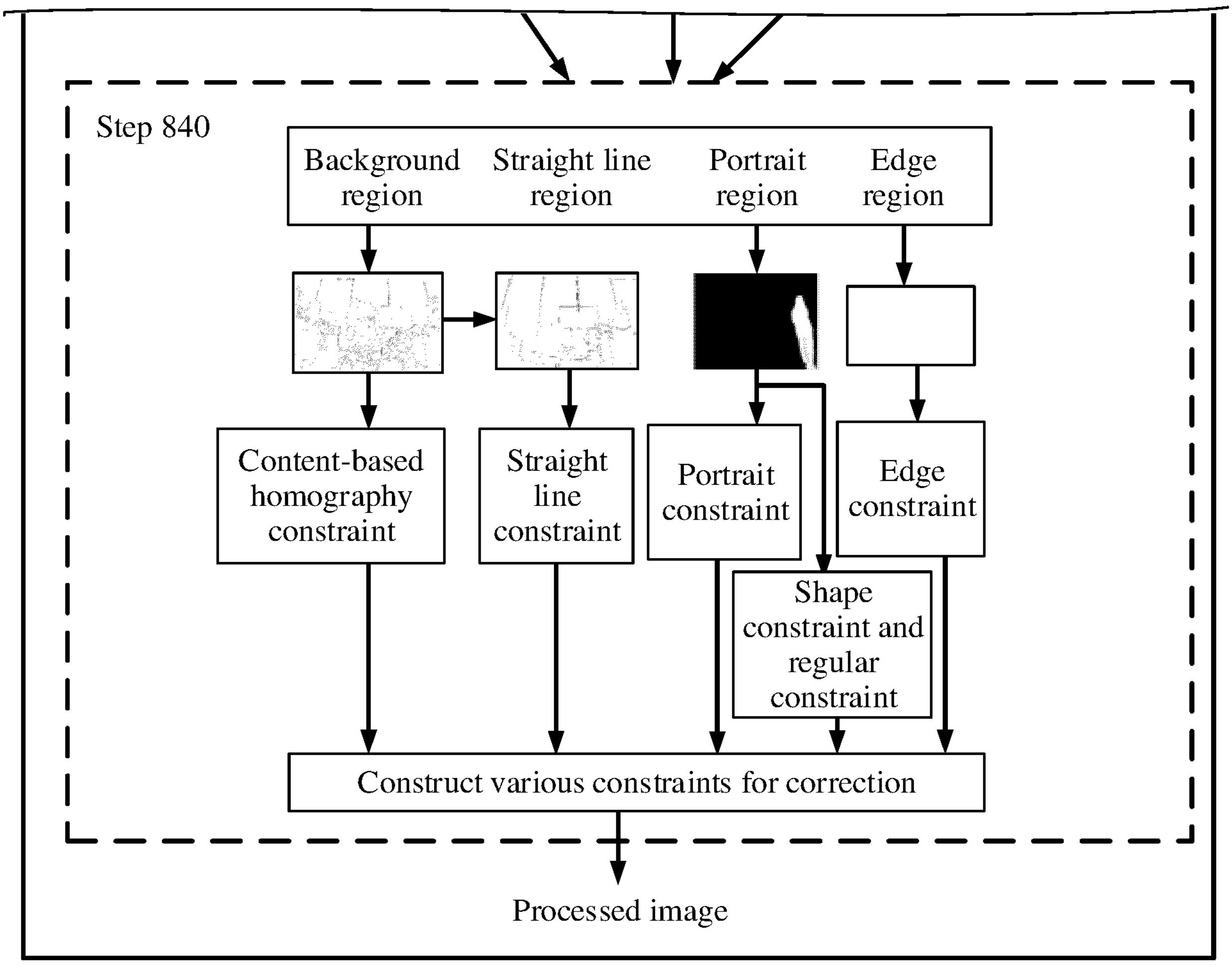


FIG. 8B

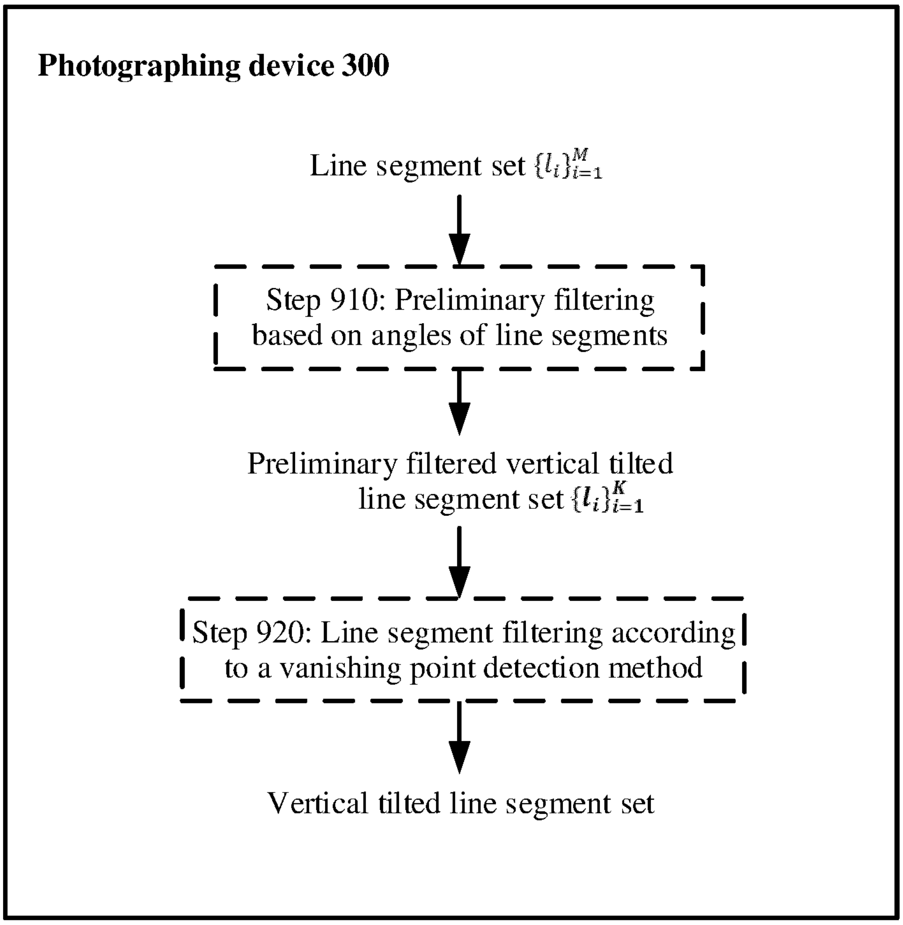
Photographing device 300
Line segment set $\{l_i\}_{i=1}^{M}$
Step 910: Preliminary filtering based on angles of line segments
Preliminary filtered vertical tilted line segment set $\{l_i\}_{i=1}^{K}$
Step 920: Line segment filtering according to a vanishing point detection method
Vertical tilted line segment set

FIG. 9

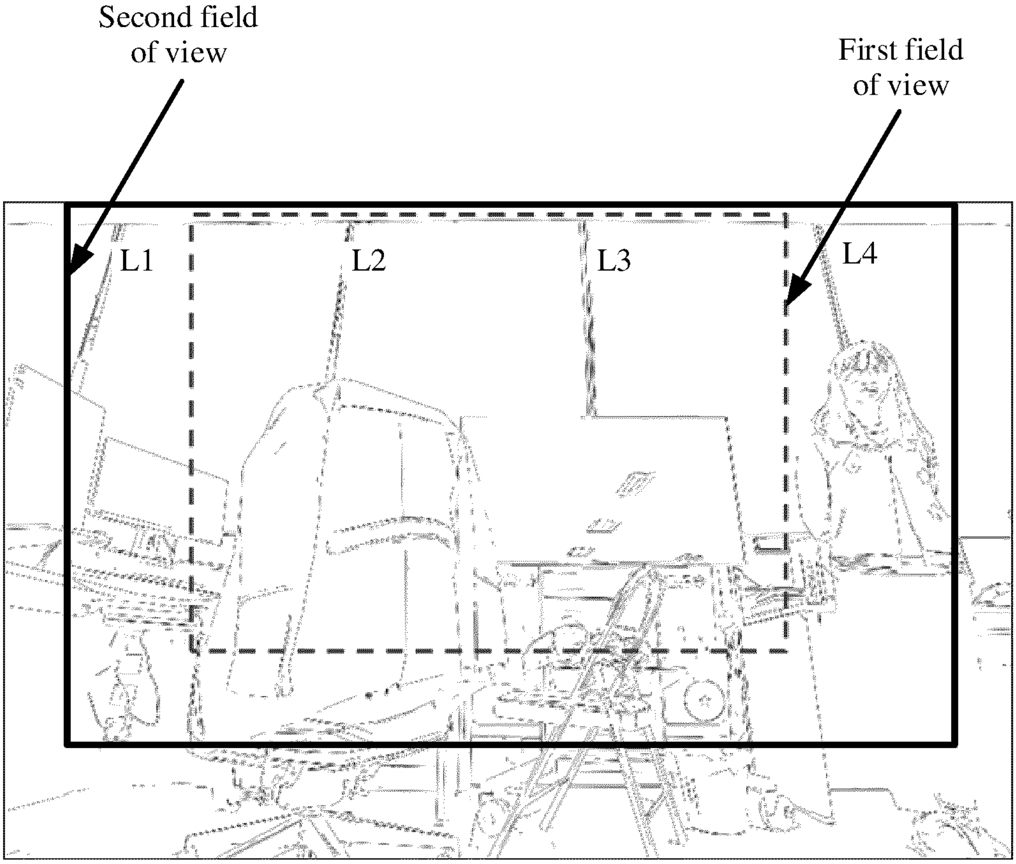


FIG. 10

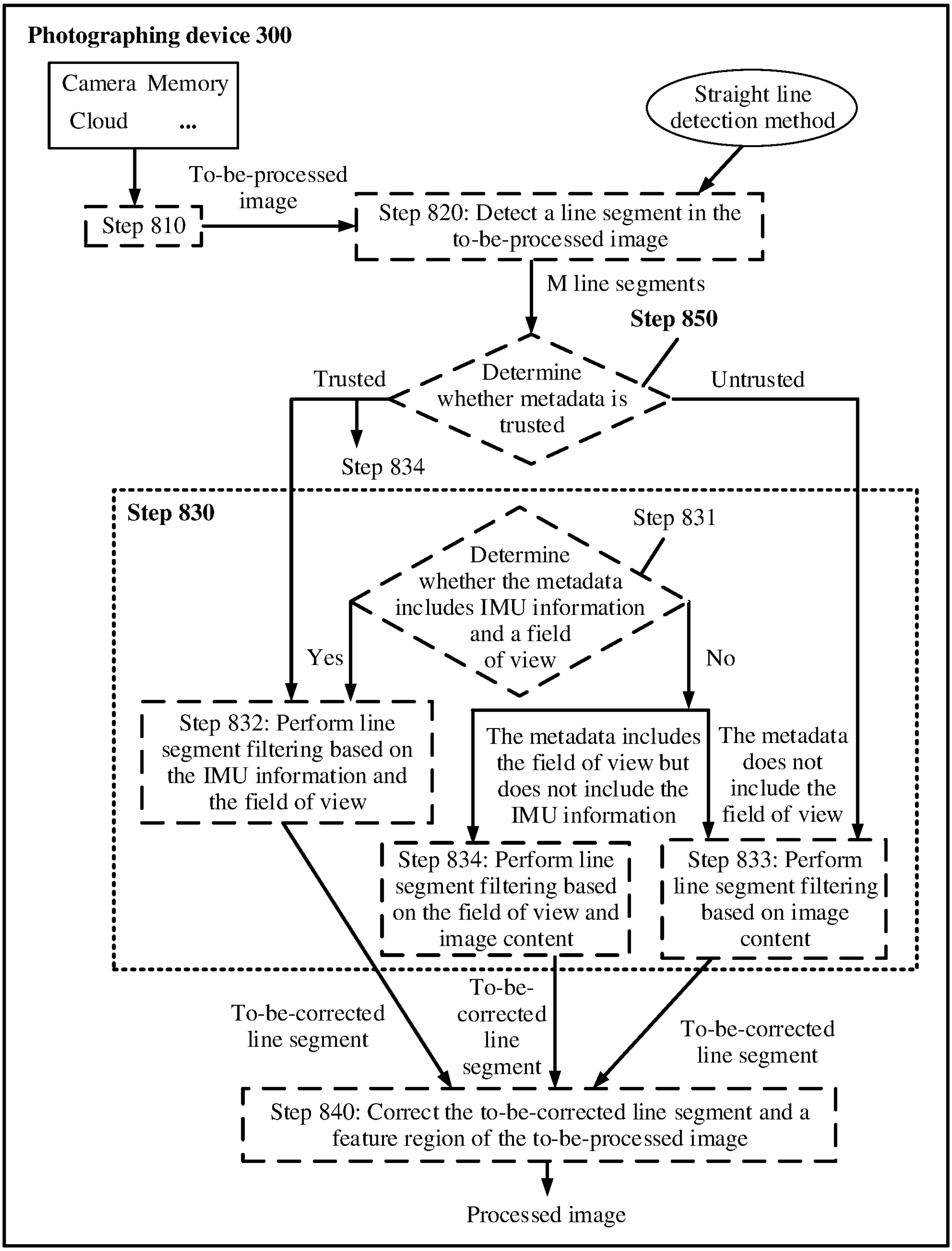
Photographing device 300
Camera Memory
Cloud ...
Straight line detection method
To-be-processed image
Step 810
Step 820: Detect a line segment in the to-be-processed image
M line segments
Step 850
Trusted
Determine whether metadata is trusted
Untrusted
Step 834
Step 830
Step 831
Determine whether the metadata includes IMU information and a field of view
Yes
No
Step 832: Perform line segment filtering based on the IMU information and the field of view
The metadata includes the field of view but does not include the IMU information
The metadata does not include the field of view
Step 834: Perform line segment filtering based on the field of view and image content
Step 833: Perform line segment filtering based on image content
To-be-corrected line segment
To-be-corrected line segment
To-be-corrected line segment
Step 840: Correct the to-be-corrected line segment and a feature region of the to-be-processed image
Processed image

FIG. 11

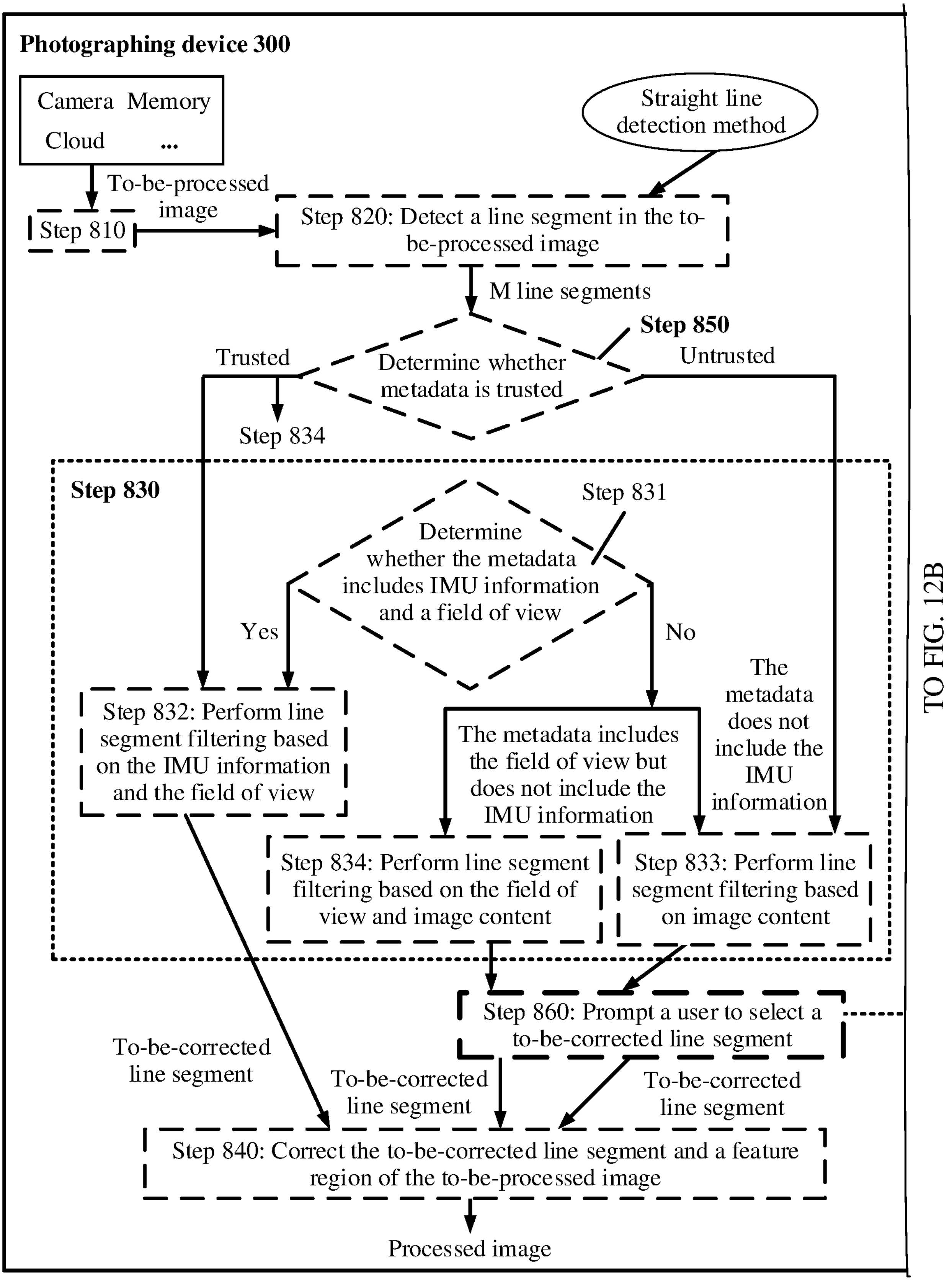
Photographing device 300
Camera Memory
Cloud ...
To-be-processed image
Step 810
Straight line detection method
Step 820: Detect a line segment in the to-be-processed image
M line segments
Step 850
Determine whether metadata is trusted
Trusted
Untrusted
Step 834
Step 830
Step 831
Determine whether the metadata includes IMU information and a field of view
Yes
No
Step 832: Perform line segment filtering based on the IMU information and the field of view
The metadata includes the field of view but does not include the IMU information
The metadata does not include the IMU information
Step 834: Perform line segment filtering based on the field of view and image content
Step 833: Perform line segment filtering based on image content
Step 860: Prompt a user to select a to-be-corrected line segment
To-be-corrected line segment
To-be-corrected line segment
To-be-corrected line segment
Step 840: Correct the to-be-corrected line segment and a feature region of the to-be-processed image
Processed image
TO FIG. 12B

FIG. 12A

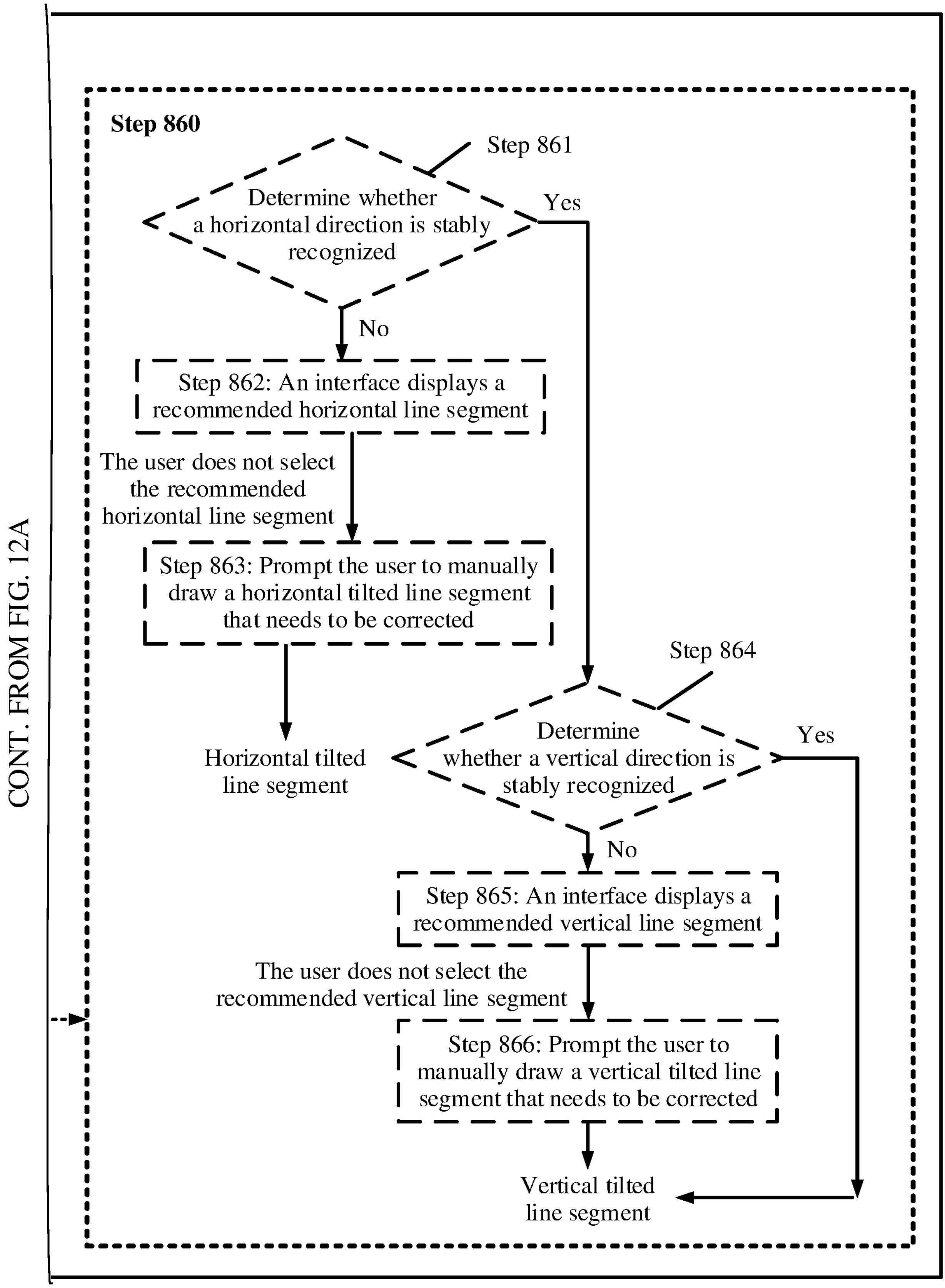
CONT. FROM FIG. 12A
Step 860
Step 861
Determine whether a horizontal direction is stably recognized
Yes
No
Step 862: An interface displays a recommended horizontal line segment
The user does not select the recommended horizontal line segment
Step 863: Prompt the user to manually draw a horizontal tilted line segment that needs to be corrected
Horizontal tilted line segment
Step 864
Determine whether a vertical direction is stably recognized
Yes
No
Step 865: An interface displays a recommended vertical line segment
The user does not select the recommended vertical line segment
Step 866: Prompt the user to manually draw a vertical tilted line segment that needs to be corrected
Vertical tilted line segment

FIG. 12B

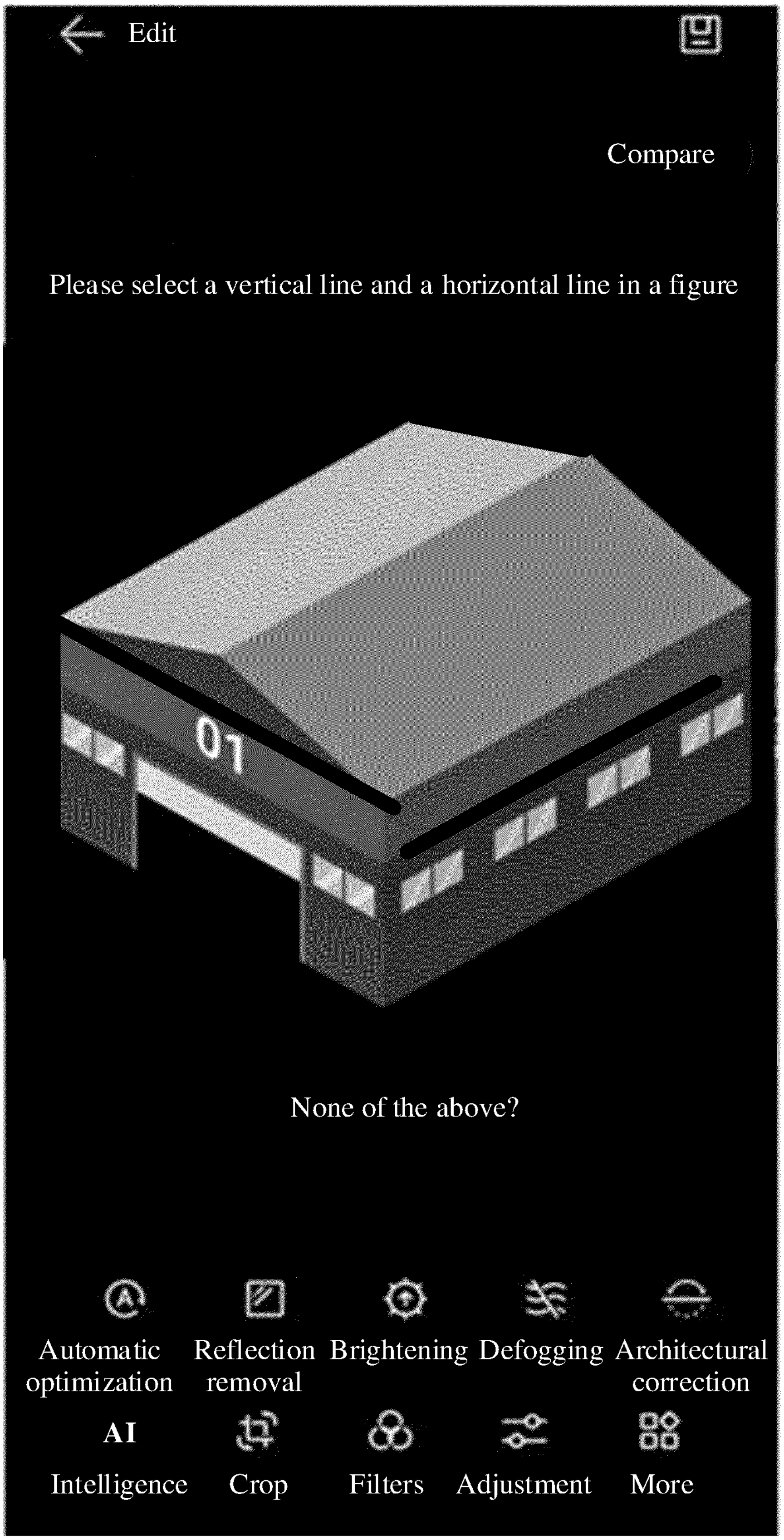
Edit
Compare
Please select a vertical line and a horizontal line in a figure
01
None of the above?
Automatic optimization
Reflection removal
Brightening
Defogging
Architectural correction
AI
Intelligence
Crop
Filters
Adjustment
More

FIG. 13(a)

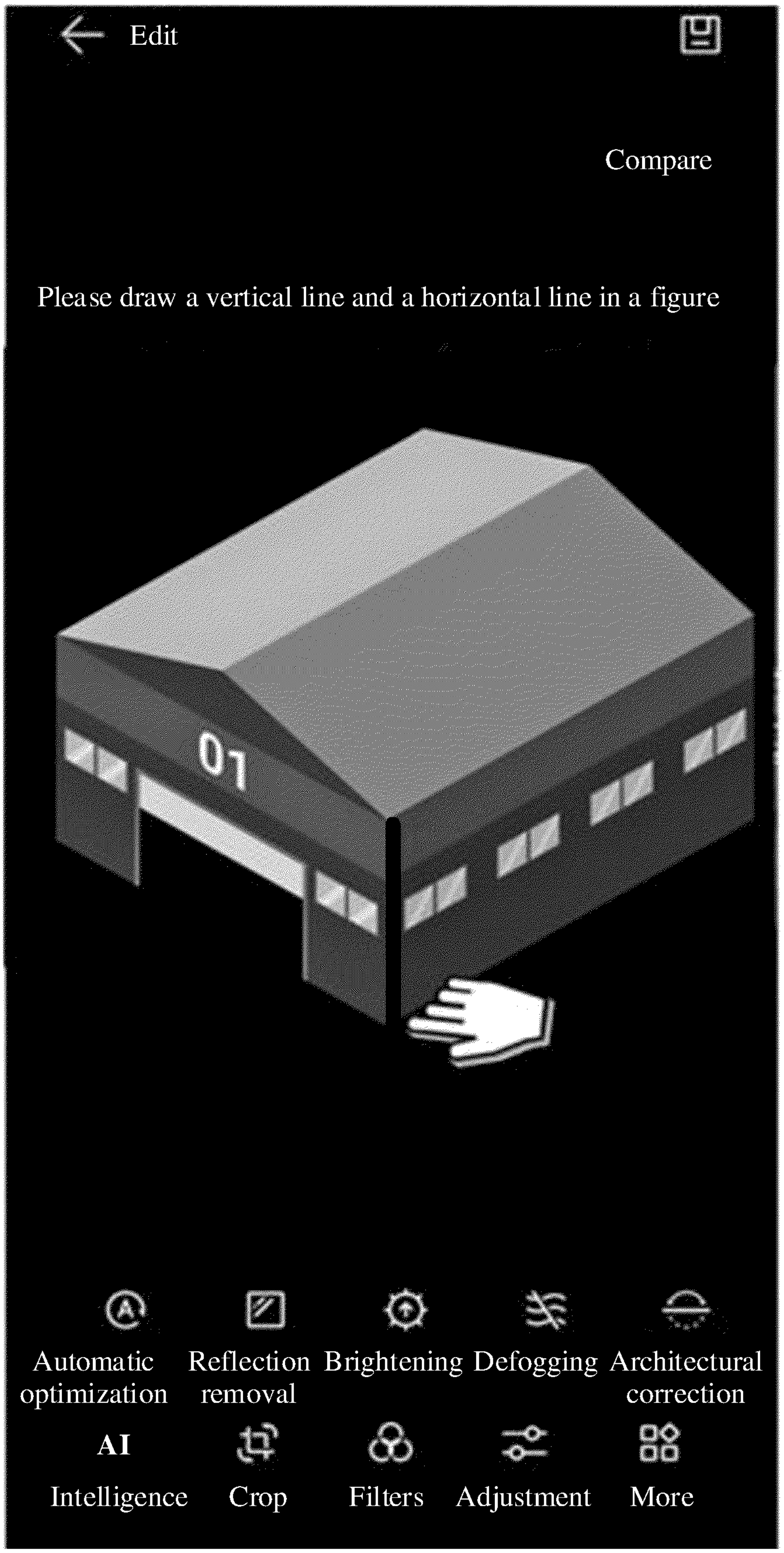
Edit
Compare
Please draw a vertical line and a horizontal line in a figure
01
Automatic optimization
Reflection removal
Brightening
Defogging
Architectural correction
AI
Intelligence
Crop
Filters
Adjustment
More

FIG. 13(b)

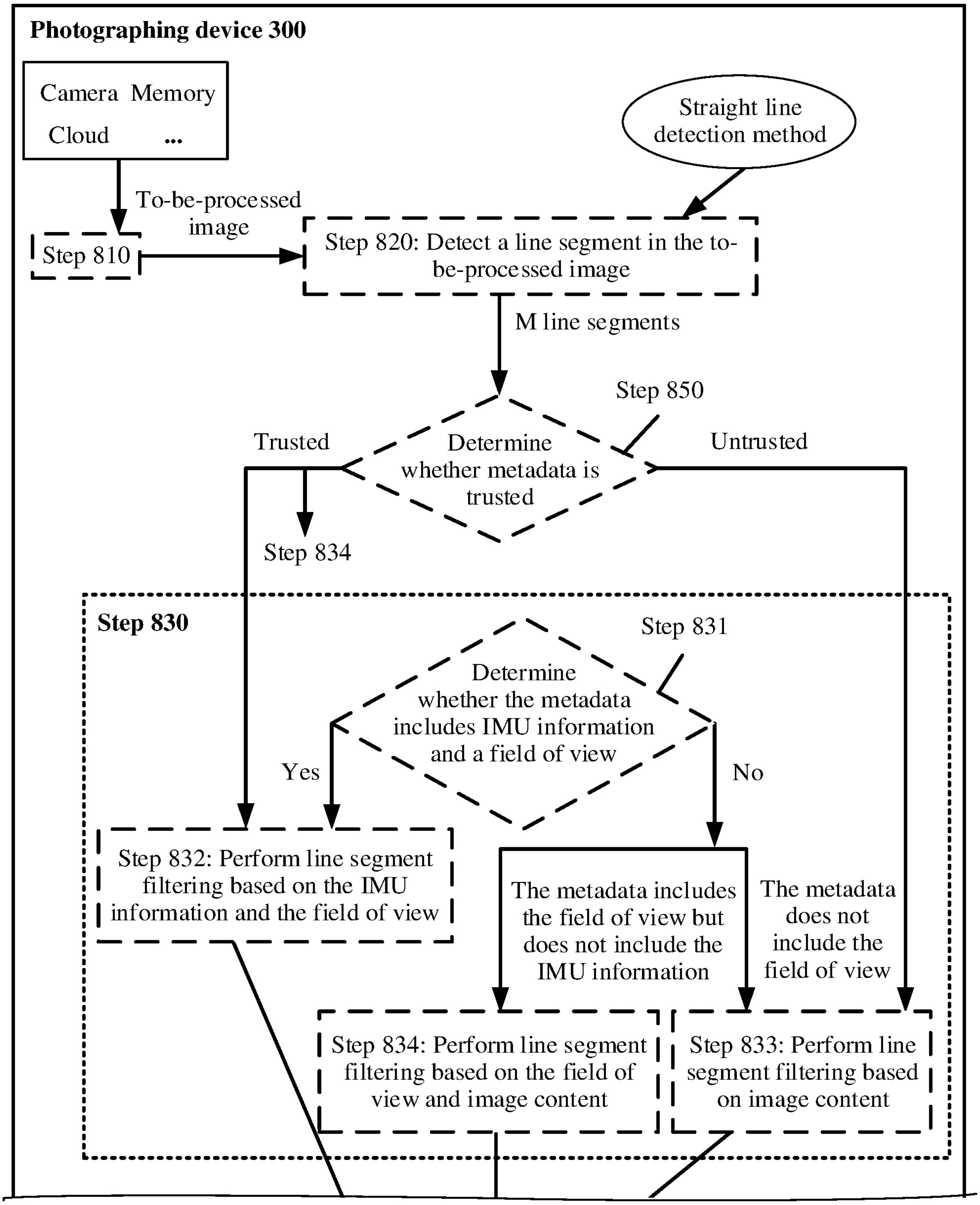


TO FIG. 14B

FIG. 14A

CONT.
FROM
FIG. 14A

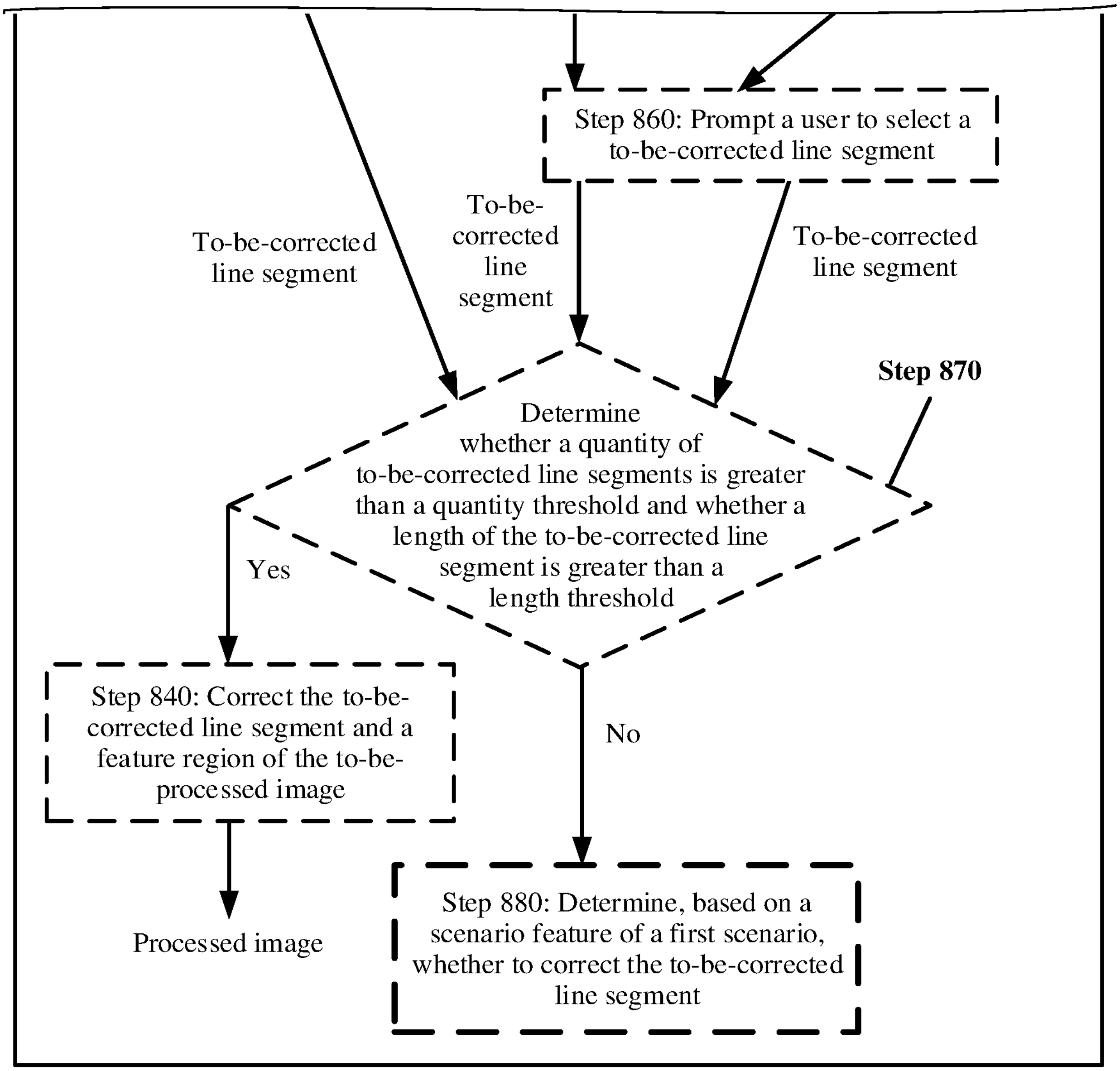


FIG. 14B

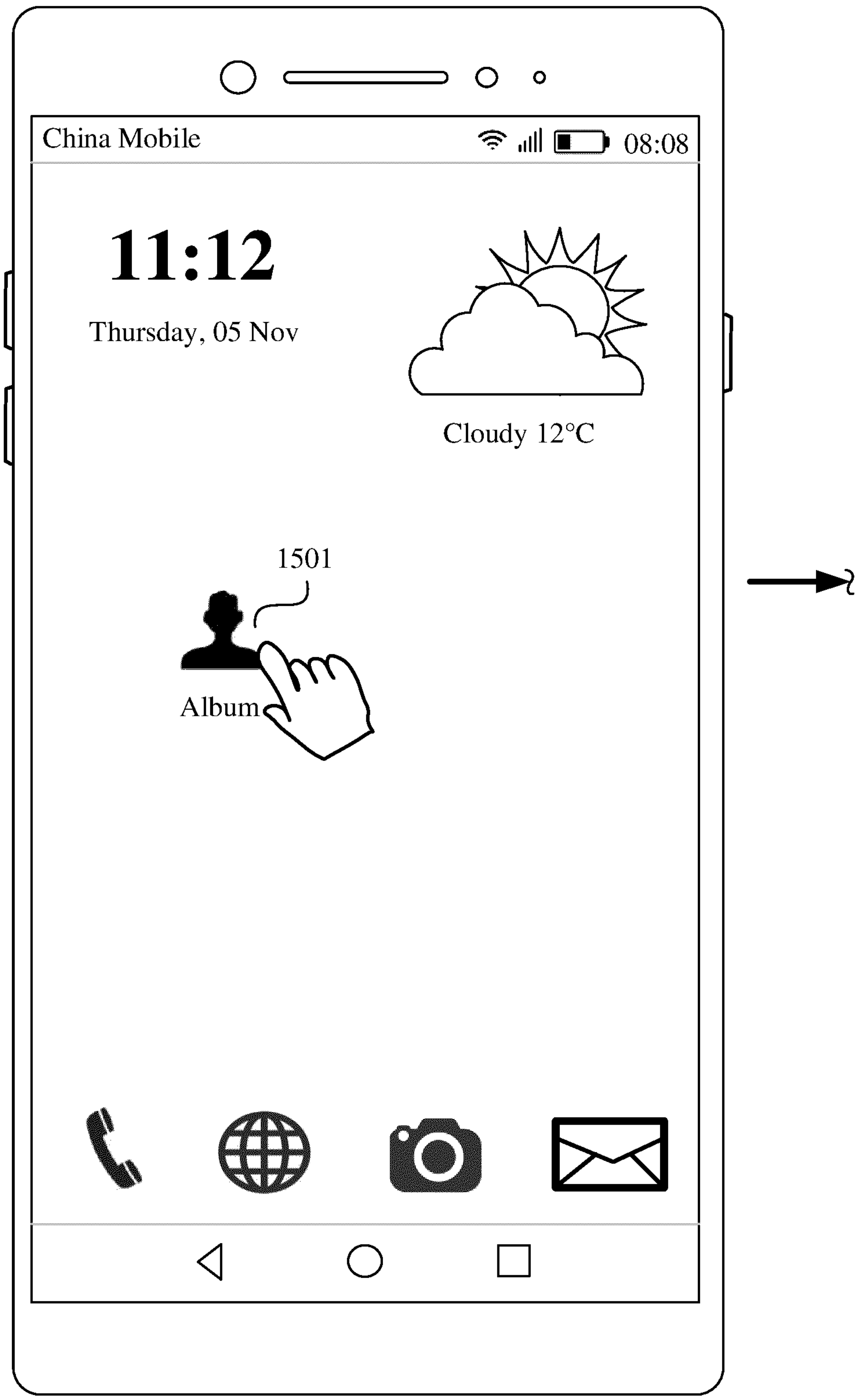


TO FIG. 15(b)

FIG. 15(a)

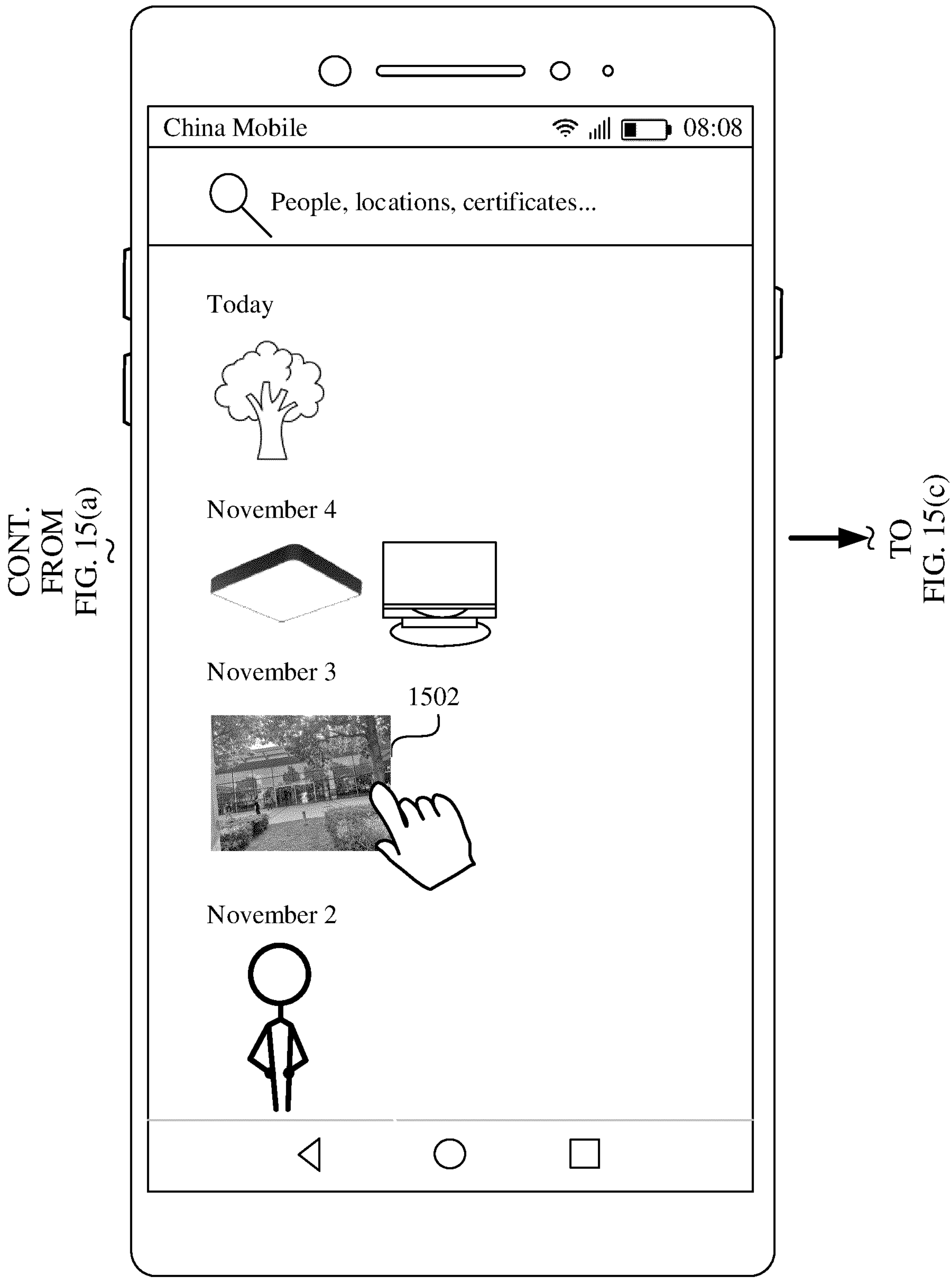
CONT. FROM FIG. 15(a)
China Mobile
08:08
People, locations, certificates...
Today
November 4
November 3
1502
November 2
TO FIG. 15(c)

FIG. 15(b)

CONT. FROM FIG. 15(b)

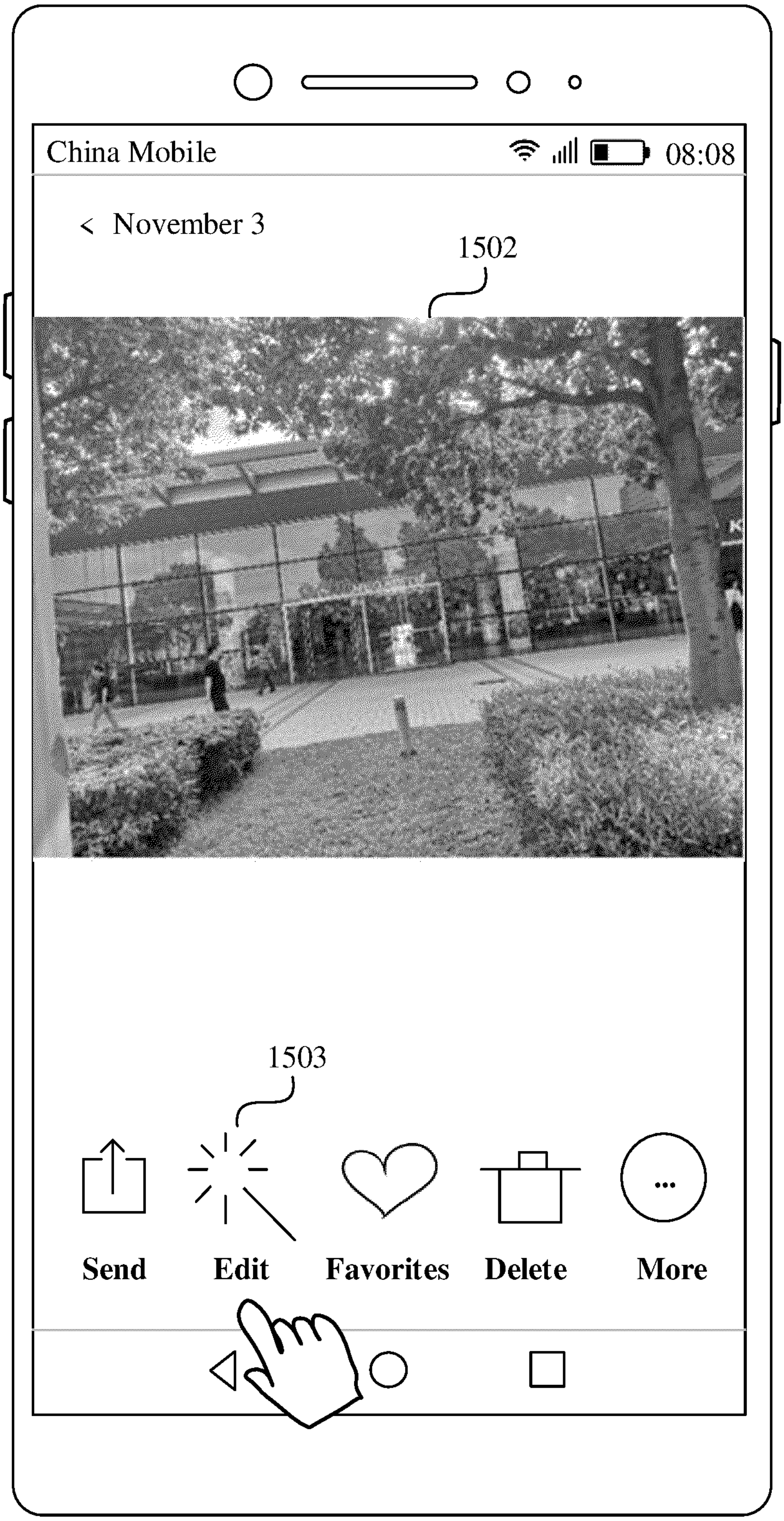


FIG. 15(c)

TO FIG. 15(d)

CONT. FROM FIG. 15(c)

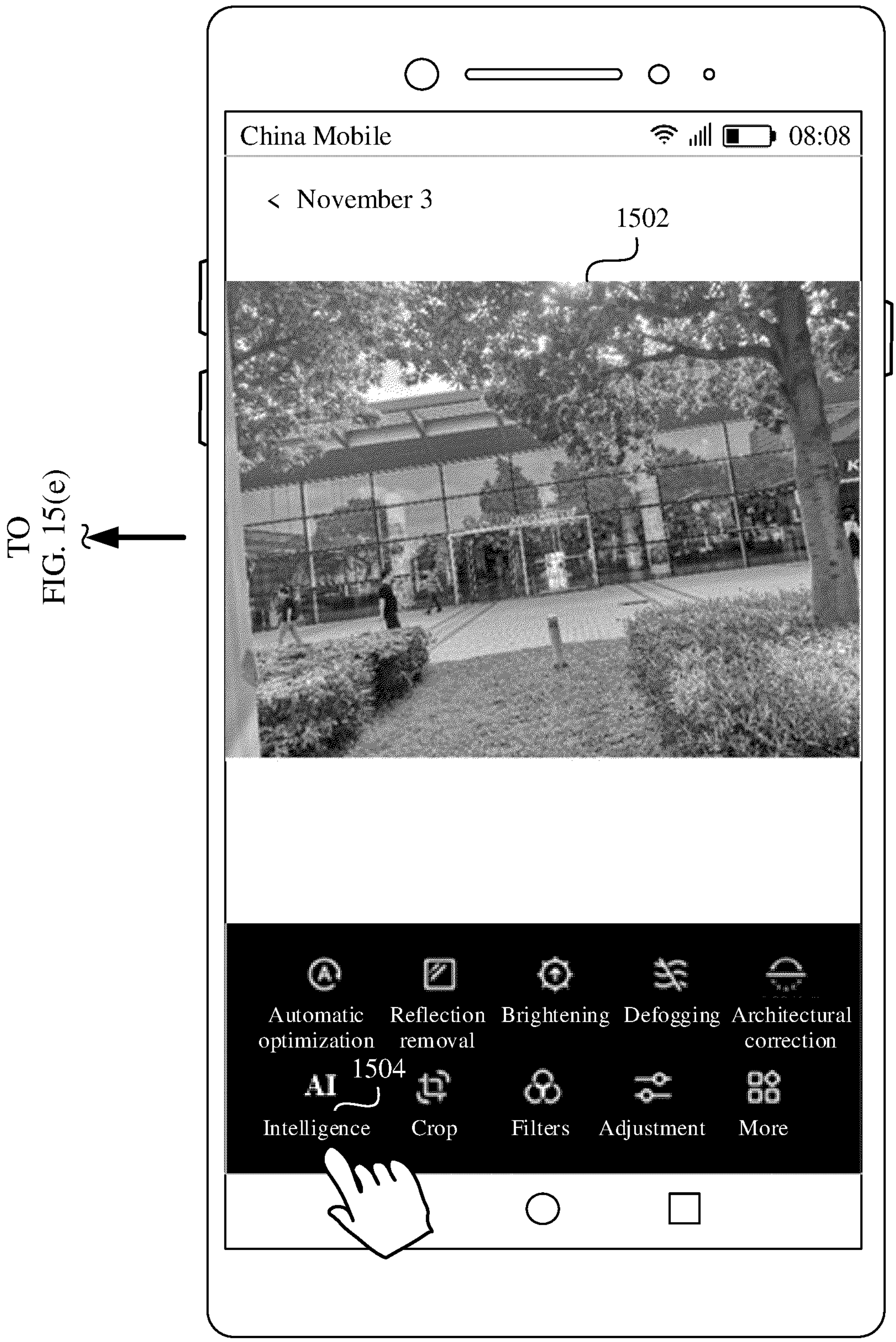


FIG. 15(d)

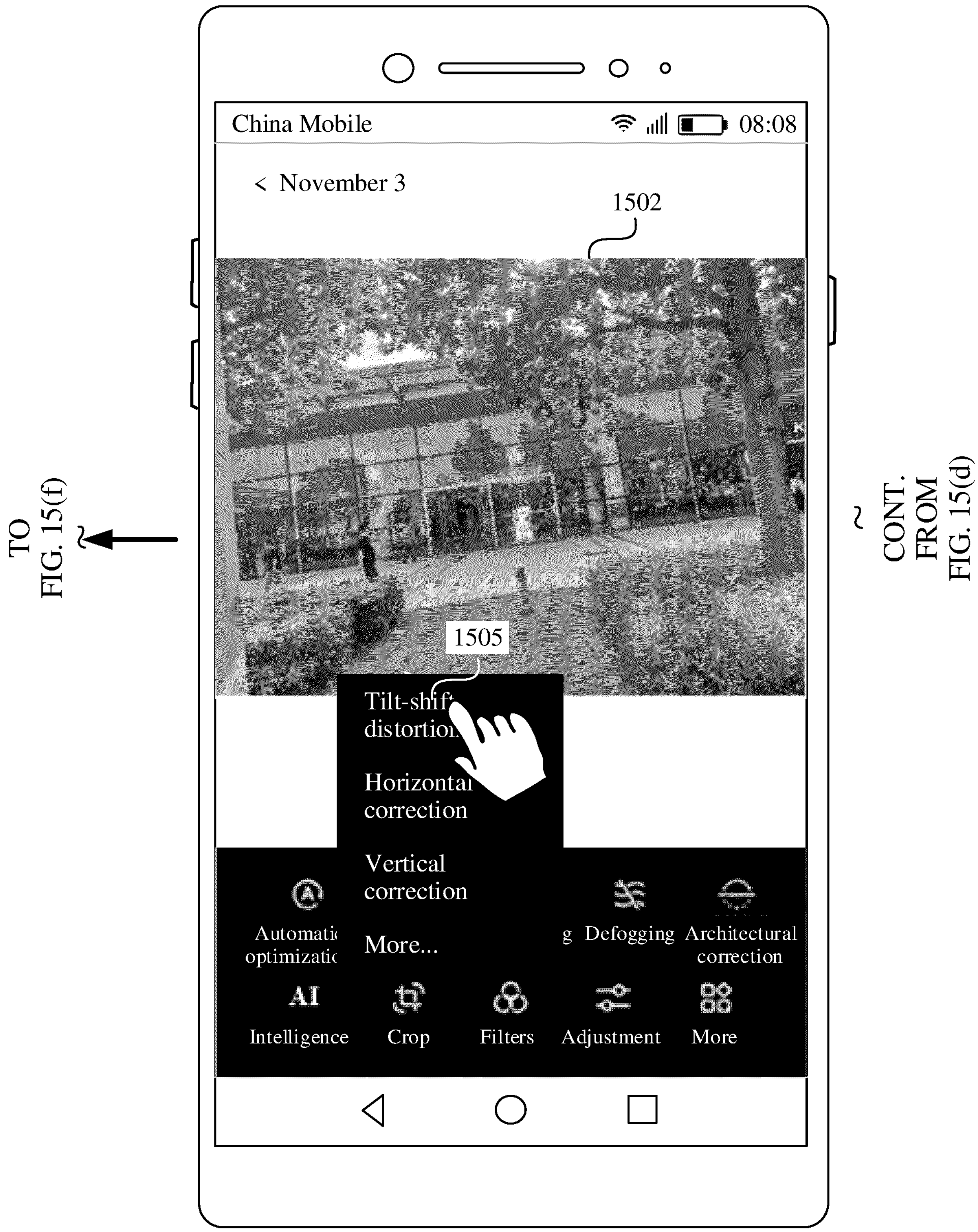
TO
FIG. 15(f)
China Mobile
08:08
< November 3
1502
1505
Tilt-shift distortion
Horizontal correction
Vertical correction
More...
Automatic optimization
Defogging
Architectural correction
AI
Intelligence
Crop
Filters
Adjustment
More
CONT. FROM
FIG. 15(d)

FIG. 15(e)

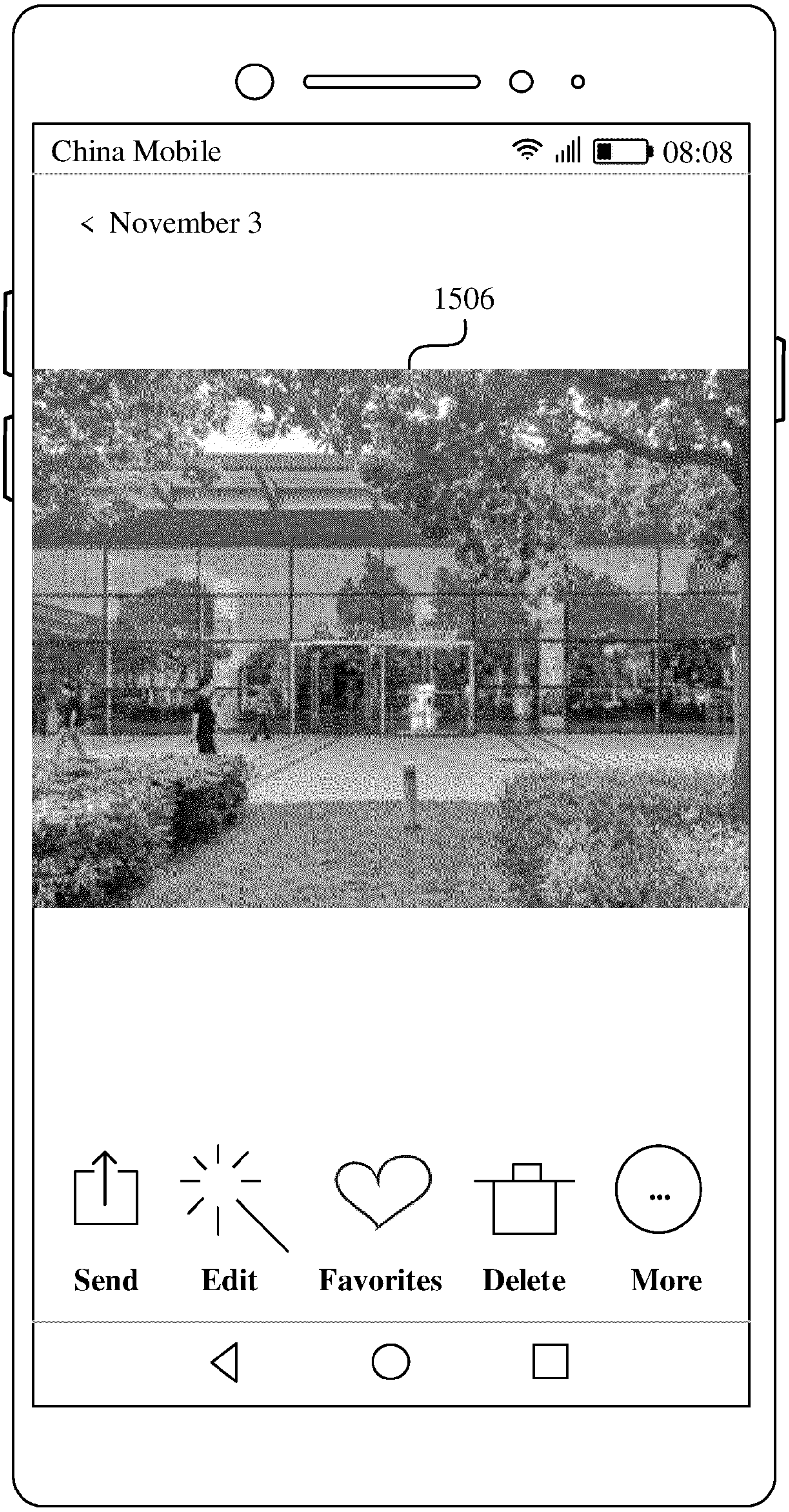


CONT. FROM FIG. 15(e)

FIG. 15(f)

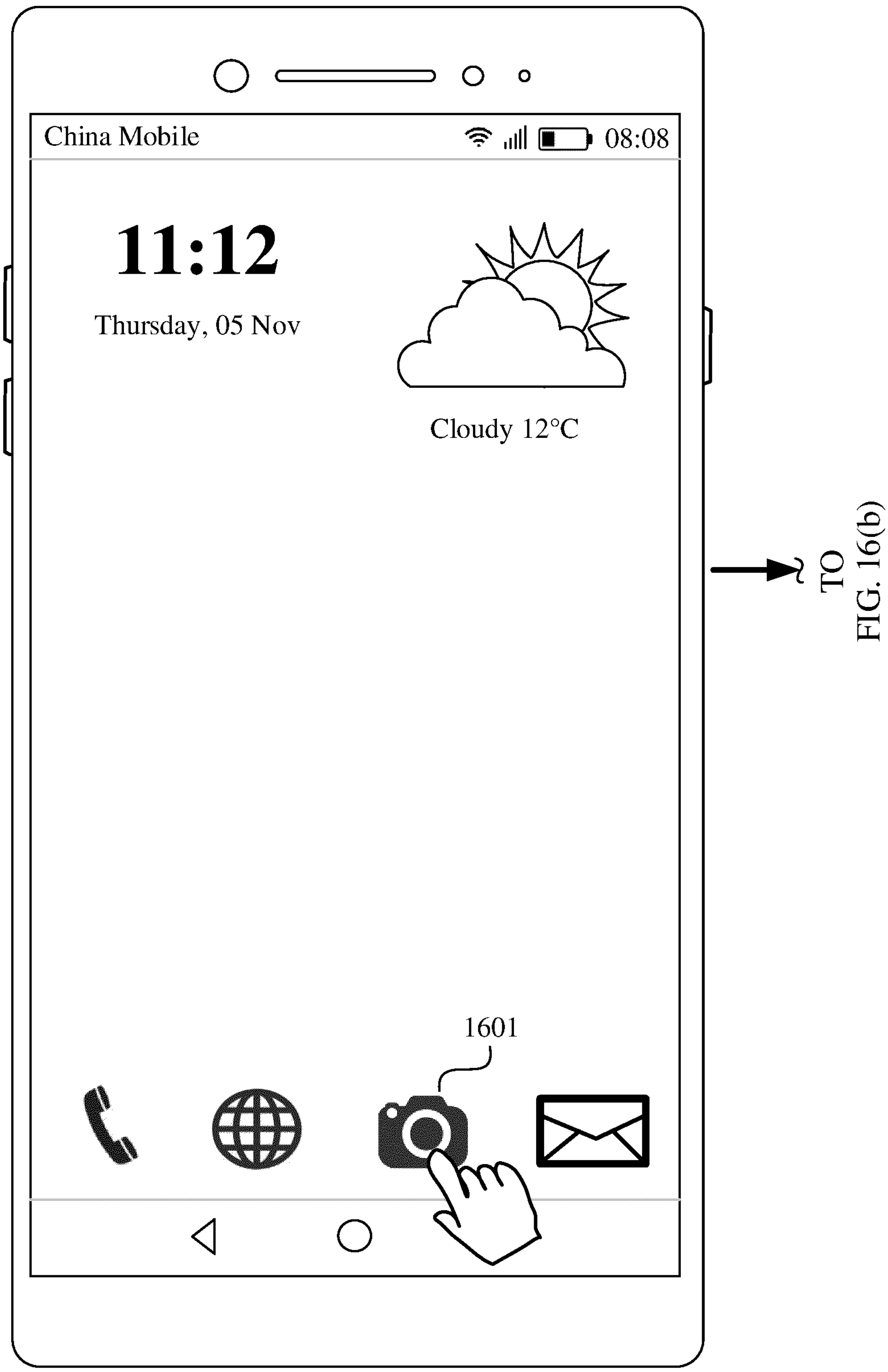
China Mobile
08:08
11:12
Thursday, 05 Nov
Cloudy 12°C
1601
TO
FIG. 16(b)

FIG. 16(a)

CONT. FROM FIG. 16(a)

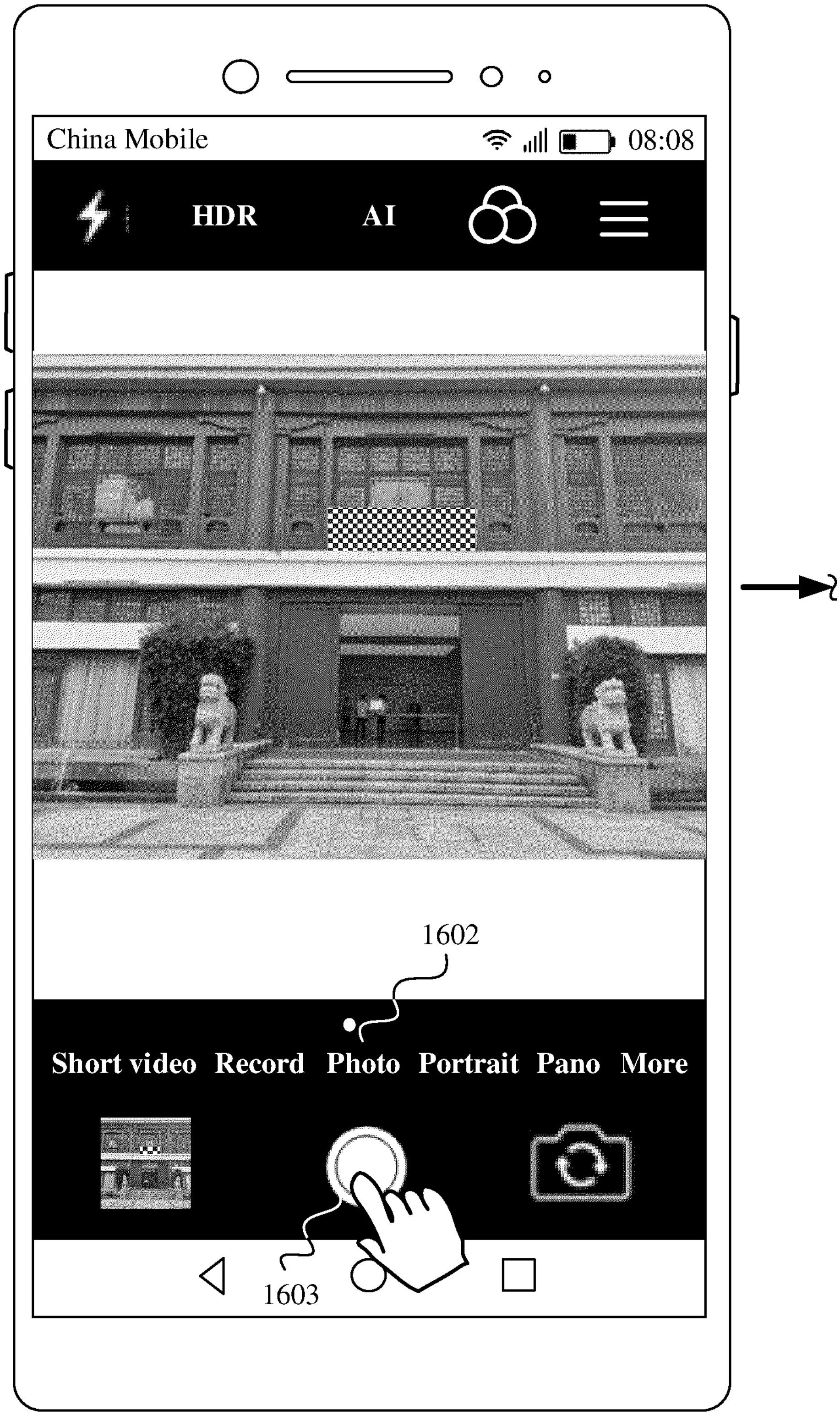


TO FIG. 16(c)

FIG. 16(b)

CONT. FROM FIG. 16(b)

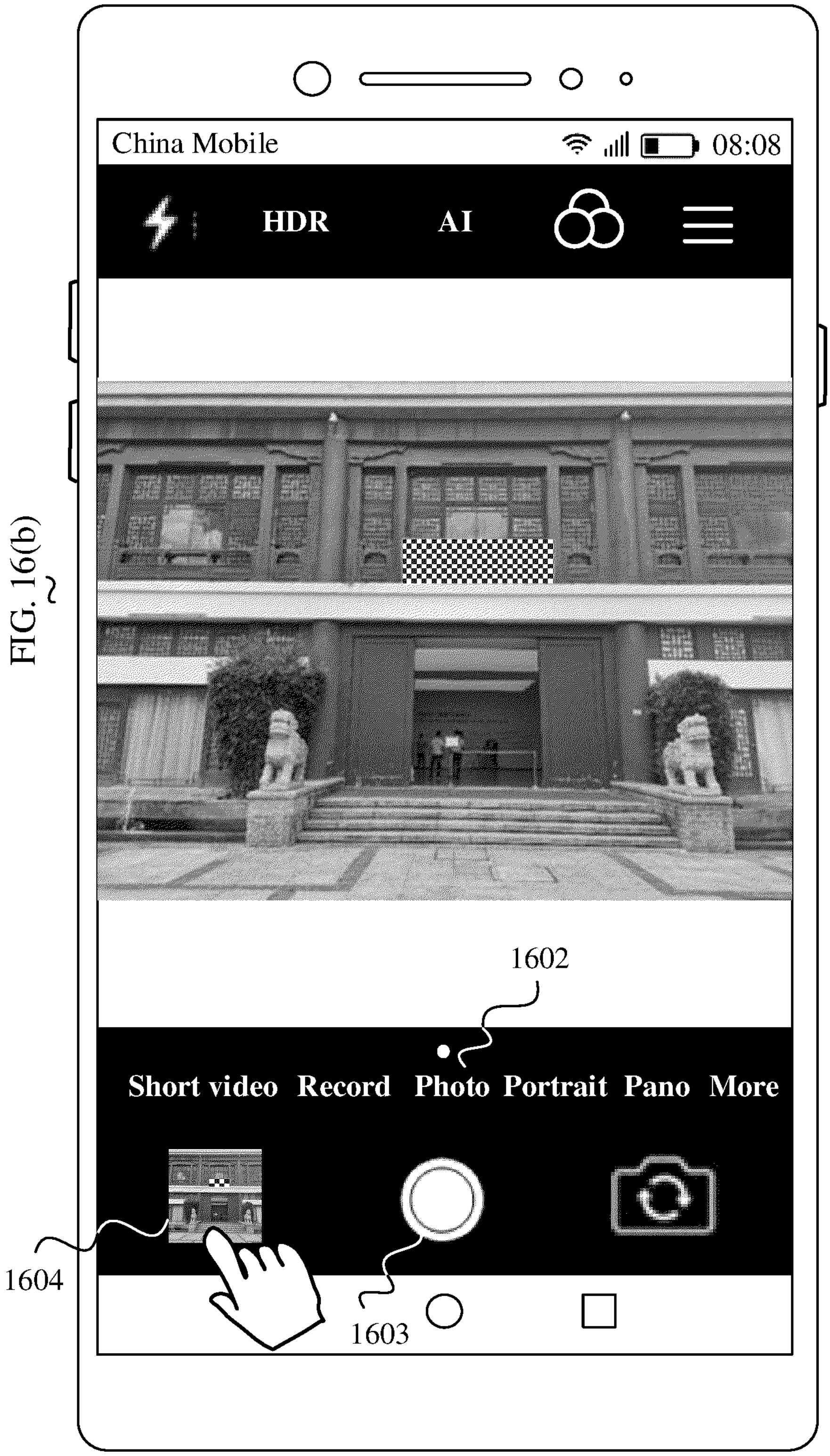


FIG. 16(c)

TO FIG. 16(d)

CONT. FROM FIG. 16(c)

TO FIG. 16(e)

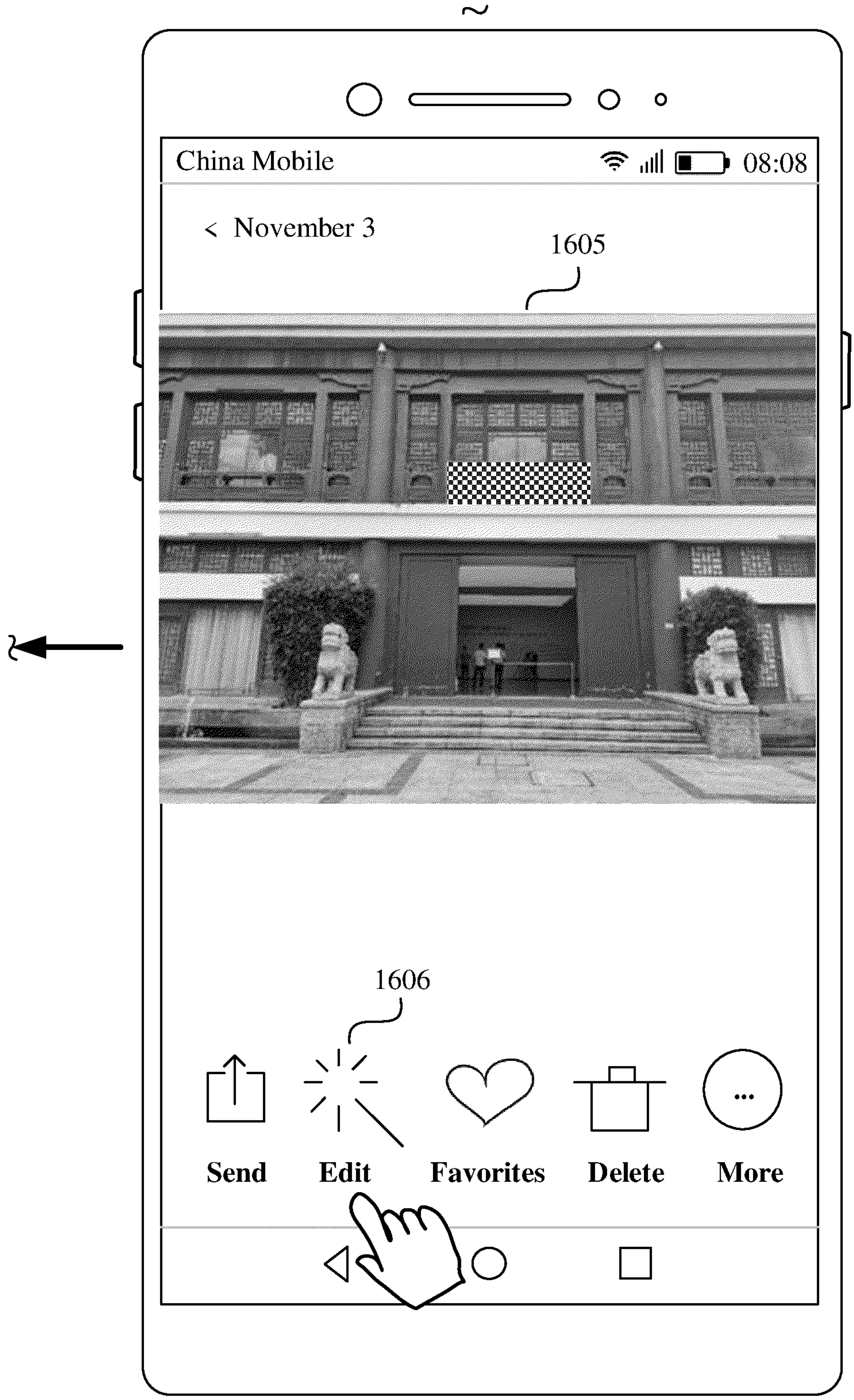


FIG. 16(d)

TO FIG. 16(f)

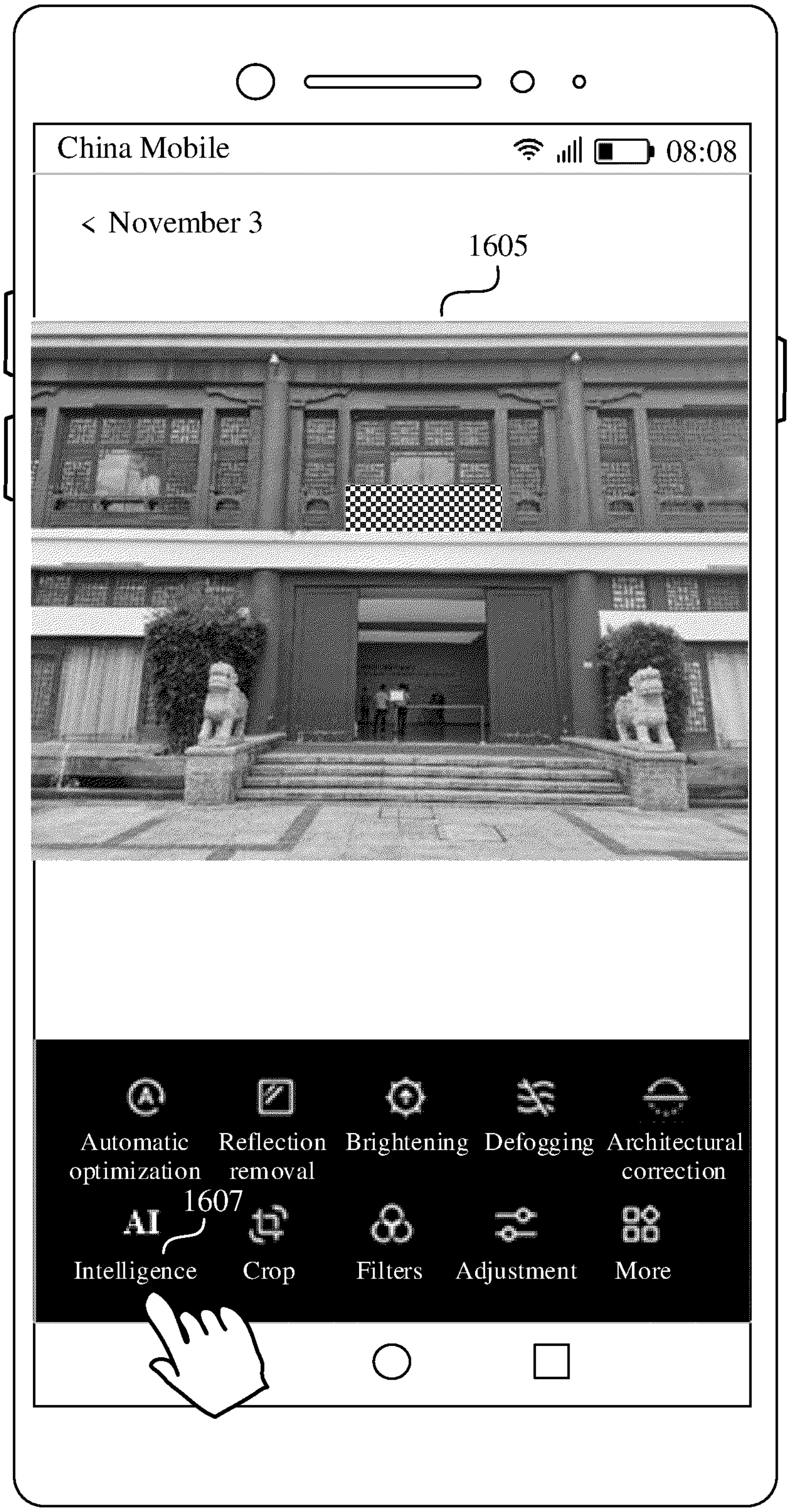


CONT. FROM FIG. 16(d)

FIG. 16(e)

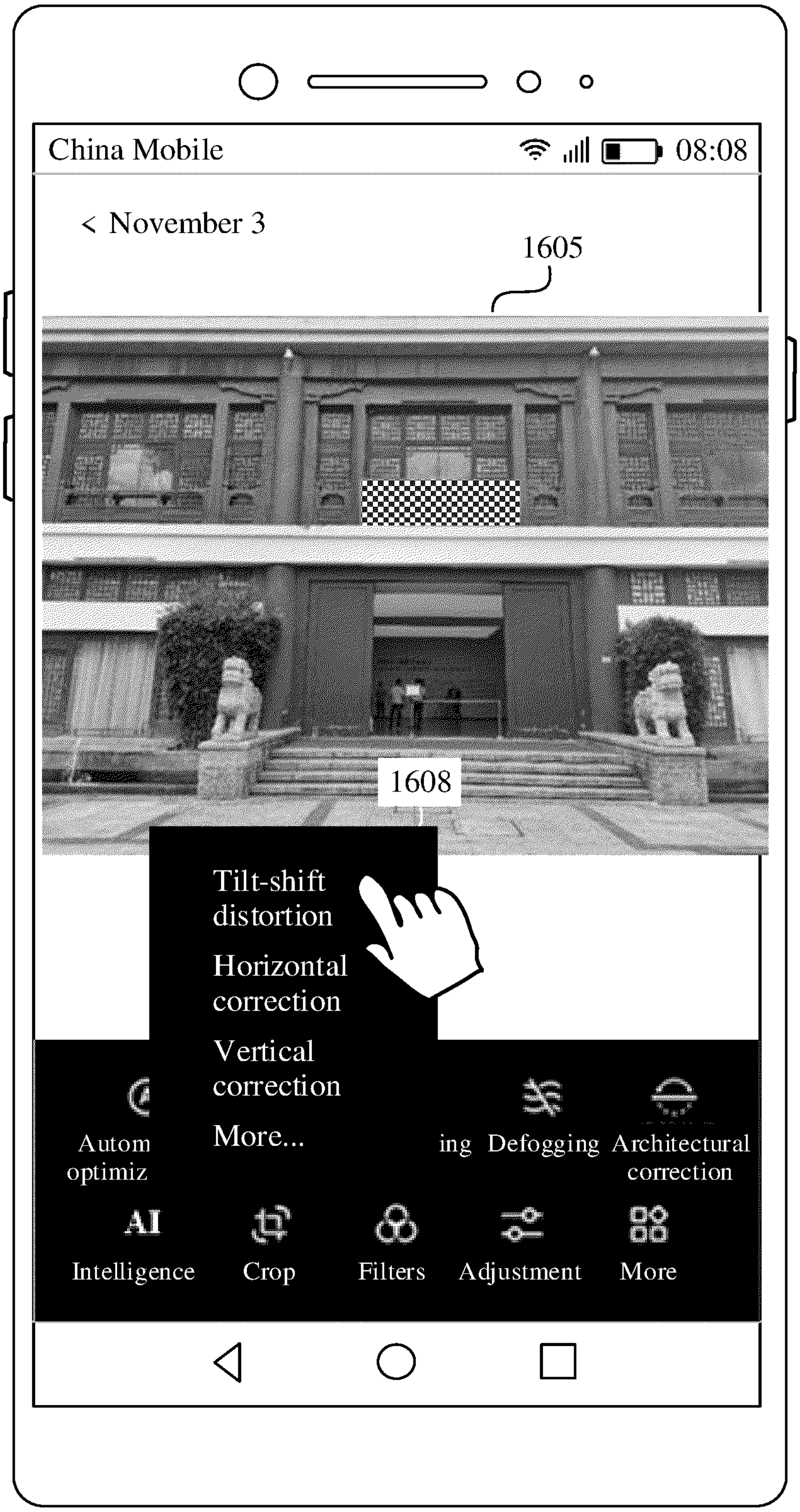


CONT. FROM FIG. 16(e)

FIG. 16(f)

TO FIG. 16(g)

CONT. FROM FIG. 16(f)

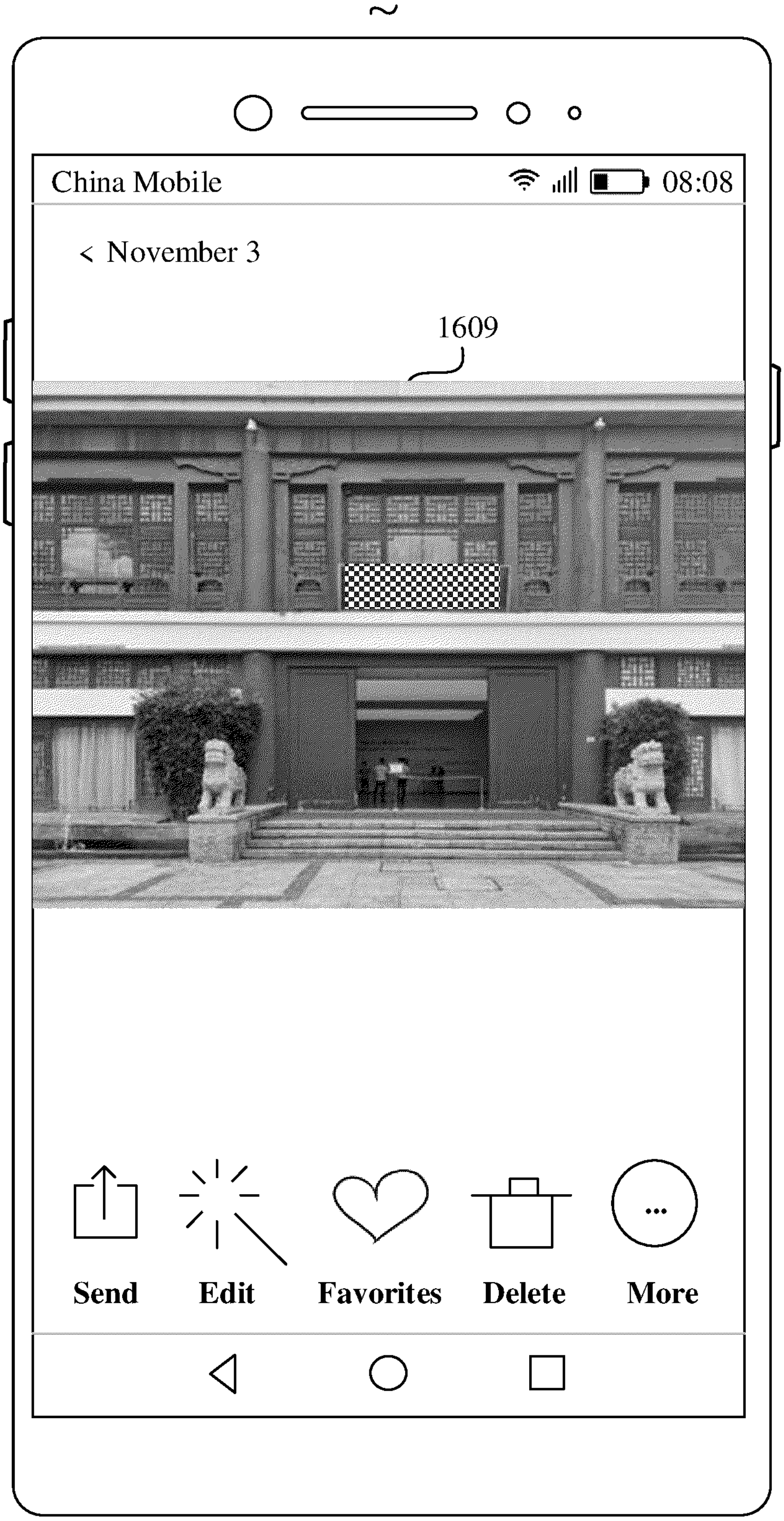


FIG. 16(g)

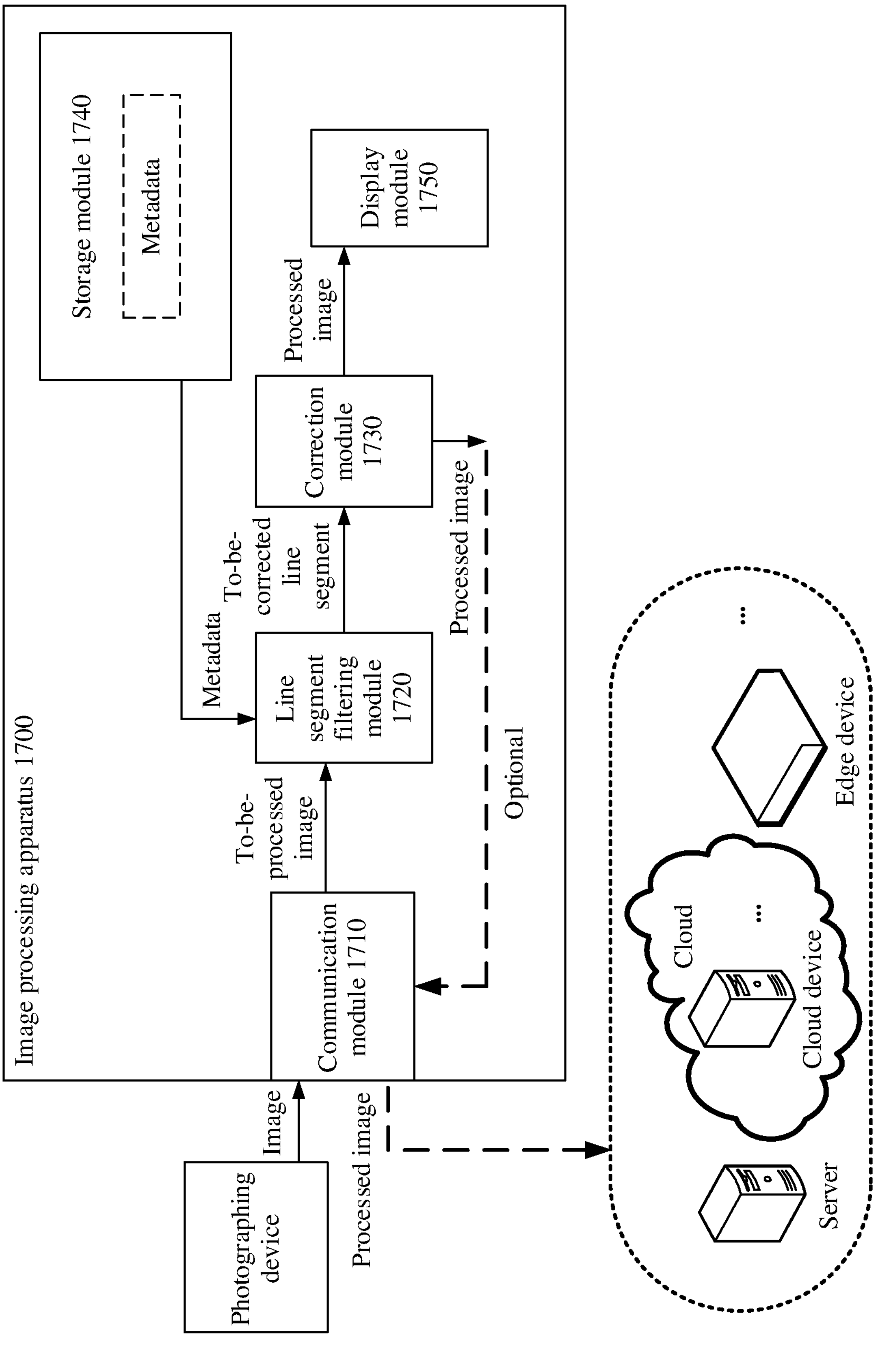
Image processing apparatus 1700
Storage module 1740
Metadata
Display module 1750
Processed image
Correction module 1730
To-be-corrected line segment
Metadata
Line segment filtering module 1720
To-be-processed image
Processed image
Optional
Communication module 1710
Image
Processed image
Photographing device
Cloud
Cloud device
Server
Edge device
...
...

FIG. 17

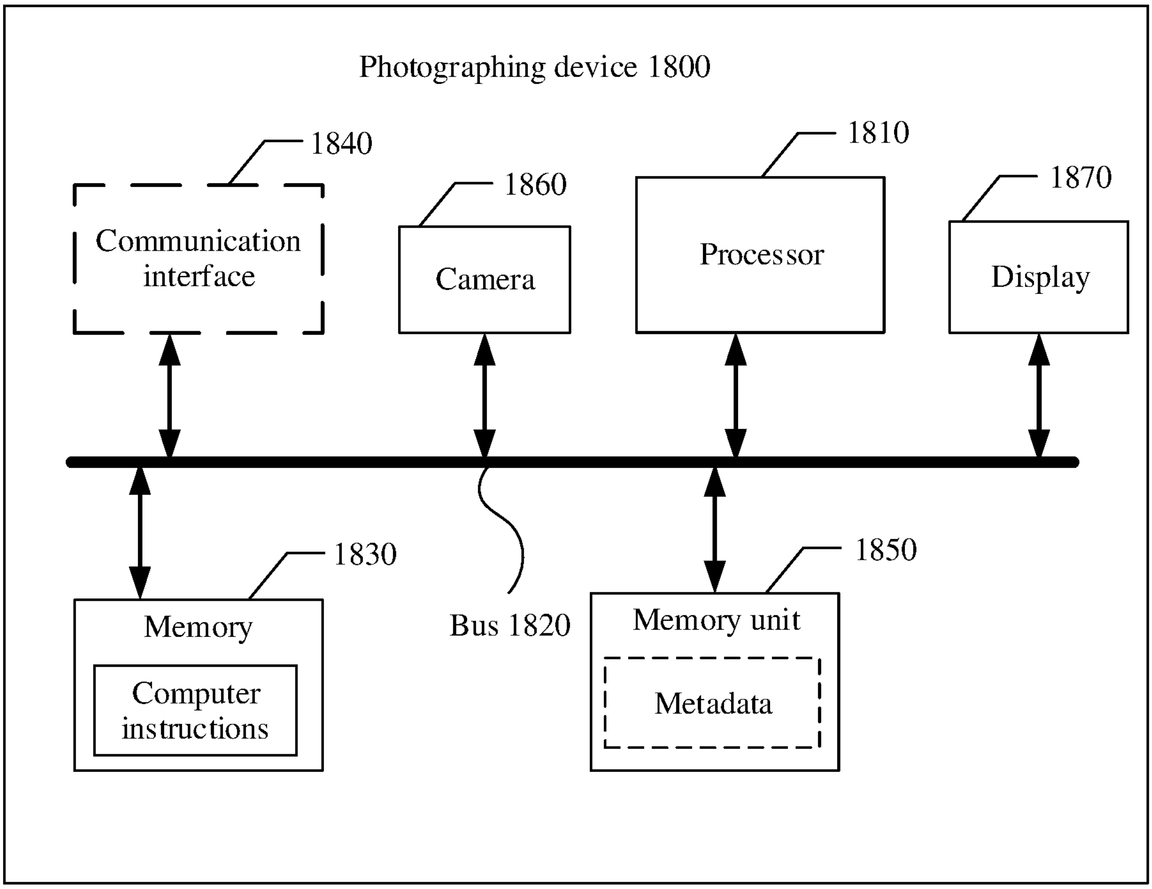
Photographing device 1800
1840
Communication interface
1860
Camera
1810
Processor
1870
Display
1830
Memory
Computer instructions
Bus 1820
1850
Memory unit
Metadata

FIG. 18

**INTERNATIONAL SEARCH REPORT**

International application No.
**PCT/CN2023/079116**

**A. CLASSIFICATION OF SUBJECT MATTER**

G06T 5/00(2006.01)i

According to International Patent Classification (IPC) or to both national classification and IPC

**B. FIELDS SEARCHED**

Minimum documentation searched (classification system followed by classification symbols)

IPC：G06T

Documentation searched other than minimum documentation to the extent that such documents are included in the fields searched

Electronic data base consulted during the international search (name of data base and, where practicable, search terms used)

VEN, CNTXT, USTXT, CNKI, IEEE: 图像, 矫正, 场景, 线段, 垂直, 水平, 视场, 背景, 人像, 边缘, IMU, imge, adjust, scene, line, vertical, level, field, background, portrait, edge

**C. DOCUMENTS CONSIDERED TO BE RELEVANT**

| Category* | Citation of document, with indication, where appropriate, of the relevant passages | Relevant to claim No. |
|---|---|---|
| A | CN 110460769 A (ZHEJIANG DAHUA TECHNOLOGY CO., LTD.) 15 November 2019 (2019-11-15)<br>claims 1-10 | 1-28 |
| A | CN 110084236 A (BEIJING LENZTECH CO., LTD.) 02 August 2019 (2019-08-02)<br>entire document | 1-28 |
| A | CN 113850709 A (HUAWEI TECHNOLOGIES CO., LTD.) 28 December 2021 (2021-12-28)<br>entire document | 1-28 |
| A | CN 113850726 A (HUAWEI TECHNOLOGIES CO., LTD.) 28 December 2021 (2021-12-28)<br>entire document | 1-28 |
| A | US 2015103172 A1 (FUJITSU LIMITED) 16 April 2015 (2015-04-16)<br>entire document | 1-28 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 May 2023** | **19 May 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**
**Information on patent family members**

International application No.
**PCT/CN2023/079116**

| Patent document cited in search report | Publication date (day/month/year) | Patent family member(s) | Publication date (day/month/year) |
|---|---|---|---|
| CN 110460769 A | 15 November 2019 | None | |
| CN 110084236 A | 02 August 2019 | None | |
| CN 113850709 A | 28 December 2021 | None | |
| CN 113850726 A | 28 December 2021 | WO 2022001806 A1 | 06 January 2022 |
| | | IN 202227074650 A | 03 February 2023 |
| US 2015103172 A1 | 16 April 2015 | JP 2015074436 A | 20 April 2015 |
| | | EP 2860691 A2 | 15 April 2015 |
| | | KR 20150042698 A | 21 April 2015 |

Form PCT/ISA/210 (patent family annex) (July 2022)

## REFERENCES CITED IN THE DESCRIPTION

*This list of references cited by the applicant is for the reader’s convenience only. It does not form part of the European patent document. Even though great care has been taken in compiling the references, errors or omissions cannot be excluded and the EPO disclaims all liability in this regard.*

### Patent documents cited in the description


- CN 202210204484